(19) Europäisches Patentamt
European Patent Office
Office européen des brevets

(11) Veröffentlichungsnummer: **0 035 470**
**B1**

(12) # EUROPÄISCHE PATENTSCHRIFT

(45) Veröffentlichungstag der Patentschrift: **18.05.83**

(51) Int. Cl.³: **C 11 D 3/395,** D 06 L 3/04, C 09 B 47/04

(21) Anmeldenummer: **81810056.2**

(22) Anmeldetag: **23.02.81**

(54) **Textilbehandlungsmittel.**

(30) Priorität: **29.02.80 CH 1624/80**

(43) Veröffentlichungstag der Anmeldung: **09.09.81 Patentblatt 81/36**

(45) Bekanntmachung des Hinweises auf die Patenterteilung: **18.05.83 Patentblatt 83/20**

(84) Benannte Vertragsstaaten: **AT BE CH DE FR GB IT LI**

(56) Entgegenhaltungen:
**EP-A-0 003 149**
**EP-A-0 003 371**
**FR-A-2 329 746**
**FR-A-2 384 882**
**GB-A-1 372 035**
**GB-A-1 408 144**
**JP-A-79 145 712**

**Chemical Abstracts Band 93, Nr. 24, 15. Dezember 1980 Columbus, Ohio, USA PROCTER & GAMBLE CO. "Bleach-stain removers for fabrics" Seite 84, linke Spalte, Abstract Nr. 222204d**

**Cemical Abstracts Band 92, Nr. 26, 30. Juni 1980 Columbus, Ohio, USA N.Y. SAKKAB "Bleaching composition and its use in removing spots from textiles" Seite 93, linke Spalte, abstract Nr. 217075n**

(73) Patentinhaber: **CIBA-GEIGY AG, Patentabteilung Postfach, CH-4002 Basel (CH)**

(72) Erfinder: **Eckhardt, Claude, Dr., 16, Rue des Jonquilles, F-68400 Riedisheim (FR)**
Erfinder: **Hölzle, Gerd, Dr., Spitzacker 9, CH-4410 Liestal (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Textilbehandlungsmittel

Die vorliegende Erfindung betrifft Behandlungsmittel, insbesondere Wasch- oder Nachbehandlungsmittel für Textilien mit einem Gehalt an einem Photobleichmittel auf Phthalocyaninbasis, ein Verfahren zum Waschen und Bleichen von Textilien mit Hilfe dieser Mittel sowie neue kationische Zink- und Aluminiumphthalocyanine.

Verfahren zum Bleichen von bzw. Fleckentfernen aus Textilien mit Hilfe von wasserlöslichen Phthalocyaninverbindungen, insbesondere Zink- und metallfreien Phthalocyaninen sowie Mittel zur Durchführung dieses Verfahrens sind bekannt. Siehe dazu U.S. Patentschriften US-A-3,927,967, 4,094,806 und 4,033,718 und Britische Patentschriften GB-A-1 372 035 und 1 408 144. Ähnliche Verfahren und Mittel mit einem Gehalt an wasserlöslichen Aluminiumphthalocyaninderivaten sind aus der U.S.-A-4,166,718 bekannt. Ferner betreffen die europäischen Auslegeschriften EP-A-3 149 und 3 861 Wasch- und Bleichmittelkompositionen, die als Photoaktivatoren wasserlösliche Porphinverbindungen, darunter auch Phthalocyaninverbindungen enthalten, wobei die Mittel der zweitgenannten Offenlegungsschrift als wesentlichen Bestandteil ein Peroxid-Bleichmittel enthalten. Die europäische Auslegeschrift EP-A-3 371 schliesslich lehrt Bleichmittel, die einen wasserlöslichen Photoaktivator der Porphinreihe (inklusive Phthalocyaninreihe), wobei diese Verbindungen anionische, nichtionische oder kationische wasserlöslichmachende Gruppen enthalten könne, sowie eine kationische Substanz, z.b. ein kationisches Tensid, einen kationischen Weichmacher oder ein kationisches Germicid enthalten.

Es wurde nun gefunden, dass es besonders vorteilhaft ist, in Waschmitteln oder Nachbehandlungsmitteln (z.B. Spülmitteln), die kationische Textilbehandlungsmittel, wie beispielsweise kationische Tenside, Weichmacher, Antistatika, Antimikrobika usw., und als weitere Komponente ein Photobleichmittel enthalten, als letzteres ein mit kationischen Gruppen substituiertes wasserlösliches Aluminium- oder Zinkphthalocyanin einzusetzen. Man erhält mit derartigen Mitteln besonders gute Bleicheffekte, wenn man Textilien in einem diese Mittel enthaltenden wässrigen Bad behandelt, wobei die Textilien im Bleichbad selbst oder anschliessend in feuchtem Zustand mit Licht im sichtbaren oder/und infraroten Bereich bestrahlt werden. Ausserdem haben derartige erfindungsgemässe Mittel den Vorteil, dass die Wirkung der einen wesentlichen Komponente nicht durch die andere beeinträchtigt wird, dass also die Bleichwirkung des Fotobleichmittels nicht durch die kationischen Textilbehandlungsmittel und umgekehrt beispielsweise die Wirkung des kationischen Tensids oder Weichmachers nicht durch den Fotoaktivator beeinträchtigt wird.

Die Erfindung betrifft nun Textilbehandlungsmittel mit einem Gehalt an einem Photobleichmittel, dadurch gekennzeichnet, dass sie mit kationischen Gruppen substituierte wasserlösliche Aluminium- oder Zinkphthalocyanine als Photobleichmittel und kationische Textilbehandlungsmittel wie z.B. kationische Tenside, Weichmacher, Antistatika, optische Aufheller und/oder Antimikrobika enthalten.

Die in den erfindungsgemässen Mitteln enthaltenen wasserlöslichen Aluminium- und Zinkphthalocyanine weisen als wasserlöslichmachende Substituenten vorzugsweise quaternäre Ammoniumgruppen und ternäre Sulfoniumgruppen enthaltende Reste auf, insbesondere solche mit einem quaternären Stickstoffatom.

Neben den kationischen wasserlöslichmachenden Gruppen können die in den erfindungsgemässen Mitteln verwendbaren Zink- und Aluminiumphthalocyanine auch noch andere Substituenten enthalten, z.B. anionische wie Sulfogruppen, Carbonsäuregruppen und dgl. oder nichtionische Gruppen. Beispiele für derartige nichtionische Gruppen sind Halogenatome (inklusive F und J), Cyano, Alkyl, Akoxy, gegebenenfalls substituiertes Phenyl und andere in der Phthalocyaninchemie übliche Substituenten. Bevorzugt als derartige Substituenten sind Fluor, Chlor, Brom, Jod und Cyano, vor allem Chlor. Die genannten nichtionischen Substituenten sind im Molekül höchstens in einer solchen Zahl vorhanden, dass die erforderliche Wasserlöslichkeit nicht unterschritten wird. Sie können aber auch nur in sehr geringen Mengen vorhanden sein, beispielsweise etwa 0,1 Mol pro Mol Phthalocyaninverbindung.

Vorteilhafte, als Photoaktivatoren in erfindungsgemässen Mitteln einsetzbare Phthalocyaninderivate entsprechen der Formel

$(PC)\!-\!(^{\oplus}R)_v \quad A_w^{\ominus}$ (1) oder der Formel

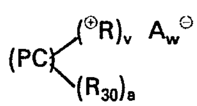
(1d),

worin PC das unsubstituierte Zink- oder Aluminiumphthalocyaninringsystem, v eine beliebige Zahl zwischen 1 und 4 und $R^{\oplus}$ eine Gruppe der Formel

(1a) $-SO_2X_1-R_1-X^{\oplus}$ , $-O-R_1-X^{\oplus}$ (1b),

(1c) $-(CH_2)_n-Y^{\oplus}$ oder $-CH_2NHCOCH_2-Y^{\oplus}$ (1e)

bedeuten,
worin n für 0 oder 1 steht, $R_1$ unverzweigtes oder verzweigtes Alkylen mit 1 bis 8 C-Atomen oder 1,3- oder 1,4-Phenylen, $X_1$ NH oder N-Alkyl, $X^{\oplus}$ eine Gruppe der Formel

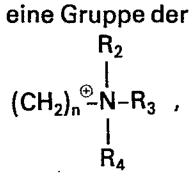 , 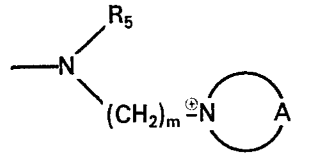 ,

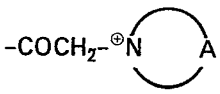 , 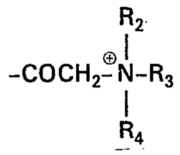 und

für den Fall, dass $R_1$ = Alkylen, auch eine Gruppe der Formel

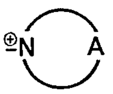 , 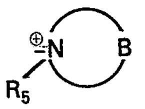 , 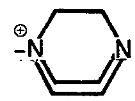 ,

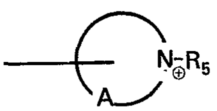 ,

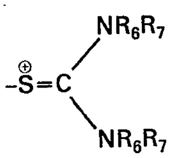 oder 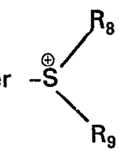 ,

$Y^{\oplus}$ eine Gruppe der Formel 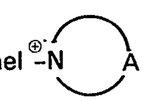 ,

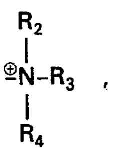 , 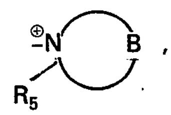 ,

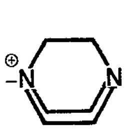 , 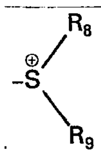 oder 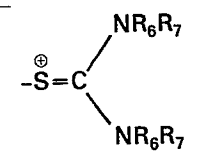 ,

wobei in obigen Formeln n für 0 oder 1 steht, $R_2$ und $R_3$ unabhängig voneinander für gegebenenfalls substituiertes Alkyl mit 1 bis 6 C-Atomen, $R_4$ für gegebenenfalls substituiertes Alkyl mit 1 bis 6 C-Atomen, Cycloalkyl mit 3 bis 7 C-Atomen oder die Gruppe $NR_6R_7$, $R_5$ für Alkyl, $R_6$ und $R_7$ unabhängig voneinander für Wasserstoff oder gegebenenfalls substituiertes Alkyl, $R_8$ und $R_9$ unabhängig voneinander für einen gegebenenfalls substituierten Alkyl- oder Aralkylrest, m für eine ganze Zahl zwischen 1 und 6, A für die Ergänzung zu einem aromatischen 5- bis 7-gliedrigen Stickstoffheterocyclus, der gegebenenfalls noch ein oder zwei weitere Stickstoffatome als Ringglieder enthalten kann und der gegebenenfalls verschiedene Substituenten tragen kann, und B für die Ergänzung zu einem gesättigten 5- bis 7-gliedrigen Stickstoffheterocyclus, der gegebenenfalls noch 1 bis 2 Stickstoff-, Sauerstoff- und/oder Schwefelatome als Ringglieder enthalten kann und der gegebenenfalls verschiedene weitere Substituenten tragen kann, stehen, $R_{30}$ einen nichtionischen Substituenten, a eine beliebige Zahl zwischen 0,1 und 4 und $A^{\ominus}$ ein anorganisches oder organisches Anion bedeuten, und w im Falle einwertiger Anionen $A^{\ominus}$ gleich v und im Falle mehrwertiger Anionen $\leqq$ v ist, wobei $A^{\ominus}_w$ die positive Ladung kompensieren muss; wobei, wenn v bzw. a $\neq$ 1, die Reste $^{\oplus}$R und/oder $R_{30}$ gleich oder verschieden sein können, und wobei das Phthalocyaninringsystem auch noch weitere wasserlöslichmachende Gruppen, z.B. anionische, wie Sulfogruppen, enthalten kann und wobei alle Substituenten an die Phenylkerne des Phthalocyaninringsystems gebunden sind.

Die Zahl der Substituenten R, die gleich oder verschieden sein können, liegt zwischen 1 und 4, wobei sie, wie bei Phthalocyaninen üblich, nicht eine ganze Zahl sein muss (Substitutionsgrad). Sind noch andere, nichtkationische Substituenten anwesend, so liegt die Summe aus letzteren und den kationischen Substituenten zwischen 1 und 8. Wieviele Substituenten im Molekül mindestens vorhanden sein müssen, richtet sich nach der Wasserlöslichkeit des resultierenden Moleküls. Eine ausreichende Wasserlöslichkeit ist dann gegeben, wenn genügend Phthalocyaninverbindung in Lösung geht, um auf der Faser eine photosensibilisierte Oxidation zu bewirken. Es kann bereits eine Löslichkeit von 0,01 mg/l ausreichend sein, im allgemeinen ist eine solche von 0,001 bis 1 g/l zweckmässig.

In den unter Formel (1) angegebenen Substituentendefinitionen bedeutet Halogen, Chlor, Brom, Fluor oder Jod, besonders Chlor oder Brom, bevorzugt Chlor.

Bevorzugte nichtionische Substituenten $R_{30}$ sind Fluor, Chlor, Brom, Jod oder Cyano, insbesondere Chlor. Die die Menge an derartigen Substituenten angebende Zahl a kann jeden beliebigen Wert zwischen 0,1 und 4, insbesondere zwischen 0,5 und 4 haben.

Gegebenenfalls substituierte Alkylgruppen können als Substituenten beispielsweise Halogen, Hydroxyl, Cyano, Phenyl, Carboxy, Carbalkoxy oder Alkoxy enthalten. Geeignete substituierte Alkylgruppen sind Benzyl, Phenäthyl, Hydroxyalkyl und Cyanoalkyl. Cycloalkylgruppen haben vorzugsweise 5 oder 6 C-Atome, bevorzugt ist Cyclohexyl.

Als Aralkylreste kommen insbesondere Alkylreste in Betracht, die mit Phenyl, Naphthyl oder Pyridyl substituiert sind. Bevorzugt ist der Benzylrest.

Als Gruppen 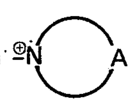 kommen vor allem in Betracht:

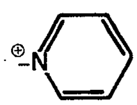 , 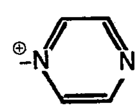 , 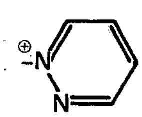 ,

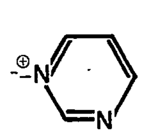 , 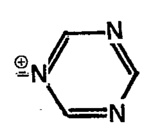 , 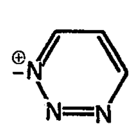

usw.

Bevorzugt ist die Gruppe 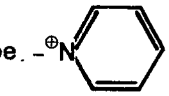

Als heterocyclische Ringe in der

Gruppe 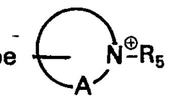

kommen ebenfalls die eben angeführten in Betracht, wobei lediglich die Bindung an den Restsubstituenten über ein Kohlenstoffatom erfolgt.

In allen Substituenten können Phenyl- Naphthyl- und aromatische Heteroringe durch ein oder zwei weitere Reste substituiert sein, beispielsweise durch Alkyl, Alkoxy, Halogen, Carboxy, Carbalkoxy, Hydroxy, Amino, Cyano, Sulfo, Sulfonamido usw... Bevorzugt ist ein Substituent aus der Gruppe Alkyl, Alkoxy, Halogen, Carboxy, Carbalkoxy oder Hydroxy.

Als Gruppe 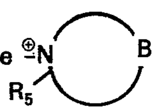 kommen insbesondere in Frage:

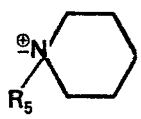 , 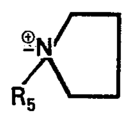 , 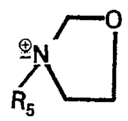 ,

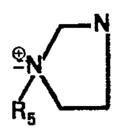 , 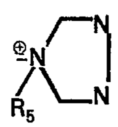 , 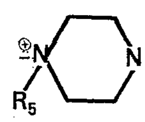 ,

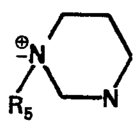 , 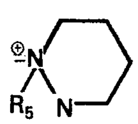 , 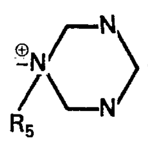 ,

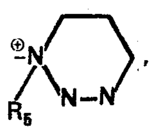 , 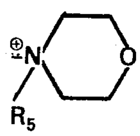 , 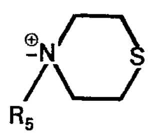 ,

usw.

Alle vorstehend genannten gesättigten Stickstoffheterocyclen können noch durch Alkylgruppen substituiert sein, entweder an einem Kohlenstoffatom oder an einem weiteren im Ring befindlichen Stickstoffatom. Bevorzugt ist dabei als Alkylgruppe die Methylgruppe.

Bevorzugt sind dabei Gruppen der Formel

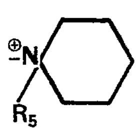 , 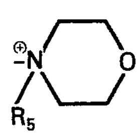 ,

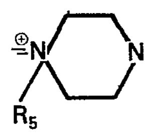 und 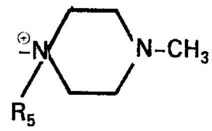 .

$A^{\ominus}_w$ bedeutet als Gegenion zur positiven Ladung des Restmoleküls ein beliebiges Anion. In der Regel wird es durch den Herstellungsprozess (Quaternierung) eingeführt. Es bedeutet dann vorzugsweise ein Halogenion (inklusive $J^{\ominus}$), ein Alkylsulfat- oder ein Arylsulfonation. Von den Arylsulfonationen seien das Benzolsulfonat-, Naphthalinsulfonat-, p-Tolylsulfonat- und das p-Chlorphenylsulfonation erwähnt. Als Anion kann aber auch jedes andere Anion fungieren, da die Anionen in bekannter Weise leicht ausgetauscht werden können; $A^{\ominus}$ kann also auch ein Sulfat-, Methylsulfat-, Sulfit-, Aminosulfonat-, Bicarbonat-, Carbonat-, Perchlorat-, Phosphat-, Nitrat-, Acetat-, Propionat-, Oxalat-, Maleinat-, Citrat-, Lactat-, Succinat-, Chloracetat-, Tartrat-, Malat-, Methansulfonat- oer Benzoation oder ein anderes Anion einer organischen Carbonsäure darstellen. Der Index w ist bei einwertigen Anionen gleich v. Für mehrwertige Anionen nimmt w einen Wert kleiner oder gleich v an, wobei er je nach Bedingungen so beschaffen sein muss, dass er die positive Ladung des Restmoleküls gerade kompensiert.

In den vorstehend definierten Substituenten haben Alkyl- und Alkoxygruppen, auch in zusammengesetzten Gruppen (z.B. Carbalkoxy), vorzugsweise 1 bis 6, insbesondere 1 bis 4 C-Atome. Die Alkylengruppe $X_1$ weist vorzugsweise 2 bis 6 C-Atome auf; m bedeutet vorzugsweise eine ganze Zahl zwischen 2 und 4.

Photoaktivatoren der Formel (1), die in erfindungsgemässen Mitteln bevorzugt eingesetzt werden, sind solche der Formel

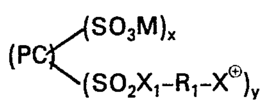 $A^{\ominus}_w$, (2)

oder der Formel

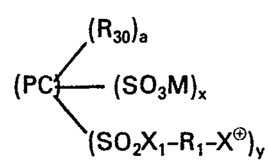 (2a) ,

worin PC, $X_1$, $X^{\oplus}$, $R_1$ und $A^{\ominus}$ wie in Formel 1 und $R_{30}$ und a wie in Formel (1d) definiert sind, M für Wasserstoff, ein Alkalimetall-, Ammonium- oder Aminsalzion steht und die Summe der Zahlen x und y zwischen 1 und 4 liegt, und $A^{\ominus}_w$, die positive Ladung des Restmoleküls genau kompensiert, insbesondere solche der Formel

$(PC)\!-\!\!-\!(SO_2NHR_1'-X'^{\oplus} \quad A'^{\ominus})_v$ (3)

oder der Formel

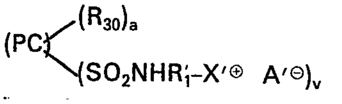 (3a) ,

worin PC wie in Formel (1) und $R_{30}$ und a wie in Formel (1a) definiert ist, $R'_1$ Alkylen mit 2 bis 6 C-Atomen, v eine beliebige Zahl zwischen 1 und 4, $X'^{\oplus}$ eine Gruppe der Formel

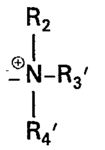

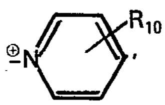 , 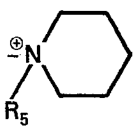 oder 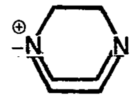 ,

worin $R_1$ und $R'_3$ unabhängig voneinander für unsubstituiertes oder durch Hydroxy, Cyano, Halogen oder Phenyl substituiertes Alkyl mit 1 bis 4 C-Atomen stehen, $R'_4$ die Bedeutung von $R_2$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Reste $-SO_2NHR_1'-X^{\oplus}A^{\ominus}$ gleich oder verschieden sein können.

In den erfindungsgemässen Mitteln ist das Fotobleichmittel (der Fotoaktivator) zweckmässig in einer Menge von 0,0005 bis 1,5 Gew.-%, vorzugsweise 0,005 bis 0,5 Gew.-%, bezogen auf das Gesamtgewicht des Mittels, enthalten.

Die zweite obligatorische Komponente in den erfindungsgemässen Mitteln ist neben dem Fotoaktivator ein kationisches Textilbehandlungsmittel. Als letztere kommen vor allem kationische Tenside, Weichmacher, Antistatika und/oder Antimikrobika in Betracht. Auch kationische optische Aufheller können in den erfindungsgemässen Mitteln vorhanden sein. Die genannten kationischen Textilbehandlungsmittel sind an sich aus der Literatur bekannt. So sind zum Beispiel kationische Gewebeweichmacher und/oder Antistatika in den U.S. Patentschriften US-A 3,756,950 und 3,904,533 in den deutschen Offenlegungsschriften DE-A 2855519 und 2920453, in der Schweizer Patentschrift CH-A 614473 und in der japanischen Patentpublikation JP-A-42-15596 beschrieben, die auch in den erfindungsgemässen Mitteln eingesetzt werden können.

Als vorteilhafte kationische Gewebeweichmacher und/oder Antistatika seien beispielsweise genannt:

1) Quaternäre Ammoniumsalze der Formel

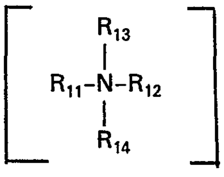 ⊕ $B^{\ominus}$ , (4)

worin $R_{11}$ Wasserstoff oder eine aliphatische Gruppe mit 1 bis 22 C-Atomen, $R_{12}$ eine aliphatische Gruppe mit 10 bis 22 C-Atomen, $R_{13}$ und $R_{14}$ unabhängig voneinander Alkyl mit 1 bis 4 C-Atomen und $B^{\ominus}$ ein Anion bedeuten. Als Anionen $B^{\ominus}$ kommen dieselben in Betracht, die vorstehend für das Symbol $A^{\ominus}$ bzw. $A'^{\ominus}$ in den Formeln (1) bzw. (3) beschrieben sind.

Beispiele für quaternäre Ammonium-Weichmacher sind: Tallyltrimethylammoniumchlorid, Ditallyldimethylammoniumchlorid; Ditallyldimethylammoniumsulfat, Dihexadecyldimethylammoniumchlorid, Dioctadecyldimethylammoniumchlorid, Dieicosyldimethylammoniumchlorid, Didocosyldimethylammoniumchlorid, Dihexadecyldiethylammoniumchlorid, Dihexadecyldimethylammoniumacetat, Ditallyldipropylammoniumphosphat, Ditallyldimethylammoniumnitrat, Dicocoyldimethylammoniumchlorid.

2) Quaternäre Imidazoliniumsalze der Formel

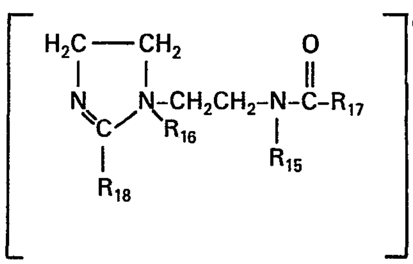 ⊕ $B^{\ominus}$ (5) ,

worin $R_{15}$ Wasserstoff oder Alkyl mit 1 bis 4 C-Atomen, $R_{16}$ Alkyl mit 1 bis 4 C-Atomen, $R_{17}$ Alkyl mit 1 bis 22 C-Atomen, $R_{18}$ Wasserstoff oder Alkyl mit 1 bis 22, vorzugsweise 15–22 C-Atomen und $B^{\ominus}$ ein Anion bedeuten.

Das Anion $B^{\ominus}$ ist wie in Formel (4) definiert.

Bevorzugt sind solche Verbindungen der Formel (5), worin $R_{17}$ und $R_{18}$ jeweils Alkyl mit 12 bis 22 C-Atomen bedeuten.

Beispiele für bevorzugte Imidazoliniumverbindungen der Formel (5) sind: 1-Methyl-1-stearoylamidoäthyl-2-heptadecyl-4,5-dihydroimidazoliniummethosulfat, 1-Methyl-1-palmitoylamidoäthyl-2-octadecyl-4,5-dihydroimidazolinium-chlorid, 2-Tallyl-1-methyl-1-talloylamidoäthyl-imidazolinium-methosulfat.

3) Quaternierte Polyamidverbindungen der Formel

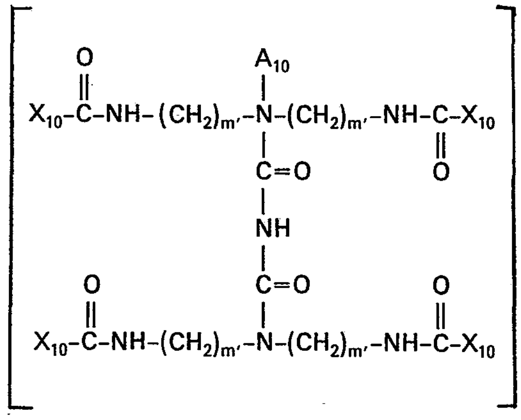 ⊕ (6) $B^{\ominus}$,

worin $X_{10}$ einen unsubstituierten oder substituierten, z.B. alkoxylierten aliphatischen Kohlenwasserstoffrest mit 10 bis 30, vorzugsweise 12 bis 22 C-Atomen, $A_{10}$ Dihydroxyalkyl mit mindestens 3 C-Atomen, insbesondere mit 3 bis 8 C-Atomen, m' eine Zahl zwischen 1 und 8, vorzugsweise 2 oder 3 bedeuten und $B^{\ominus}$ wie oben definiert ist.

$X_{10}$ leitet sich bevorzugt von Fettsäuren ab, z.B. von Talgfettsäure. $A_{10}$ ist bevorzugt die 2,3-dihydroxypropylgruppe.

4) N-Alkylpyridiniumchloride mit einer Alkylgruppe mit 12 bis 22 C-Atomen.

5) N,N-Dialkylmorpholiniumchloride, wobei eine Alkylgruppe vorzugsweise 12 bis 22 C-Atome, die andere 1 bis 4 C-Atome aufweist.

6) Quaternierte Derivate von Aminosäuren und Aminoestern.

Als kationische Tenside seien beispielsweise genannt:

1) Alkylierte oder acylierte Polyamine; Umsetzungsprodukte von Fettsäuren mit etwa 10 bis 20 C-Atomen mit Di- oder Polyaminen wie Äthylendiamin, Propylendiamin, Diäthylentriamin, Triäthylentetramin oder mit Fettaminen oder Äthylenimin wie Stearinsäure-N-(β-aminoäthyl)-amid oder N-Oleyl-triäthylentetramin; Umsetzungsprodukte aus Alkylhalogeniden mit 10 bis 20 C-Atomen (z.B. Dodecylchlorid, Stearylchlorid) mit Polyalkylenpolyaminen (z.B. N-Lauryl-diäthylentriamin, N-Octyl-tetraäthylentetramin, N-Octadecyl-triäthylentetramin, N-Octadecyl-trimethylendiamin; ferner Anlagerungsprodukte von 5–200 Äthylenoxidgruppen an alkylierte oder acylierte Di- oder Polyamine vom Typ der Polyalkylenpolyamine, z.B. N-Octadecyl-N, N',N"-trioxyäthyl-trimethylendiamin, Additionsprodukte von 20 bis 50 Äthylenoxidgruppen an Hexadecyläthylendiamin, Octadecyldiäthylentriamin, Octadecenyläthylendiamin.

2) Kationische Tenside, wie sie in den veröffentlichten europäischen Anmeldungen Nr. 234 und 235 beschrieben sind.

3) Bevorzugte kationische Tenside entsprechen der Formel

(7) $R_{20}(R_{21})_3^{\oplus}N \quad B^{\ominus}$ ,

worin $R_{20}$ eine geradkettige oder verzweigte Alkenyl- oder Alkylgruppe mit 8 bis 22 C-Atomen, und jede der Gruppen $R_{21}$, die gleich oder verschieden sein können, Alkyl oder Hydroxyalkyl mit 1 bis 4 C-Atomen oder Benzyl bedeutet, wobei höchstens eine Gruppe $R_{21}$ für Benzyl steht. $B^{\ominus}$ bedeutet ein Anion und ist wie oben definiert. Beispiele für derartige Verbindungen sind Palmityl-trimethylammoniumchlorid und Cocoyl-trimethylammoniumchlorid.

4) Weitere bevorzugte kationische Tenside sind Imidazoliniumverbindungen, insbesondere solche der Formel

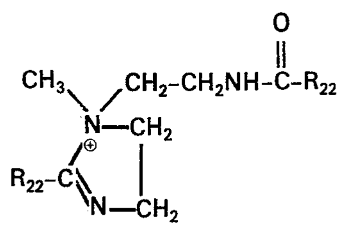 $B^{\ominus}$ , (8)

worin $R_{22}$ Alkyl mit 10 bis 20, insbesondere 14 bis 20 C-Atomen bedeutet und $B^{\ominus}$ wie oben definiert ist.

5) Ebenfalls bevorzugte kationische Tenside sind solche der Formeln

(9) 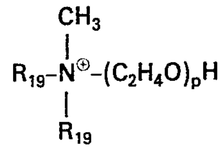 und

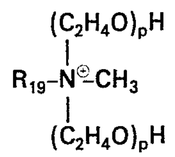 $B^{\ominus}$ (10) ,

worin $R_{19}$ Alkyl mit 10 bis 20 C-Atomen und p eine ganze Zahl zwischen 1 und 20 und $B^{\ominus}$ ein Anion bedeuten.

Als kationische antimikrobielle Substanzen, die gegen Bakterien, Fungi, Algen, Sporen, Viren und auch Protozoen wirksam sind, sind z.B. aus den U.S. Patentschriften US-A-2,295,504, 2,479,850, 2,666,010 und 4,025,556 bekannt. Die dort beschriebenen kationischen Verbindungen können in den erfindungsgemässen Mitteln eingesetzt werden.

Bevorzugte Verbindungen dieser Art sind etwa quaternäre Ammoniumverbindungen der Formel

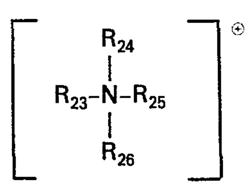 $D^{\ominus}$ , (11)

worin $R_{23}$ unsubstituiertes oder mit Halogen, Hydroxy, Amino, Alkylamino, Dialkylamino, Carbalkoxy oder Alkoxy substituiertes geradkettiges oder verzweigtes Alkyl, Aryl, Aralkyl, Alkylaryl, gegebenenfalls alkylsubstituiertes Heterocyclyl oder heterocyclisch substituiertes Alkyl, wobei der Heterocyclus gesättigt oder ungesättigt sein kann, $R_{24}$, $R_{25}$ und $R_{26}$, die gleich oder verschieden sind, Alkyl, Aryl, Aralkyl, Alkylaryl, gegebenenfalls alkylsubstituiertes Heterocyclyl oder heterocyclisch substituiertes Alkyl, wobei der Heterocyclus gesättigt oder ungesättigt sein kann, bedeuten, wobei die Gruppen der letztgenannten drei Symbole insgesamt 3 bis 15 C-Atome aufweisen und wobei deren Alkylgruppen (geradkettig oder verzweigt) unsubstituiert oder mit Halogen, Hydroxy, Nitro, Amino, Alkylamino, Dialkylamino, Sulfonamido, Carbalkoxy oder Alkoxy substituiert sein können. $D^{\ominus}$ in Formel (11) bedeutet eine anionische wasserlöslichmachende Gruppe.

Bevorzugte Verbindungen der Formel (11) sind solche, in denen $R_{23}$ 12 bis 20 C-Atome aufweist, $R_{24}$ und $R_{25}$ unabhängig voneinander Methyl oder Äthyl, $R_{26}$ Methyl, Äthyl, Benzyl oder Chlorbenzyl und $D^{\ominus}$ ein anorganisches Anion wie ein Holgenid, Nitrat, Sulfat, Hydroxid, Methylsulfat, Toluolsulfonat, Carbonat und Phosphat oder ein organisches Anion wie Acetat, Propionat, Benzoat, Tartrat, Citrat, Salicylat, Phenolat, Tri- oder Pentachlorphenolat, bedeuten.

Beispiele für derartige kationische antimikrobielle Wirkstoffe sind unter anderen: N-Myristyl-N,N,N-trimethylammoniumchlorid, N-Cetyl-N,N,N-triäthylammoniumbrodid, N-Oleyl-N-hexyl-N,N-dimethylammoniumiodid, N-Hydroxystearyl-N,N-diäthyl-N-methylammoniumsulfat, N-Decylbenzyl-N,N,N-trimethylammoniumpropionat, N-Benzyltetradecyl-N,N,N-triäthylammoniumsalicylate, N-Dodecylfuryl-N,N,N-trimethylammonium-methosulfat, N-Methoxypalmityl-N-thioazyl-N,N-dimethylammoniumnitrat, N-Lauryl-N,N-dimethyl-N-benzyl-ammoniumhydroxid, N-p-tert.-Octylphenoxyäthoxyäthyl-N,N-dimethyl-N-benzylammoniumchlorid, N-Cetylaminophenyl-N,N,N-trimethylammoniummethosulfat und N-Cetyl-N,N-dimethyl-N-nitrobenzylammoniumchlorid.

Die Funktion der vorstehend beispielsweise angeführten kationischen Textilbehandlungsmittel ist selbstverständlich nicht ausschliesslich auf ein bestimmtes Anwendungsgebiet gerichtet zu verstehen. Viele der genannten Verbindungen und Verbindungsgruppen können zwei oder mehrere der genannten Funktionen (Weichmacher, Antistatikum, Antimikrobikum, Tensid) ausüben.

Die Menge an kationischen Textilbehandlungsmitteln in erfindungsgemässen Mitteln sowie die Zahl und Art der zusätzlichen, neben den beiden erfindungswesentlichen Komponenten in besagten Mitteln enthaltenen weiteren Komponenten kann, je nach der Verwendungsart der erfindungsgemässen Mittel, in weiten Grenzen schwanken. Erfindungsgemässe Mittel können z.B. Textilnachbehandlungsmittel, wie Spülmittel, Waschmittel, Einweichmittel oder reine Bleichmittel, gegebenenfalls mit antimikrobieller Wirksamkeit, sein.

Erfindungsgemässe Textilnachbehandlungsmittel, insbesondere Spülmittel, sind in der Regel flüssig. Die darin enthaltenen Wirkstoffe werden vorzugsweise in Wasser emulgiert. Neben Wasser, dem Photoaktivator und dem kationischen Textilbehandlungsmittel, insbesondere dem Weichmacher und/oder Antistatikum können diese erfindungsgemässen Nachbehandlungsmittel kleinere Mengen an Farbstoffen, Parfumen, Schutzmitteln, optischen Aufhellern, Puffersubstanzen, Viskositätsreglern, Emulgatoren, Stabilisatoren, Antimikrobika, Korrosionsinhibitoren, das Eingeben der Gewebe verhindernden Mitteln usw. enthalten. Die Konsistenz der genannten Mittel kann z.B. durch Harnstoff, protonierte äthoxylierte Alkylamine und/oder durch Lösungsmittel wie niedere Alkohole, Glykole und Glykoläther stabilisiert bzw. verbessert werden. Weiter können erfindungsgemässe Spülmittel gegebenenfalls auch zusätzlich nichtionische Weichmacher und/oder Antistatika enthalten, beispielsweise Sorbitester, Fettalkohole, Mono- und Diglyceride mit mindestens einer freien Hydroxylgruppe, Mono- und Diätheralkohole wie Glycerin-1,3-distearyläther sowie Diamine. Herstellung und Anwendung der erfindungsgemässen Spülmittel erfolgt in für derartige bekannte Mittel üblicher Weise.

Erfindungsgemässe Waschmittel, die in flüssiger oder fester Form vorliegen können, enthalten neben dem Fotoaktivator als erfindungswesentliche(n) Bestandteil(e) einen oder mehrere kationische Gewebeweichmacher, Antistatika, Tenside und/oder Antimikrobika. Sofern die Waschmittel flüssig sind, sind die genannten sowie gegebenenfalls weitere fakultative Bestandteile (siehe unten) in Wasser emulgiert. Die Zusammensetzung enthält vorzugsweise zur Stabilisierung der Emulsion und zur Erreichung einer vorteilhaften Konsistenz die oben im Falle der Spülmittel angeführten Zusätze. Sind die erfindungsgemässen Waschmittel fest (pulverförmig), so enthalten sie übliche Waschpulvergerüststoffe wie z.B. Alkalipoly- und Polymetaphosphate, Alkalipyrophosphate, Alkalisilikate und -carbonate und andere anorganische Salze. In der Regel enthalten erfindungsgemässe Waschmittel jedoch möglichst wenig Stoffe, die freie Anionen bilden, da sie die kationischen Bestandteile ungünstig beeinflussen. Bevorzugt sind daher die flüssigen Waschmittel.

Als fakultative Bestandteile können die erfindungsgemässen Waschmittel zusätzlich weitere übliche Waschmittelbestandteile enthalten. Als solche seien insbesondere nichtionische Tenside erwähnt. Die in den erfindungsgemässen Waschmitteln vorzugsweise verwendeten nichtionischen Tenside sind bekannt und umfassen wasserlösliche Produkte, die sich von Kondensationsprodukten eines Alkylenoxids oder äquivalenten Reaktionsteilnehmern und einer hydrophoben Verbindung mit reaktionsfähigem Wasserstoff ableiten. Die hydrophoben organischen Verbindungen können aliphatisch, aromatisch oder heterocyclisch sein, obgleich die beiden ersten Verbindungsklassen bevorzugt sind. Bevorzugte hydrophobe Verbindungen sind die höheren aliphatischen Alkohole und Alkylphenole, obgleich auch andere Verbindungen verwendet werden können, wie Carbonsäuren, Carboxamide, Mercaptane, Sulfonamide usw. Die Äthylenoxidkondensationsprodukte mit höheren aliphatischen Alkoholen stellen eine bevorzugte Klasse nichtionischer Verbindungen dar. Gewöhnlich sollte der hydrophobe Anteil mindestens etwa 6 Kohlenstoffatome und vorzugweise mindestens etwa 8 Kohlenstoffatome aufweisen. Er kann sogar etwa 50 Kohlenstoffatome oder mehr enthalten. Die Menge des Alkylenoxids variiert beträchtlich und hängt von der hydrophoben Verbindung ab. Als allgemeine Regel sollten mindestens etwa 5 Mol Alkylenoxid je Mol der hydrophoben Verbindung verwendet werden. Die obere Grenze für das Alkylenoxid variiert ebenfalls, jedoch ist hier keine kritische Grenze gegeben. Es können 200 oder noch mehr Mol Alkylenoxid je Mol der hydrophoben Verbindung verwendet werden. Obzwar Äthylenoxid das bevorzugte und überwiegende oxyalkylierende Mittel darstellt, können auch andere niedere Alkylenoxide, wie Propylenoxid, Butylenoxid und dergleichen verwendet werden oder zum Teil das Äthylenoxid ersetzen.

Andere geeignete nichtionische Verbindungen sind die Polyoxyalkylenester organischer Säuren, wie der höheren Fettsäuren, der Harzsäuren, Tallölsäuren, Säuren von Erdöloxydationsprodukten usw. Diese Ester enthalten gewöhnlich etwa 10 bis etwa 22 Kohlenstoffatome im Säureanteil und etwa 12 bis etwa 30 Mole Äthylenoxid oder dessen Äquivalent.

Weitere nichtionische oberflächenaktive Verbindungen sind die Alkylenoxidkondensationsprodukte mit höheren Fettsäureamiden.

Die Fettsäuregruppe enthält im allgemeinen etwa 8 bis etwa 22 Kohlenstoffatome und wird mit etwa 10 bis etwa 50 Molen Äthylenoxid kondensiert. Als Äquivalente können auch die entsprechenden Carboxamide und Sulfonamide verwendet werden.

Die oxyalkylierten höheren aliphatischen Alkohole als nichtionische oberflächenaktive Verbindungen sind bevorzugt. Die Fettalkohole sollten mindestens 6 Kohlenstoffatome und vorzugsweise mindestens etwa 8 Kohlenstoffatome aufweisen. Insbesondere werden als Alkohole der Lauryl-, Myristyl-, Cetyl-, Stearyl- und die Oleylalkohole bevorzugt. Diese Alkohole sollten mit mindestens etwa 6 Molen Äthylenoxid kondensiert werden. Ein typisches nichtionisches Produkt ist $C_{12}$ bis $C_{13}$-aliphatischer Alkohol, der mit etwa 6,5 Molen Äthylenoxid kondensiert ist. Die entsprechenden mit Äthylenoxid kondensierten Alkylmercaptane sind ebenfalls geeignet.

Die alkoxylierten höheren aliphatischen Alkohole sind besonders zweckmässig für Waschmittelformulierungen, die in Haushaltswaschmaschinen zur Anwendung kommen, da sie leicht biologisch abgebaut werden und mit kationischen oberflächenaktiven Verbindungen und Gewebeweichmachern sowie den meisten anderen Hilfsstoffen verträglich sind.

Die erfindungsgemässen Waschmittel können gegebenenfalls auch anionische Tenside enthalten, beispielsweise Seife, lösliche Salze von Sulfonsäurehalbestern höherer Fettalkohole und/oder mehrfach alkylsubstituierter Arylsulfonsäuren, Sulfocarbonsäureester mittlerer bis höherer Alkohole, Fettsäureacylaminoalkyl- oder Aminoarylglycerinsulfonate, Phosphorsäureester von Fettalkoholen usw. Da jedoch anionische Bestandteile mit den kationischen Verbindungen in den erfindungsgemässen Mitteln häufig unlösliche Verbindungen ergeben, sollen anionische Tenside nur in geringen Mengen enthalten sein, ebenso wie andere übliche Waschmittelbestandteile, die freie Aionen bilden, wie z.B. Phosphate, Silikate, Polycarboxylate, Borate, Carboxymethylcellulose usw.

Als weitere Bestandteile können in den erfindungsgemässen Waschmitteln gegebenenfalls enthalten sein: Weitere Bleichmittel wie Chlorite, aktives Chlor liefernde Verbindungen, z.B. Hypochlorite, Chlorisocyanurate, insbesondere Dichlorisocyanurate, oder «Perverbindungen» wie Wasserstoffperoxid oder diese freisetzende Verbindungen, Alkaliperborate, -percarbonate, -persulfate, -persilicate, -perphosphate und -perpolyphosphate, organische Persäuren oder deren Salze und Anhydride, Harnstoffperoxid usw; Bleichaktivatoren; Schmutz suspendierende oder ein Absetzen von Schmutz verhindernde Mittel, z.B. Polyvinylalkohol, Natriumcarboxymethylcellulose, Hydroxypropylmethylcellulose; Schaumregulatoren; Korrosionsinhibitoren; Farbstoffe; optische Aufheller; Antimikrobika; Puffersubstanzen; Enzyme; Enzymstabilisatoren; Parfume.

Als Beispiel für die mengenmässige Zusammensetzung eines erfindungsgemässen flüssigen Waschmittels kann ein Mittel folgender Zusammensetzung gelten:

0,005–0,5% Photobleichmittel,
15–30% des kationischen Textilbehandlungsmittels, sofern dieses nicht ein optischer Aufheller ist,
40–70% eines nichtionischen Tensids,
5–55% Lösungsmedium, vorzugsweise Wasser, gegebenenfalls zusammen mit niederen ein- oder mehrwertigen Alkoholen und Stabilisierungsmitteln, wie sie weiter oben angeführt sind.
0,01–10% von oben angeführten fakultativen Bestandteilen, davon z.B. etwa 0,01–2% an optischen Aufhellern.

Alle vorstehend angegebenen Prozentangaben sind Gewichtsprozent, bezogen auf das Gesamtgewicht des fertigen Waschmittels.

Zusätzlich kann den genannten flüssigen Waschmitteln noch ein opak machendes Mittel zugesetzt werden, um ihnen ein cremiges Aussehen zu verleihen.

Bevorzugte erfindungsgemässe Mittel weisen einen alkalischen pH-Wert auf, etwa einen zwischen 7 und 10. Sofern die Mittel selbst sauer sind, kann vorteilhaft das Applikationsbad alkalisch gemacht, z.B. auf einen pH-Wert von 7 bis 12, insbesondere zwischen 7,5 und 10, z.B. zwischen 8 und 9. Prinzipiell kann die Applikation jedoch auch im sauren Bereich erfolgen.

Wie bereits erwähnt, enthalten die erfindungsgemässen Mittel meist optische Aufheller. Als solche Aufheller kommen in Textilbehandlungsmitteln, vorzugsweise in Waschmitteln, übliche optische Aufheller in Betracht. Beispiele hierfür sind bekannte anionische oder nichtionische Aufheller aus den Klassen der bis-Styrylbiphenyle,

bis-Triazinylaminostilben-2,2'-disulfonsäuren, Naphthalimide, Styryl- und Stilbenylnaphthoriazole, bis-Triazolylstilbene, 7-Aminocumarine, bis-Benzoxyzolyl-thiophene, -stilbene und -äthylene, bis-Benzimidazolylstilbene, -äthylene und -thiophene, Diphenylpyrazoline, Styrylnaphthoxazole, anderen Benzoxazolen usw.

Besonders vorteilhaft enthalten die erfindungsgemässen Mittel jedoch einen kationischen optischen Aufheller. Dieser kann direkt als alleiniges erfindungswesentliches kationisches Textilbehandlungsmittel im Sinne der im Patentanspruch 1 gegebene Definition fungieren. Bevorzugt jedoch ist ein solcher kationischer Aufheller zusammen mit einem anderen kationischen Textilbehandlungsmittel (Weichmacher, Antimikrobikum, Antistatikum, und/oder Tensid) in den erfindungsgemässen Mitteln enthalten. Bevorzugt sind dabei im Rahmen der vorliegenden Erfindung solche kationische optische Aufheller, die in den U.S. Patentschriften US-A-3,940,417, 4,009,994, 4,151,163 und 4,147,648, in den deutschen Offenlegungsschriften DE-A-2807008 und 2946481, der britischen Patentschrift GB-A-2023605 und den veröffentlichten europäischen Patentanmeldungen EP-A 19702 und 19078 beschrieben sind. Besonders vorteilhaft sind für diesen Zweck Aufheller, die in den veröffentlichten europäischen Patentanmeldungen 19702 und 19078 definiert sind. Erfindungsgemässe Mittel enthalten vorzugsweise 0,001 bis 3%, insbesondere 0,01 bis 2%, bezogen auf das Gesamtgewicht der Mittel, an einem oder mehreren der beschriebenen optischen Aufheller.

Die Anwendung der erfindungsgemässen Mittel erfolgt in der für derartige bekannte Mittel üblichen Weise, wobei jedoch zur Entfaltung der Wirksamkeit des Fotobleichmittels eine Bestrahlung mit Licht erfolgen muss. Siehe dazu die in der U.S. Patentschrift 4166718 beschriebenen Verfahren. Beispielsweise werden Textilien in einer Flotte gewaschen, die ein erfindungsgemässes Waschmittel enthält. Die Bestrahlung mit sichtbarem und/oder infrarotem Licht kann direkt im Bleichbad erfolgen, beispielweise durch eine entsprechende künstliche Lichtquelle in der Waschmaschine. Die Bestrahlung kann jedoch auch vorzugsweise nach Entfernung der Textilien aus dem Waschbad in feuchtem Zustand erfolgen, wobei als Lichtquelle vorzugsweise das Sonnenlicht dient. Die Belichtung kann in diesem Fall zweckmässig während des Trocknens der Textilien erfolgen. Werden die Textilien nicht an der Leine, sondern beispielsweise in einem Tumbler getrocknet, kann die Belichtung auch während dieses Trocknungsprozesses erfolgen, beispielsweise durch eine geeignete künstliche Lichtquelle, die am bzw. im Tumbler angebracht ist. Für die Entfaltung der Wirksamkeit des Fotobleichmittels ist ferner die Anwesenheit von Sauerstoff erforderlich. Es genügt dazu der in der Waschflotte anwesende (gelöste) Sauerstoff (die Flotte sollte möglichst kein Reduktionsmittel enthalten) oder der Luftsauerstoff, wenn die Belichtung ausserhalb des Bades erfolgt.

Besonders gute Effekte werden erhalten, wenn die Flotte, in der die Textilien behandelt werden, einen alkalischen pH-Wert aufweist, z.B. einen zwischen 7 und 12, insbesondere zwischen 7,5 und 10 oder zwischen 8 und 9. Prinzipiell kann die Applikation jedoch auch im sauren Bereich erfolgen.

Dasselbe Verfahren kann bei der Anwendung von erfindungsgemässen Nachbehandlungs-, vorzugsweise Spülmitteln für Textilien angewendet werden, wobei ebenfalls die Textilien nach dem Spülen (z.B. nach dem (den) Spülgang (Spülgängen) in der Waschmaschine) am zweckmässigsten dem Sonnenlicht ausgesetzt werden, um die Bleichwirkung des Fotoaktivators voll zu entfalten.

Durch die Wirkung des Photobleichmittels werden Flecken besser aus dem behandelten Gewebe entfernt. Ferner können dadurch auch Farbübertragungen zwischen einzelnen Gewebestücken verhindert bzw. verringert werden.

Die vorliegende Erfindung betrifft ferner neue Phthalocyaninverbindungen der Formel

$$(PC)\text{——}(SO_2X_1-R_1-X^{\oplus})_v \qquad A^{\ominus}_w \qquad (12)$$

bzw. der Formel

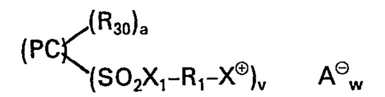

(12a) ,

worin $R_{30}$ und a wie in Formel (1d) definiert sind, PC das unsubstituierte Zink- oder Aluminiumphthalocyaninringsystem, v eine beliebige Zahl zwischen 1 und 4, $R_1$ unverzweigtes oder verzweigtes Alkylen mit 1 bis 8 C-Atomen oder 1,3- oder 1,4-Phenylen, $X_1$ NH oder N-Alkyl, $X^{\oplus}$ eine Gruppe der Formel

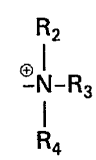 , 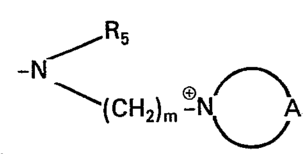 ,

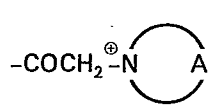 , 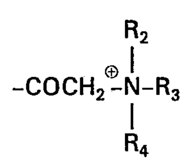 und

für den Fall, dass $R_1$ = Alkylen, auch eine Gruppe der Formel

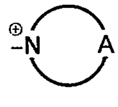 , 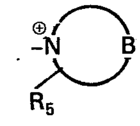 , 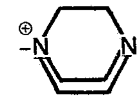 ,

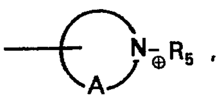 , 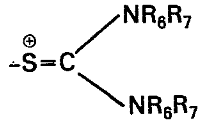

oder 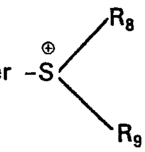 ,

wobei in obigen Formeln $R_2$ und $R_3$ unabhängig voneinander für gegebenenfalls substituiertes Alkyl mit 1 bis 6 C-Atomen, $R_4$ für gegebenenfalls substituiertes Alkyl mit 1 bis 6 C-Atomen, Cycloalkyl mit 3 bis 7 C-Atomen oder die Gruppe $NR_6R_7$, $R_5$ für Alkyl, $R_6$ und $R_7$ unabhängig voneinander für Wasserstoff oder gegebenenfalls substituiertes Alkyl, $R_8$ und $R_9$ unabhängig voneinander für einen gegebenenfalls substituierten Alkyl- oder Aralkylrest, m für eine ganze Zahl zwischen 1 und 6, A für die Ergänzung zu einem aromatischen 5- bis 7-gliedrigen Stickstoffheterocyclus, der gegebenenfalls noch ein oder zwei weitere Stickstoffatome als Ringglieder enthalten kann und der gegebenenfalls verschiedene Substituenten tragen kann, und B für die Ergänzung zu einem gesättigten 5-bis 7-gliedrigen Stickstoffheterocyclus, der gegebenenfalls noch 1 bis 2 Stickstoff-, Sauerstoff- und/oder Schwefelatome als Ringglieder enthalten kann und der gegebenenfalls verschiedene weitere Substituenten tragen kann, stehen,
und $A^{\ominus}$ ein anorganisches oder organisches Anion bedeuten, und w im Falle einwertiger Anionen $A^{\ominus}$ gleich v und im Falle mehrwertiger Anionen $\leqq$ v ist, wobei $A^{\ominus}_w$ die positive Ladung kompensieren muss; wobei, wenn v $\neq$ 1, die Reste gleich oder verschieden sein können, und wobei das Phthalocyaninringsystem auch noch weitere wasserlöslichmachende Gruppen, z.B. anionische, wie Sulfongruppen, enthalten kann und wobei alle Substituenten an die Phenylkerne des Phthalocyaninringsystems gebunden sind.

Bezüglich der einzelnen Substituentendefinitionen gelten hier die gleichen Erklärungen wie sie eingangs im Falle der Verbindungen der Formel (1) abgegeben wurden.

Besonders zu erwähnen im Rahmen der Verbindungen der Formel (12) bzw. (12a) sind die weiter oben definierten Verbindungen der Formel (2) bzw. (2a). Bevorzugt sind dabei die Phthalocyaninverbindungen der ebenfalls vorstehend definierten Formel (3) bzw. (3a).

Die in erfindungsgemässen Mitteln enthaltenen Phthalocyaninverbindungen der Formel (1) bzw. (1d) und damit auch die neuen Verbindungen der Formel (12) bzw. (12a) können nach an sich bekannten Verfahren, insbesondere solchen, die in der Phthalocyaninchemie üblich sind, hergestellt werden.

Zur Einführung der wasserlöslichmachenden kationischen Substituenten kann vom unsubstituierten Phthalocyanin oder dessen Metallkomplexen ausgegangen werden. Wird die Substitution am metallfreien Phthalocyanin durchgeführt oder wird das Phthalocyaninringsystem aus entsprechend substituiertem Phthalsäureanhydrid oder Phthalodinitril aufgebaut, kann mit einem Zink- oder Aluminiumsalz in bekannter Weise nachträglich metallisiert werden. Die entsprechend substituierten Aluminium- und Zinkphthalocyaninkomplexe können selbstverständlich auch aus anderen Metallkomplexen durch Substitution des jeweiligen Metalls durch Aluminium oder Zink mit Hilfe bekannter Methoden erhalten werden.

Zur Herstellung von Verbindungen der Formel (1), worin R Gruppen der Formel (1a) bedeuten, setzt man beispielsweise metallfreies oder bereits metallisiertes Phthalocyanin mit Chlorsulfonsäure zu den entsprechenden Sulfochloridverbindungen um. Die erhaltenen Sulfochlorid-Phthalocyanine lässt man dann in bekannter Weise mit einem Diamin bzw. Mercapto-Amin der Formel

(13) 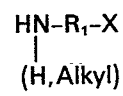 bzw.

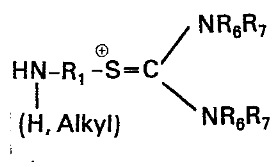 $A^{\ominus}$ (14) oder

(15) 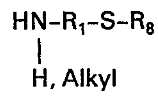

reagieren, wobei $R_1$, $R_6$, $R_7$ und $R_8$ wie in Formel (1) definiert sind und X eine noch nicht quaternierte tertiäre Aminogruppe bedeutet. In den so erhaltenen Sulfonamido-Phthalocyaninen wird die tertiäre Aminogruppe X nach bekannten Methoden zu einer Gruppe $X^{\oplus}$ $A^{\ominus}$ quaterniert oder die Mercaptogruppe in Formel (15) zu der Gruppe

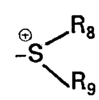 $A^{\ominus}$ terniert.

Die Phthalocyanin-Sulfochloride lassen sich jedoch auch in bekannter Weise mit Aminen umsetzen, die bereits quaternäre Ammoniumgruppen bzw. ternäre Sulfoniumgruppen enthalten (also Umsetzung mit Aminen der Formel (13) worin X durch $X^{\oplus}$ $A^{\ominus}$ ersetzt ist bzw. das Schwefelatom im Amin der Formel (15) bereits terniert ist).

Eine weitere Methode besteht darin, die Phthalocyanin-Sulfochloride mit Halogen-Aminen der Formel

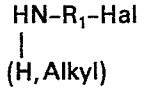 (16)

und die resultierenden Phthalocyanin-Sulfonamid-Verbindungen z.B. mit einem tertiären Amin umzusetzen. Werden Verbindungen der Formel (2) gewünscht, so setzt man die Phthalocyanin-Sulfochloride mit unterstöchiometrischen Mengen an Aminen der Formeln (13) bis (16) um und hydrolysiert, gegebenenfalls nach Quaternisierung, die restlichen freien $SO_2Cl$-Gruppen zu den Sulfogruppen oder deren Salzen.

Verbindungen der Formel (1) mit Substituenten der Formel (1c), worin n = 1, können aus den entsprechenden, durch Chlormethylierung erhaltenen Chlormethyl-Phthalocyaninen durch Umsetzung beispielsweise mit einem tertiären Amin erhalten werden. Verbindungen der genannten Art, in denen n = 0 können in ähnlicher Weise aus chlorierten Phthalocyaninen hergestellt werden. Verbindungen der Formel (1) mit Substituenten der Formel (1b) können ebenfalls aus chlorierten Phthalocyaninen durch Umsetzung mit den entsprechenden tertiären Amino-Alkoholen bzw.-Phenolen und anschliessender Quaternierung der Aminogruppe hergestellt werden.

Alternativ können die vorgenannten Verbindungen, auch jene mit Substituenten der Formel (1b) in der Weise erhalten werden, indem man von einem entsprechend substituierten Phthalsäureanhydrid oder Phthalodinitril ausgeht und diese in bekannter Weise zum Phthalocyaninringsystem kondensiert. Bei Verwendung von substituiertem Phthalodinitril wird dieses, gegebenenfalls zusammen mit einem Metallsalz, geschmolzen oder in Lösung oder Suspension zum Phthalocyaninringsystem cyclisiert. Bei Verwendung des entsprechenden Phthalsäureanhydrids wird zusätzlich Harnstoff und gegebenenfalls ein Katalysator, wie z.B. Borsäure oder Ammoniummolybdat vor der Reaktion zugegeben.

Bei den letztgenannten Methoden können die quaternären Ammonium- bzw. ternären Sulfoniumgruppen bereits in den Phthalsäure-Ausgangsderivaten vorhanden sein oder die entsprechenden tertiären Amine oder die entsprechenden Mercaptane können nachträglich im aufgebauten Phthalocyaninringsystem quaterniert oder terniert werden.

Sofern die vorgängig beschriebenen Substitutionsreaktionen nicht direkt mit dem Aluminium- oder Zinkphthalocyaninkomplex bzw. die Aufbaureaktionen des Phthalocyaninringsystems nicht in Gegenwart einer Aluminium- oder Zinkverbindung ausgeführt werden, kann ein entsprechend substituiertes metallfreies Phthalocyanin nachträglich mit einem Aluminium- oder Zinksalz oder -alkoholat in einem Lösungsmittel umgesetzt werden. Als Lösungsmittel kommen z.B. Gemische aus Wasser und organischen Lösungsmitteln, insbesondere auch tertiäre Amine oder auch wasserfreie organische Lösungsmittel, z.B. Pyridin oder Chlorbenzole, in Betracht.

Phthalocyaninverbindungen, die in erfindungsgemässen Mitteln enthalten sind und die neben den wasserlöslichmachenden Gruppen (insbesondere den kationischen Gruppen) noch nichtionische Substituenten enthalten (wie etwa Verbindungen vom Typus der Formel (1d) bzw. (12a)) können ebenfalls nach üblichen Methoden erhalten werden. Beispielsweise können diese nichtionischen Substituenten bereits in den für den Aufbau des Phthalocyaninringgerüstes verwendeten Ausgangsmaterialien (z.B. Phthalsäureanhydrid, Phthalodinitril oder -imid) vorhanden sein. Nach erfolgtem Aufbau des nunmehr entsprechend substituierten, gegebenenfalls bereits metallisierten Phthalocyanins können die wasserlöslichmachenden Gruppen eingeführt werden (siehe oben und Beispiele), sofern diese nicht auch bereits in den Ausgangsmaterialien vorhanden waren. Manche Substituenten können auch in das bereits aufgebaute Phthalocyaninringsystem eingeführt werden, z.B. durch Chlorierung, Bromierung oder Jodierung (z.B. für $R_{30}$ = Cl, Br, J). Die wasserlöslichmachenden Substituenten können vorher oder vorzugsweise nachher eingeführt werden (siehe oben und Beispiele). Sofern der Aufbau des Phthalocyaninringsystems aus Phthalsäureanhydrid oder Phthalodinitril in Gegenwart von Chloriden, z.B. $AlCl_3$, Zn $Cl_2$ u.a. durchgeführt wird, entstehen bereits chlorierte Phthalocyanine, besonders mit einem Chlorgehalt von 0,5 bis 1,5 Mol Chlor pro Mol Phthalocyanin. In solche Produkte können die kationischen Gruppen ebenfalls nachträglich eingeführt werden (siehe oben). Für die Herstellung von gemischt subtituierten Phthalocyaninverbindungen können die erwähnten Methoden in geeigneter Weise kombiniert werden. Alle diese Verfahren sind in der Phthalocyaninchemie wohl bekannt und in der einschlägigen Literatur ausführlich beschrieben.

In den nachfolgenden Beispielen, die die Herstellung der erfindungsgemäss einsetzbaren Photoaktivatoren sowie die erfindungsgemässen Mittel selbst und deren Anwendung veranschaulichen, erfolgen, soweit nicht anders angegeben, alle Teile- und Prozentangaben in Gewichtsteilen und Gewichtsprozent. In den Beispielen steht PC für das Al- oder Zn-Phthalocyaninringsystem, PC′ für das Al-und PC″ für das Zn-Phthalocyaninringsystem. Alle in den Beispielen angegebenen UV-Absorptionsmaxima ($\lambda_{max}$) wurden in einem Gemisch Äthanol/Wasser 1:1 bei pH 7 bestimmt.

Beispiel 1:

0,1 Mol frisch hergestelltes Aluminiumphthalocyanin-trisulfochlorid wird in 1000 Teilen Eiswasser suspendiert und dann mit 1 Mol N,N-Dimethylamino-3-aminopropan versetzt. Das Reaktionsgemisch wird 24 Stunden bei Raumtemperatur und dann 4 Stunden bei 60 bis 70°C gerührt. Die Suspension wird warm filtriert, der Rückstand mit 1000 Teilen warmen Wasser gewaschen und im Vakuum bei 70 bis 80°C getrocknet. Man erhält so die Verbindung der Formel

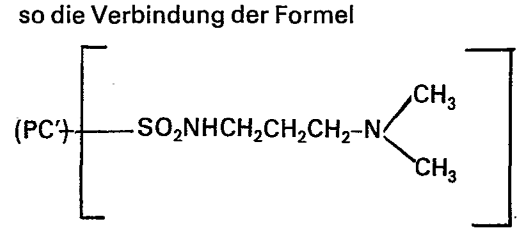

(100)

$\lambda_{max}$ = 678 nm

PC′ bedeutet den Rest des unsubstituierten Aluminiumphthalocyanins.

Zur Quaternierung werden 3 g der beschriebenen Verbindung in 50 ml Dimethylformamid gelöst, mit 1 g Natriumbicarbonat und 2 ml Dimethylsulfat versetzt und 5 Stunden bei 90°C gerührt. Die Reaktionslösung wird im Rotationsverdampfer zur Trockne eingedampft.

Der Rückstand enthält die gut wasserlösliche Verbindung der Formel

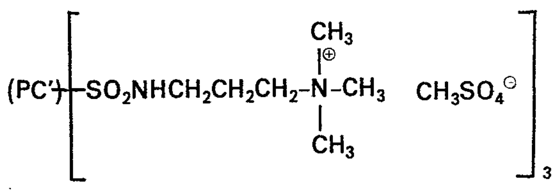

(101)

$\lambda_{max} = 677$ nm

PC′ bedeutet den Rest des unsubstituierten Aluminiumphthalocyanins.

Ersetzt man das in Beispiel 1 verwendete N,N-Dimethylamino-3-aminopropan durch die Amine der Formeln

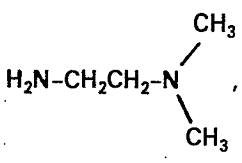

,

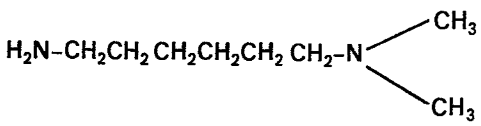

,

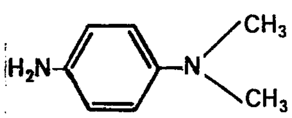

bzw.

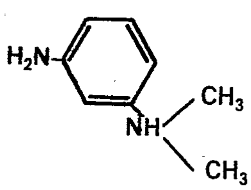

und verfährt sonst wie oben beschrieben, so werden die Produkte der Formeln

$(PC')\!-\![SO_2NHCH_2CH_2N^{\oplus}(CH_3)_3 \quad CH_3SO_4^{\ominus}]_3$ (102)

$\lambda_{max} = 677/345$ nm

$(PC')\!-\![SO_2NH(CH_2)_6\text{-}N^{\oplus}(CH_3)_3 \quad CH_3SO_4^{\ominus}]_3$ (103),

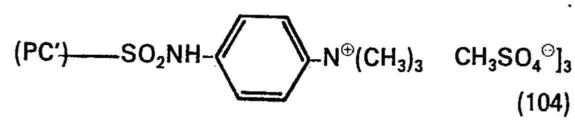

(104)

($\lambda_{max} = 676$ nm) und

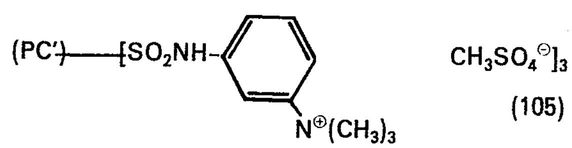

(105)

erhalten, die ähnlich gute Eigenschaften aufweisen. Wird vom entsprechenden Zinkphthalocyanintrisulfochlorid ausgegangen und setzt man dieses wie oben beschrieben um, so erhält man die vorstehend angegebenen Verbindungen, in denen PC′ durch das Zinkphthalocyaninringsystem ersetzt ist. Auch diese Produkte weisen ähnlich gute Eigenschaften wie die oben beschriebenen auf. Aluminium- oder Zinkphthalocyanintrisulfochlorid lässt sich in bekannter Weise auch mit Aminen kondensieren, die bereits eine quaternäre Ammoniumgruppe enthalten. So lassen sich z.B. die Verbindungen der Formeln

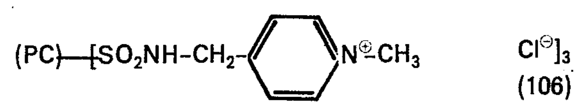

(106)

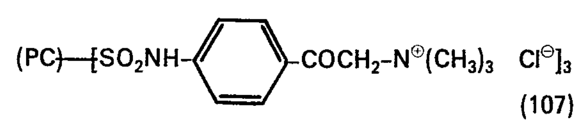

(107)

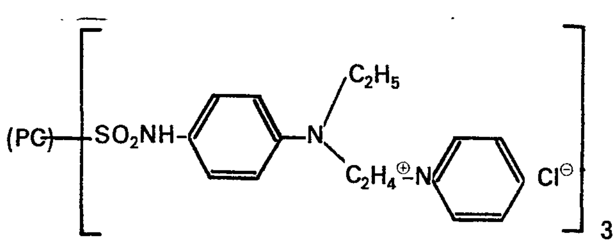

(108) und

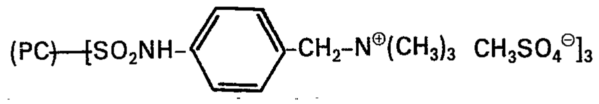
(109)

worin PC für das unsubstituierte Zink- oder Aluminiumphthalocyaninringsystem steht, durch Umsetzung von Zink- bzw. Aluminiumphthalocyanin-trisulfochlorid mit den Aminen der Formeln

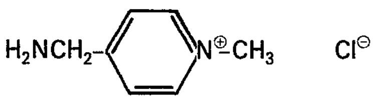
,

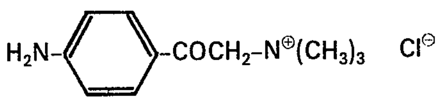
,

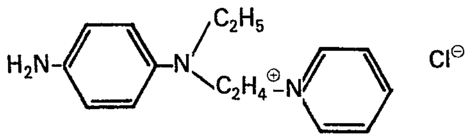
und

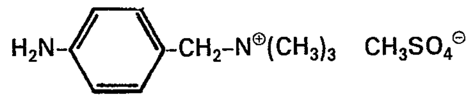

herstellen.

Beispiel 1a:

Wiederholt man Beispiel 1, ersetzt jedoch das als Ausgangsprodukt verwendete Aluminiumphthalocyanin-trisulfochlorid durch entsprechende Mengen an kernsubstituiertem Chlor-, Brom- oder Jodphthalcyanintrisulfochlorid, so erhält man die im Beispiel 1 angegebenen quaternierten Phthalocyaninverbindungen, welche neben den quaternierten Substituenten nach Chlor-, Brom- oder Jodatome als Substituenten enthalten, beispielsweise die Verbindung der Formel

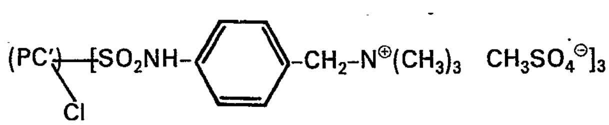
(110)

$\lambda_{max} = 676$ nm.

Beispiel 1b:

In 100 Volumenteilen Dimethylformamid werden bei 90°C 25 Teile der Verbindung der Formel

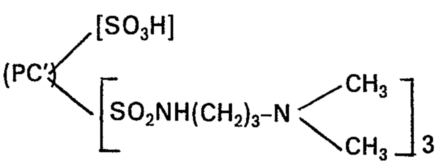
(111)

(PC′ = Rest des unsubstituierten Aluminiumphthalocyanins) gelöst und mit 12 Teilen Dimethylsulfat versetzt. Nach zweistündigem Rühren bei 90° wird das Reaktionsgemisch mit 300 Volumenteilen Aceton verdünnt. Das ausgefallene Produkt wird abfiltriert, mit Aceton gewaschen und getrocknet. Es werden 28 Teile der quaternierten Verbindung der Formel

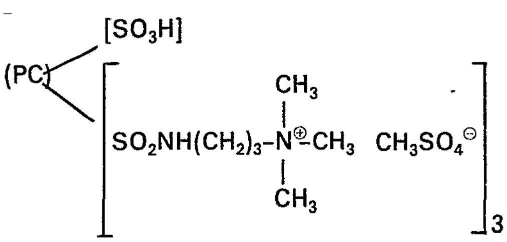
(112)

($\lambda_{max} = 672$ nm)

als blaues Pulver erhalten.

Wiederholt man Beispiel 1b, setzt jedoch als Ausgangsprodukt die Verbindung der Formel

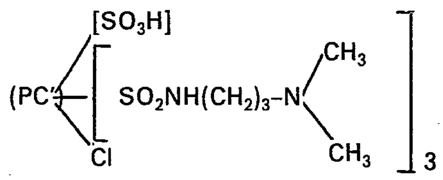
(113)

ein, so erhält man die Verbindung der Formel

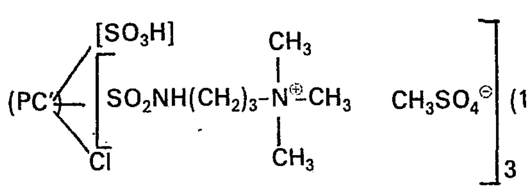
(114)

($\lambda_{max} = 671$ nm)

ebenfalls als blaues Pulver.

Beispiel 2:

0,01 Mol der Verbindung (PC′) $-[SO_2$-$NHCH_2CH_2$-$Cl]_4$, hergestellt durch Kondensation von 2-Chloräthylamin mit Aluminiumphthalocyanin-tetrasulfochlorid, werden in 100 ml Wasser suspendiert und mit 20 ml Pyridin versetzt. Das

Reaktionsgemisch wird bei 70 bis 80°C gerührt, bis die Quaternierung vollständig ist. Die Verbindung der Formel

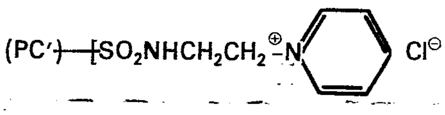
(200)

(PC′ wie in Beispiel 1 definiert)
wird mit Aceton ausgefällt, abfiltriert und getrocknet.

Wiederholt man die vorstehende Vorschrift, verwendet jedoch anstelle von Pyridin eine äquivalente Menge an o-, m- oder p-Methylpyridin, p- oder m-Pyridincarbonsäure, Trimethylamin, Triäthylamin, Triäthanolamin, Dimethyläthanolamin, Chinuclidin, N-Methylcyclohexan, Dimethylcyclohexylamin, N,N-Dimethylhydrazin, Thioharnstoff oder Tetramethylthioharnstoff, so erhält man die Verbindungen der Formeln

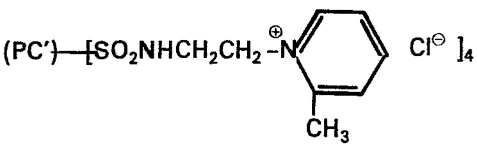
(201)

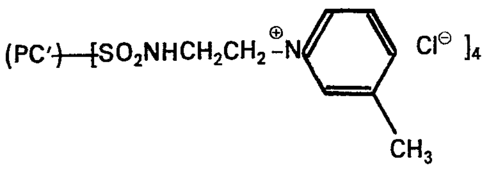
(202)

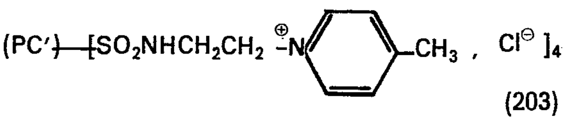
(203)

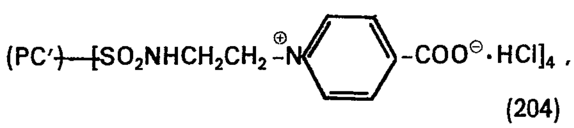
(204)

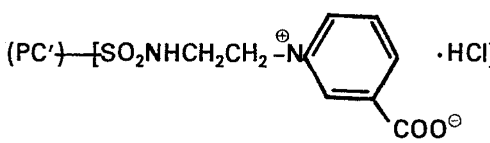
(205)

$(PC')-[SO_2NHCH_2CH_2-\overset{\oplus}{N}(CH_3)_3 \quad Cl^{\ominus}]_4$ , (206)

$(PC')-[SO_2NHCH_2CH_2-\overset{\oplus}{N}(C_2H_5)_3 \quad Cl^{\ominus}]_4$ , (207)

$(PC')-[SO_2NHCH_2CH_2-\overset{\oplus}{N}(C_2H_4OH)_3 \quad Cl^{\ominus}]_4$ , (208)

$(PC')-[SO_2NHCH_2CH_2-\overset{\oplus}{N}(CH_3)_2(C_2H_4OH) \quad Cl^{\ominus}]_4$ , (209)

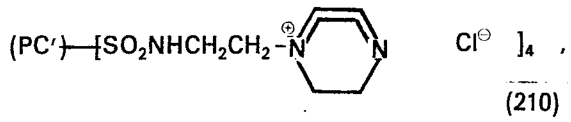
(210)

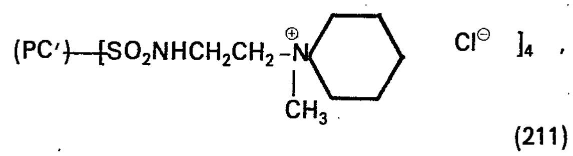
(211)

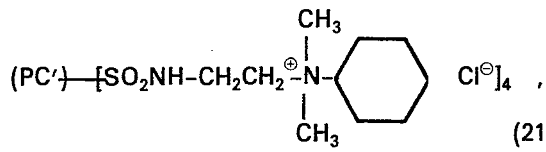
(212)

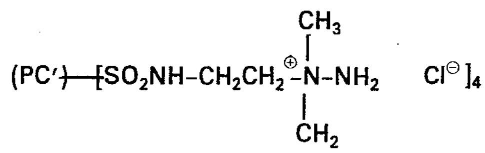
, (213)

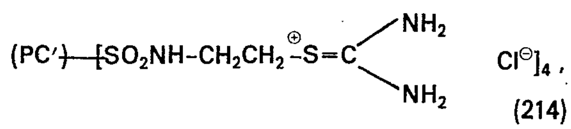
(214)

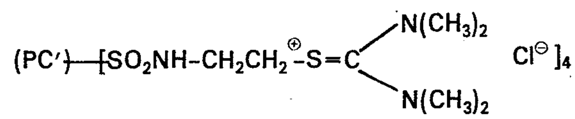
(215)

und

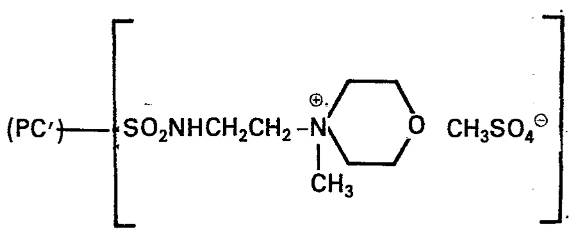
(216) $\lambda_{max} = 675$ nm

Verbindung (216) erhält man durch Umsetzung mit Morpholin und anschliessender Quaternierung mit Dimethylsulfat.

(PC′ = unsubstituiertes Aluminiumphthalocyaninringsystem)

Beispiel 2a:

Wiederholt man Beispiel 2, ersetzt jedoch die als Ausgangsprodukt verwendete Verbindung der Formel (PC′) $-[SO_2NHCH_2CH_2Cl)_4$ durch entsprechende Mengen der Verbindungen der Formel

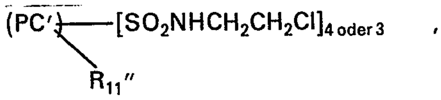

worin $R''_{11}$ Chlor, Brom oder Jod bedeutet, so erhält man die in Beispiel 2 angegebenen quaternierten Phthalocyaninverbindungen, welche neben den quarternierten Substituenten noch Chlor-, Brom- oder Jodatome als Substituenten enthalten, beispielsweise die Verbindungen der Formeln

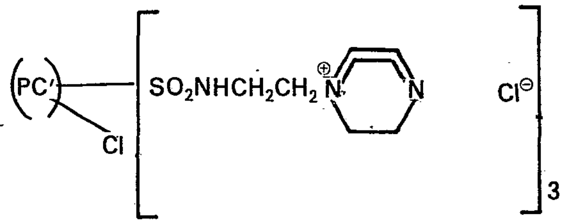 (217)

$\lambda_{max} = 675$ nm

und

(218) 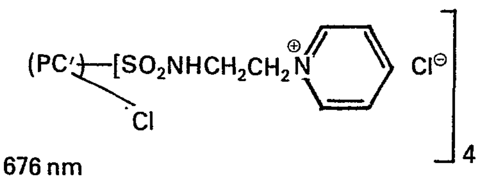

$\lambda_{max} = 676$ nm

Beispiel 3:

Nach der Vorschrift von Beispiel 3 der britischen Patentschrift GB-A-806,175 wird aus Aluminiumphthalocyanin das Präparat der Formel

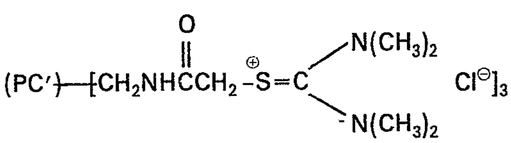 (300)

hergestellt, welches ebenfalls sehr gute Eigenschaften als Photoaktivator aufweist.

(PC′ = unsubstituiertes Aluminiumphthalocyaninringsystem).

Auf analoge Weise werden die folgenden Verbindungen erhalten:

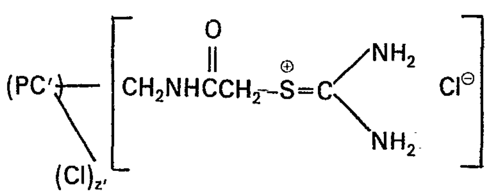 (301)

$\lambda_{max} = 680$ nm (für z′ = 0)

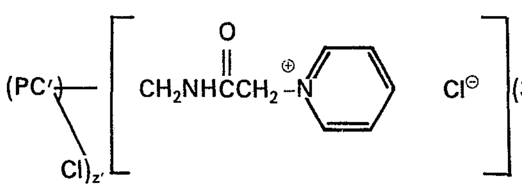 (302)

$\lambda_{max} = 676$ nm (für z′ =1)

z′ bedeutet in Formel (301) und (302) 0 oder 1.

Als Ausgangsprodukt wird eine Verbindung der Formel

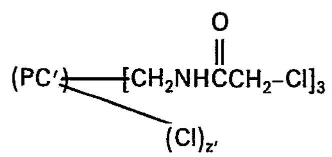 (303)

verwendet.

Beispiel 4:

10 Teile Tris-chlormethyl-aluminium-phthalocyanin werden in 60 Teilen Pyridin 15 Stunden bei 90 bis 95°C gerührt. Bei Raumtemperatur wird die Pyridinverbindung der Formel

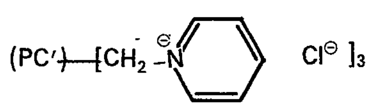 (400)

($\lambda_{max} = 678$ nm)

mit Aceton ausgefällt, abfiltriert, mit Aceton gewaschen und getrocknet.

(PC′ = unsubstituiertes Aluminiumphthalocyaninringsystem).

Weiter werden aus Tris-chlormethyl-aluminium-phthalocyanin als Ausgangsmaterial, wie vorstehend beschrieben, die folgenden Verbindungen erhalten:

a) durch Behandlung von Tris-chlormethyl-aluminium-phthalocyanin in einer Thioharnstoffschmelze bei 100°C die Verbindung der Formel

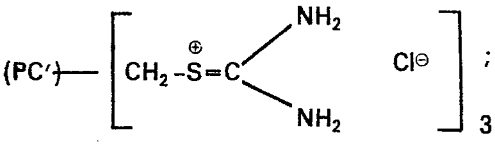
; (401)

$\lambda_{max}$ = 678 nm

b) durch Verschmelzen von Tris-chlormethyl-aluminium-phthalocyanin mit Tetramethylharnstoff die Verbindung der Formel

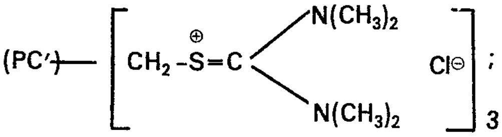
; (402)

c) durch Umsetzung von Tris-chlormethyl-aluminium-phthalocyanin mit wasserfreiem N,N-Dimethylhydrazin bei 60°C die Verbindung der Formel

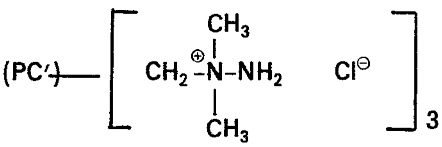
; (403)

d) durch Erwärmen von Tris-chlormethyl-aluminium-phthalocyanin in einer 25%igen wässrigen Lösung von Diazabicyclooctan auf 100°C die Verbindung der Formel

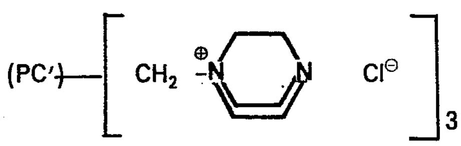
; (404)

e) durch Kondensation von Tris-chlormethyl-aluminium-phthalocyanin mit Nicotinsäure in Dimethylformamid bei 110 bis 115°C die Verbindung der Formel

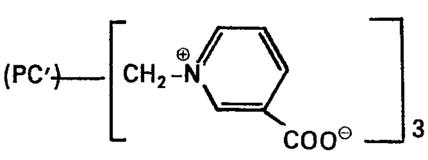
; (405)

f) durch Kondensation von Tris-chlormethyl-aluminium-phthalocyanin mit Morpholin und anschliessende Quaternierung mit Dimethylsulfat die Verbindung der Formel

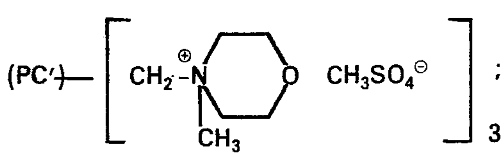
; (406)

$\lambda_{max}$ = 681 nm

g) durch Umsetzung von Tris-chlormethyl-aluminium-phthalocyanin mit Diäthanolamin und anschliessende Quaternierung mit Dimethylsulfat die Verbindung der Formel

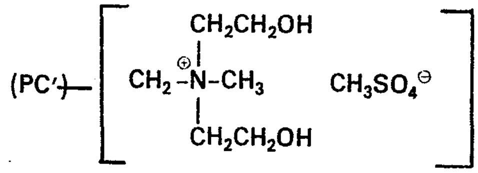
. (407)

(PC′ = unsubstituiertes Aluminiumphthalocyanin)

Geht man in obigen Vorschriften statt von unsubstituiertem Tris-chlormethyl-aluminium-phthalocyanin von einem mit Chlor, Brom oder Jod kernsubstituierten Tris-chlormethyl-aluminium-phthalocyanin aus, so erhält man die entsprechenden Verbindungen, die neben den quaternierten Substituenten nach Chlor-, Brom- oder Jodatome als Substituenten enthalten, beispielsweise die Verbindungen der Formeln

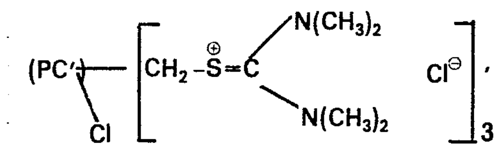
, (408)

$\lambda_{max}$ = 685 nm

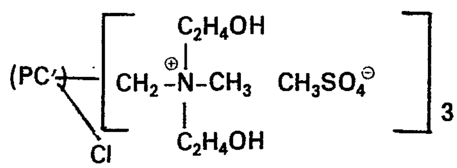
, (409)

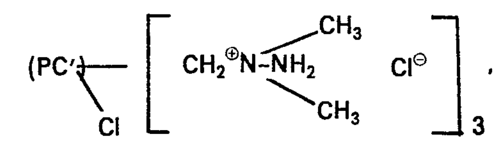
, (410)

$\lambda_{max}$ = 679 nm

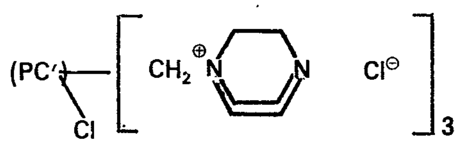
(411)

$\lambda_{max}$ = 677 nm

und

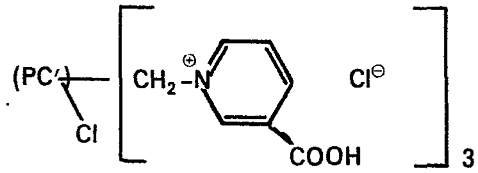
(412)

$\lambda_{max}$ = 673 nm.

Verwendet man statt gegebenenfalls chlor-, brom- oder jodsubstituiertes Tris-chlormethyl-aluminium-phthalocyanin jeweils den entsprechenden Zinkkomplex, so erhält man die entsprechenden Zinkphthalocyanine mit ähnlich guten Eigenschaften, beispielsweise die Verbindung der Formel

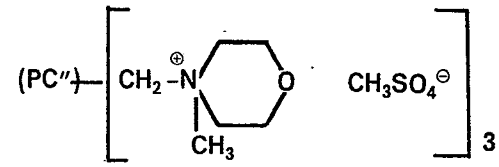
(413)

$\lambda_{max}$ = 629/335 nm

(PC″ = Zinkphthalocyaninringgerüst).

Beispiel 5:

10 Teile der Verbindung der Formel (100) werden in 50 Volumenteilen Dimethylmethanphosphonat suspendiert und 3 Stunden bei 90 bis 95°C gerührt. Die Reaktionsmasse wird im Vakuum zur Trockene eingedampft, der Rückstand in 200 Teilen Wasser aufgenommen, mit verdünnter Natriumhydroxidlösung neutral gestellt und wieder im Vakuum zur Trockene eingedampft. Man erhält 16 Teile eines blauen Pulvers, welches die Verbindung der Formel

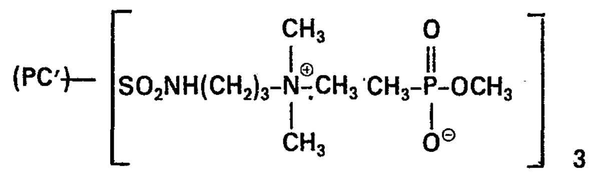
(500)

($\lambda_{max}$ = 674 nm)
enthält.

Die Anionen der in den Beispielen 1 bis 5 hergestellten Verbindungen können entweder nach üblichen Methoden durch andere Anionen ausgetauscht werden oder es können durch geeignete Quaternierungsmittel auch andere Anionen eingeführt werden. Die in den Beispielen 1 bis 5 hergestellten Verbindungen können als Anionen auch beispielsweise die folgenden enthalten: $Br^-$, $J^-$, andere Alkylsulfate als Methylsulfat, Sulfat, Aminosulfat, Perchlorat, Benzolsulfonat, Naphthalinsulfonat, p-Tolylsulfonat, p-Chlorphenylsulfonat, Sulfit, Carbonat, Bicarbonat, Phosphat, Nitrat, Acetat, Propionat, Oxalat, Maleinat, Malat, Citrat, Lactat, Succinat, Chloracetat, Tartrat, Methansulfonat, Benzoat u.a.

Beispiel 6:

Flüssige, kationenaktive Waschmittelformulierung mit Photobleichaktivität. Anwendung im Einweichverfahren.

Waschmittelformulierung:

60% eines mit 6,5 Äthylenoxidgruppen äthoxylierten Fettalkohols mit 12 bis 13 C-Atomen.

26,7% 1-Methyl-1-oleylamidoäthyl-2-oleyl-imidazolinium-methosulfat, 75% Aktivsubstanz.

0,4% blauer Farbstoff (Polar-Brillantblau, 0,5%ige Lösung).

1% Parfum

a) 0%, b) 0,004%, c) 0,01% des Photoaktivators (PC′) $-[SO_2NHCH_2CH_2-^{\oplus}-N(CH_3)_3CH_3SO_4^{\ominus}]_3$

ad 100% Wasser.

Einweichverfahren:

0,5 g eines gebleichten Baumwollgewebes, das analog Beispiel 9 der U.S. Patentschrift 4166718 mit einem dort beschriebenen braunen Farbstoff angeschmutzt worden war, wird zusammen mit 9,5 g eines nicht angeschmutzten, gebleichten Baumwollgewebes während 2 Stunden in 300 ml Wasser, das 1,5 g/l des oben beschriebenen Waschmittels enthält, bei 40°C eingeweicht (3 Ansätze entsprechend einem Photoaktivatorgehalt von a), b) und c)), wobei das Testgewebe (0,5 g) auf die oberste Lage des Ballastmaterials (9,5 g) gelegt ist. Das Einweichbad wird mit einer 200 Watt-Glühbirne bestrahlt, deren tiefster Punkt sich 10 cm über der Badoberfläche befindet.

Nach der Behandlung werden die Textilstücke während 30 Sekunden unter fliessendem Wasser gespült, zentrifugiert und bei 150°C gebügelt.

Dann werden die Testlappen mit dem Filter G des Filterspektrophotometers «Elrepho» der Fa. Zeiss hinsichtlich ihrer Helligkeitswerte gemessen. Die Unterschiede der Helligkeitswerte Δ Y) der mit den den Photoaktivator enthaltenden Waschmitteln behandelten Testlappen (Fälle b) und c)) gegenüber dem Helligkeitswert des Testlappens, der mit einem photoaktivatorfreien Waschmittel behandelt wurde (Fall a)), werden bestimmt. Sie stellen ein Mass für das Ausbleichen der Anschmutzung durch den Photoaktivator dar.

Gemessene Helligkeitsunterschiede (Δ Y):

b): Waschmittel mit 0,004% Photoaktivator:
$\Delta Y = 6,7$
c): Waschmittel mit 0,01% Photoaktivator:
$\Delta Y = 10,6$.

Beispiel 7:
Zum Vergleich wird Beispiel 6 wiederholt, jedoch wird dem Waschmittel als Fotoaktivator

1. Sulfoniertes Zinkphthalocyanin
2. Sulfoniertes Aluminiumphthalocyanin
3. Niedrig sulfoniertes Aluminiumphthalocyanin

zugegeben.
Auch in der Konzentration von 0,01% bewirken diese 3 Substanzen keinen sichtbaren Bleicheffekt auf den Testlappen ($\Delta Y$ innerhalb der Fehlergrenze).
Auch wenn zehnmal höhere Konzentrationen der Verbindungen 1, 2 und 3 eingesetzt werden, liegen die resultierenden Werte von $\Delta Y$ unter 1.

Beispiel 8:
Waschmittelformulierung wie in Beispiel 6; Anwendung durch Waschen und Belichten der Textilien ausserhalb des Bades.
Ein mit braunem Farbstoff angeschmutztes Baumwollgewebe (siehe Beispiel 6) wird in üblicher Weise bei einem Flottenverhältnis von 1:30 ohne Belichtung des Bades in einer Flotte gewaschen, die 1,5 g/l der in Beispiel 6 beschriebenen Waschmittelzusammensetzung enthält, während 20 Minuten bei 40°C gewaschen (3 Ansätze entsprechend einem Fotoaktivatorgehalt von 0, 0,004 und 0,01%). Die gewaschenen Gewebestükke werden kurz zentrifugiert und feucht an einer Leine bei Tageslicht aufgehängt. Die Gewebestücke werden so lange an der Leine hängen gelassen, bis eine Belichtung von 200 Langley erreicht ist, wobei sie nach 2 Stunden, um eine im Vergleich zur Praxis zu rasche Trocknung der kleinen Teststücke zu vermeiden, durch Besprühen mit einer Phosphatpufferlösung (pH 9) wieder befeuchtet werden.
Die Messung der Helligkeitswerte und die Feststellung der Unterschiede der Helligkeitswerte erfolgt wie in Beispiel 6 beschrieben. Es werden ausgezeichnete Bleicheffekte festgestellt:

Für Fall b) mit 0,004% Fotoaktivator ergibt sich ein $\Delta Y$-Wert von 3,7,
für Fall c) mit 0,01% Fotoaktivator ergibt sich ein $\Delta Y$-Wert von 21,1.

Wiederholt man Beispiel 8, setzt als Fotoaktivator jedoch die entsprechenden Mengen der Phthalocyaninverbindung der Formel

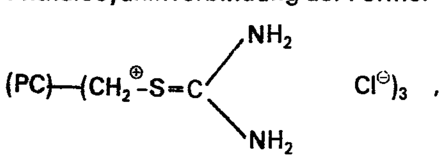

worin PC für Aluminium- oder Zinkphthalocyaninringgerüst steht, ein, so erhält man ähnlich gute Bleicheffekte wie mit dem in Beispiel 1 beschriebenen Fotoaktivator.

Beispiel 9:
Zum Vergleich wird Beispiel 8 wiederholt, jedoch mit den gleichen anionischen Fotoaktivatoren wie in Beispiel 7 angeführt.
Bei den Konzentrationen, in denen der kationische Fotoaktivator eingesetzt wird, wird mit den genannten anionischen bzw. schwach anionischen Verbindungen kaum ein sichtbarer Bleicheffekt erreicht. Erst bei viel höheren Konzentrationen sind schwache Effekte feststellbar, z.B.:

| | $\Delta Y$ |
|---|---|
| 0,1% sulfoniertes Zn-Phthalocyanin | 2,5 |
| 0,1% sulfoniertes Al-Phthalocyanin | 4,9 |
| 0,1% schwach sulfoniertes Al-Phthalocyanin | 3,8 bis 4,1. |

Beispiel 10:
Weichspülmittelformulierung
Ein Weichspülmittel wird wie folgt bereitet:
Zu 7% Distearyldimethylammoniumchlorid 75%, geschmolzen, werden 93% deionisiertes Wasser von 60°C tropfenweise unter ständigem Rühren zugegeben. Sodann wird 0,03% des in Beispiel 6 angeführten Fotoaktivators zugefügt. Ein Vergleichsmittel wird ohne Fotoaktivator bereitet.
Nach dem Abkühlen wird das Weichspülmittel wie folgt zum Spülen eines mit einem braunen Farbstoff (siehe Beispiel 6) angeschmutzten Baumwollgewebes benutzt:
Die Gewebestücke werden im Flottenverhältnis 1:20 20 Minuten bei 25°C in einer Flotte gespült, die 2 g/l des oben beschriebenen Weichspülmittels enthält. Nach dem Zentrifugieren werden die Gewebestücke feucht wie in Beispiel 8 beschrieben zum Trocknen an die Leine gehängt und bis 200 Langley belichtet.
Die Feststellung der Helligkeit bzw. der Helligkeitsunterschiede als Mass für den Bleichgrad erfolgt wie in Beispiel 6 beschrieben. Das mit dem photoaktivatorhaltigen Spülmittel behandelte Testgewebe weist einen deutlichen Bleicheffekt gegenüber jenem auf, das in einer photoaktivatorfreien Spülflotte behandelt wurde. Der Helligkeitsunterschied $\Delta Y$ beträgt 4,8 (bei einem Gehalt an Fotoaktivator im Spülmittel von 0,03%).

Beispiel 11:
Zum Vergleich werden wieder die in Beispiel 7 angeführten sulfonierten Phthalocyaninderivate herangezogen. Bei Wiederholung der Vorschrift von Beispiel 10, jedoch mit den eben erwähnten anionischen Fotoaktivatoren im Spülmittel (0,03%), kann kein Bleicheffekt auf den Testgeweben festgestellt werden. Auch mit erhöhten Konzentrationen (ca. 0,1%) an diesen anionischen Fotoaktivatoren resultieren lediglich Bleicheffekte ($\Delta Y$) von unter 1.

Beispiel 12:

Beispiel 10 wird wiederholt, jedoch als Weichmacher in gleicher Konzentration 1-Methyl-1-talgamido-äthyl-2-talg-imidazolinium-methosulfat eingesetzt (Gehalt an Fotoaktivator gleichbleibend 0,03%). In diesem Fall wird wieder ein deutlicher Bleicheffekt, nämlich ein solcher von $\Delta Y = 5{,}3$ erzielt.

Beispiel 13:

Je 1g schwere Proben eines gebleichten Baumwollgewebes, das analog Beispiel 9 der U.S. Patentschrift 4,166,718 mit einem dort beschriebenen braunen Farbstoff angeschmutzt worden war, werden in einer mit Natriumtripolyphosphat auf einen pH-Wert von 8 bzw. 9 eingestellten Flotte, die 2 g/l eines Waschmittels der folgenden Zusammensetzung

55 Teile Wasser
15 Teile Äthanol
2 Teile Citronensäure

20 Teile eines äthoxylierten Fettamins
8 Teile eines 75%igen Dialkyldimethylammoniumchlorids (Alkylgruppen: 24 Teile Palmityl, 75 Teile Stearyl, 1 Teil Oleyl)

und 0 oder 0,0075% bezogen auf das Gewicht des Testgewebes, des Fotoaktivators der Formel

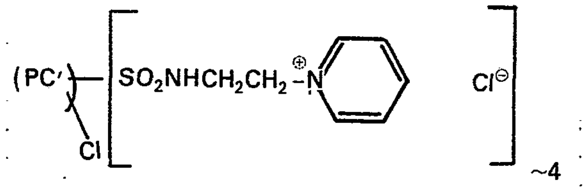

enthält, bei 50°C unter Rühren und Belichten mit einer 250 W IR-Lampe (Abstand von der Flottenoberfläche: 15 cm) eine Stunde lang behandelt. Danach werden die Gewebeproben gespült, getrocknet und gebügelt. Hierauf werden die Helligkeitswerte der Testlappen bestimmt, wie in Beispiel 6 beschrieben.

Es werden die Unterschiede der Helligkeitswerte ($\Delta Y$) der beiden Testlappen (eines mit photoaktivatorhaltigem Waschmittel gewaschen, der andere ohne Fotoaktivator) berechnet:

Bei pH 8 des Waschbades ergab sich ein $\Delta Y$ von 9,8,
bei pH 9 des Waschbades ergab sich ein $\Delta Y$ von 20,2.

Das eben beschriebene Waschverfahren wird mit einigen anderen aus der nachfolgenden Tabelle ersichtlichen Fotoaktivatoren wiederholt. Dabei werden die ebenfalls aus der Tabelle ersichtlichen Unterschiede der Helligkeitswerte ($\Delta Y$) erreicht.

Tabelle

| Photoaktivator | ΔY pH = 8 | ΔY pH = 9 |
|---|---|---|
| $(PC')\!-\![SO_2NH\text{-}(CH_2)_3\overset{\oplus}{N}(CH_3)_3\ \ CH_3SO_4^{\ominus}]_3$ | 15,4 | 25,1 |
| $(PC')\!-\![SO_2NH\text{-}(CH_2)_2\overset{\oplus}{N}(CH_3)_3\ \ CH_3SO_4^{\ominus}]_3$ | 15,8 | 23,6 |
| 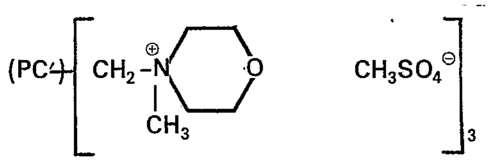 | 3,0 | 6,3 |
| 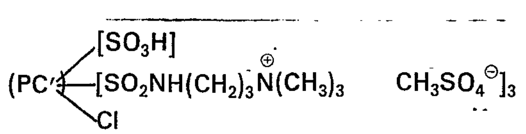 | 11,3 | 19,2 |
| 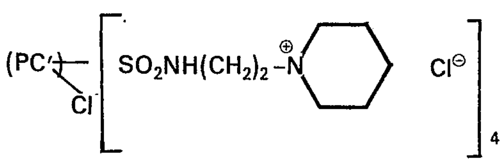 | 9,8 | 20,2 |
| 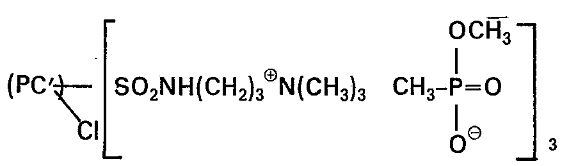 | 16,9 | 19,9 |

Wiederholt man das in Beispiel 13 angegebene Waschverfahren, verwendet jedoch als Fotoaktivator jeweils eine der Verbindungen der Formeln (103)-(110),(112), (200)-(217), (300)-(302), (400)-(405) und (407)-(413), so erhält man ebenfalls Testgewebe mit ähnlich guten Helligkeitswerten.

**Patentansprüche für die Vertragsstaaten: BE, CH, LI, DE, FR, GB, IT, LU, NL, SE**

1. Textilbehandlungsmittel mit einem Gehalt an einem Photobleichmittel, dadurch gekennzeichnet, dass es mit kationischen Gruppen substituierte wasserlösliche Aluminium- oder Zinkphthalocyanine als Photobleichmittel und kationische Textilbehandlungsmittel wie z.B. kationische Tenside, Weichmacher, Antistatika, optische Aufheller und/oder Antimikrobika enthält.

2. Mittel nach Anspruch 1, dadurch gekennzeichnet, dass die darin enthaltenen Aluminium- und Zinkphthalocyanine quaternäre Ammoniumgruppen und ternäre Sulfoniumgruppen und gegebenenfalls auch noch anionische oder/und nicht-ionische Gruppen enthalten.

3. Mittel nach Anspruch 2, dadurch gekennzeichnet, dass es ein Phthalocyanin der Formel

$(PC)-(^{\oplus}R)_v \quad A_w^{\ominus}$

enthält, worin PC das unsubstituierte Zink- oder Aluminium-phthalocyaninringsystem, v eine beliebige Zahl zwischen 1 und 4 und $^{\oplus}R$ eine Gruppe der Formel

$-SO_2X_1-R_1-X^{\oplus}$ , $-O-R_1-X^{\oplus}$

$-(CH_2)_n-Y^{\oplus}$ oder $-CH_2NHCOCH_2-Y^{\oplus}$

bedeuten worin n für 0 oder 1 steht, $R_1$ unverzweigtes oder verzweigtes Alkylen mit 1 bis 8 C-Atomen oder 1,3- oder 1,4-Phenylen, $X_1$ NH oder N-Alkyl, $X^{\oplus}$ eine Gruppe der Formel

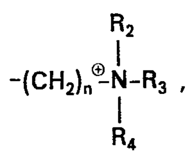 , 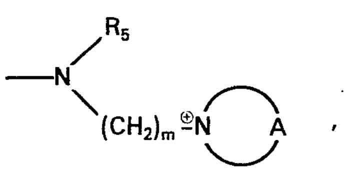 ,

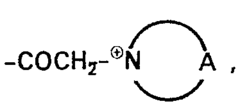 , 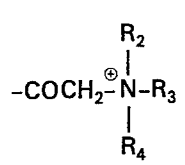

und für den Fall, das $R_1$ = Alkylen, auch eine Gruppe der Formel

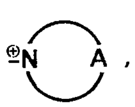 , 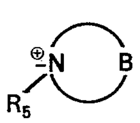 , 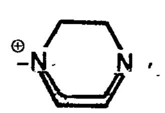 ,

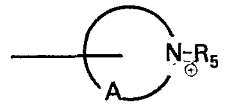 ,

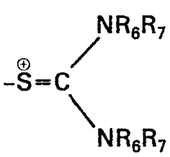 oder 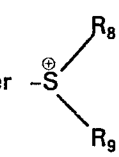 ,

$Y^{\oplus}$ eine Gruppe der Formel 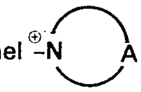 ,

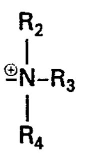 , 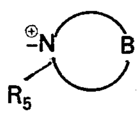 , 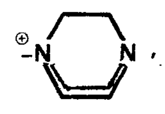 ,

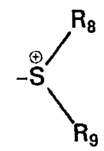 , 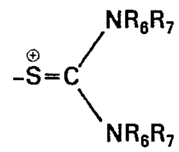 oder 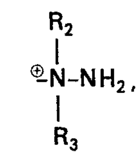 ,

wobei in obigen Formeln n für 0 oder 1 steht, $R_2$ und $R_3$ unabhängig voneinander für gegebenenfalls substituiertes Alkyl mit 1 bis 6 C-Atomen, $R_4$ für gegebenenfalls substituiertes Alkyl mit 1 bis 6 C-Atomen, Cycloalkyl mit 3 bis 7 C-Atomen oder die Gruppe $NR_6R_7$, $R_5$ für Alkyl, $R_6$ und $R_7$ unabhängig voneinander für Wasserstoff oder gegebenenfalls substituiertes Alkyl, $R_8$ und $R_9$ unabhängig voneinander für einen gegebenenfalls substituierten Alkyl- oder Aralkylrest, m für eine ganze Zahl zwischen 1 und 6, A für die Ergänzung zu einem aromatischen 5- bis 7-gliedrigen Stickstoffheterocyclus, der gegebenenfalls noch ein oder zwei weitere Stickstoffatome als Ringglieder enthalten kann und der gegebenenfalls verschiedene Substituenten tragen kann, und B für die Ergänzung zu einem gesättigten 5- bis 7-gliedrigen Stickstoffheterocyclus, der gegebenenfalls noch 1 bis 2 Stickstoff-, Sauerstoff- und/oder Schwefelatome als Ringglieder enthalten kann und der gegebenenfalls verschiedene weitere Substituenten tragen kann, stehen, und $A^{\ominus}$ ein anorganisches oder organisches Anion bedeuten, und w im Falle einwertiger Anionen $A^{\ominus}$ gleich v und im Falle mehrwertiger Anionen $\leqq$ v ist, wobei $A^{\ominus}_w$ die positive Ladung kompensieren muss; wobei, v $\neq$ 1, die Reste $^{\oplus}R$ gleich oder verschieden sein können, und wobei das Phthalocyaninringsystem auch noch weitere wasserlöslichmachende Gruppen, z.B. anionische, wie Sulfogruppen enthalten kann und wobei alle Substituenten an die Phenylkerne des Phthalocyaninringsystems gebunden sind.

4. Mittel nach Anspruch 2, dadurch gekennzeichnet, dass es ein Phthalocyanin der Formel

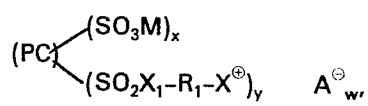

worin PC, $X_1$, $X^{\oplus}$, $R_1$ und $A^{\ominus}$ wie in Anspruch 3 definiert sind, M für Wasserstoff, ein Alkalimetall-, Ammonium- oder Aminsalzion steht und die Summe der Zahlen x und y zwischen 1 und 4 liegt und $A^{\ominus}_{w'}$ die positive Ladung des Restmoleküls genau kompensiert, oder ein Phthalocyanin der Formel

$(PC)—(SO_2NHR_1'-X'^{\oplus} \quad A'^{\ominus})_v$

enthält, worin PC wie in Anspruch 3 definiert ist, $R_1'$ Alkylen mit 2 bis 6 C-Atomen, v eine beliebige Zahl zwischen 1 und 4, $X'^{\oplus}$ eine Gruppe der Formel

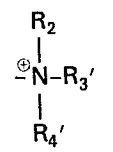 ,

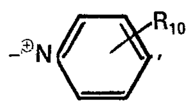 , 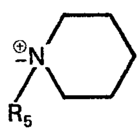 oder 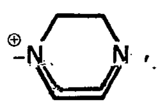 ,

worin $R_2$ und $R_3$ unabhängig voneinander für unsubstituiertes oder durch Hydroxy, Cyano, Halogen oder Phenyl substituiertes Alkyl mit 1 bis 4 C-Atomen stehen, $R_4$ die Bedeutung von $R_2$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Reste $-SO_2NHR_1'-X^{\oplus}A^{\ominus}$ gleich oder verschieden sein können.

5. Mittel nach Anspruch 2, dadurch gekennzeichnet, dass es ein Phthalocyanin der Formel

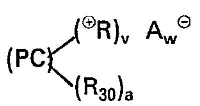

oder Mischungen dieser Phthalocyanine enthält, worin PC, ${}^{\oplus}R$, v, $A^{\ominus}$ und w wie in Anspruch 3 definiert sind, $R_{30}$ einen nicht-ionischen Substituenten, insbesondere ein Fluor-, Chlor-, Brom- oder Jodatom oder Cyano bedeutet und a für eine beliebige Zahl zwischen 0,1 und 4 steht, wobei die im Molekül vorhandenen $R_{30}$ gleich oder verschieden sein können, insbesondere ein solches der Formel

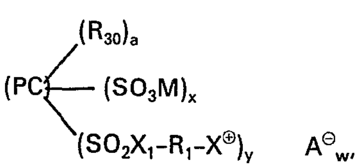

oder Mischungen dieser Phthalocyanine, worin PC, $X_1$, $X^{\oplus}$, $R_1$, $A^{\ominus}$, x, y und w' wie in Anspruch 4 und $R_{30}$ und a wie oben definiert sind, wobei bevorzugt $R_{30}$ Chlor und a eine Zahl zwischen 0,5 und 4 bedeuten, vorzugsweise ein solches der Formel

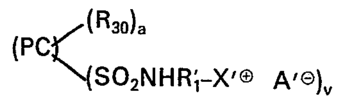

oder Mischungen dieser Phthalocyanine enthält, worin PC, $R_1'$, $X'^{\oplus}$, $A'^{\ominus}$ und v wie in Anspruch 4 und $R_{30}$ und a wie vorstehend definiert sind.

6. Mittel nach Anspruch 1, dadurch gekennzeichnet, das es 0,0005 bis 1,5 Gew.-%, bezogen auf das Gesamtmittel, an Photobleichmittel enthält.

7. Mittel nach Anspruch 1, dadurch gekennzeichnet, dass es als kationisches Textilbehandlungsmittel ein kationisches heterocyclisches Imid oder eine aliphatische quaternäre Ammoniumverbindung enthält.

8. Mittel nach Anspruch 7, dadurch gekennzeichnet, dass es als kationisches Textilbehandlungsmittel ein quaternäres Ammoniumsalz der Formel

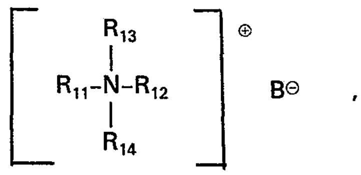 ,

worin $R_{11}$ Wasserstoff oder eine aliphatische Gruppe mit 1 bis 22 C-Atomen, $R_{12}$ eine aliphatische Gruppe mit 10 bis 22 C-Atomen und $R_{13}$ und $R_{14}$ unabhängig voneinander Alkyl mit 1 bis 4 C-Atomen und $B^{\ominus}$ ein Anion bedeuten, oder/und ein quaternäres Imidazoliniumsalz der Formel

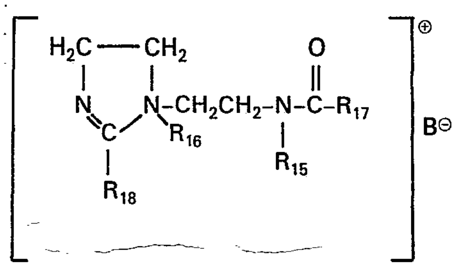 ,

worin $R_{15}$ Wasserstoff oder Alkyl mit 1 bis 4 C-Atomen, $R_{16}$ Alkyl mit 1 bis 4 C-Atomen, $R_{17}$ Alkyl mit 1 bis 22 C-Atomen, $R_{18}$ Wasserstoff oder Alkyl mit 1 bis 22, vorzugsweise 15 bis 22 C-Atomen und $B^{\ominus}$ ein Anion bedeuten, und/oder ein Tensid der Formel

$R_{20}{}^{\oplus}N(R_{21})_3B^{\ominus}$ ,

worin $R_{20}$ verzweigtes oder unverzweigtes Alkyl oder Alkenyl mit 8 bis 22 C-Atomen, $R_{21}$, die gleich oder verschieden sein können, Alkyl oder Hydroxyalkyl mit 1 bis 4 C-Atomen oder Benzyl, wobei nur ein $R_{21}$ im Molekül für Benzyl stehen kann, und $B^{\ominus}$ ein Anion bedeuten, der Formel

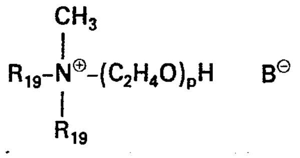

und/oder der Formel

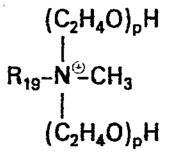

enthält, worin $R_{19}$ Alkyl mit 10 bis 20 C-Atomen, p eine Zahl zwischen 1 und 20 und $B^\ominus$ ein Anion bedeuten.

9. Mittel nach Anspruch 1, dadurch gekennzeichnet, dass es das kationische Textilbehandlungsmittel in einer Menge von 1 bis 50%, bezogen auf das Gesamtmittel, enthält.

10. Mittel nach Anspruch 1, dadurch gekennzeichnet, dass es zusätzlich ein oder mehrere nicht-ionische Tenside, oder/und übliche Waschmittelbestandteile wie z.B. übliche Bleichmittel wie Peroxidbleichmittel, optische Aufheller, Wasser und/oder mit Wasser mischbare organiche Lösungsmittel, oder/und einen Weichmacher aus der Gruppe der zwitter-ionischen quaternären Ammoniumverbindungen, nicht-ionischen tertiären Phosphinoxide, nicht-ionischen tertiären Aminoxide, nicht-ionischen äthoxylierten Alkohole, äthoxylierten Alkoholsulfate, synthetischen anionischen $C_8$-$C_{20}$-Alkylsulfattenside und ampholytischen synthetischen Tenside enthält.

11. Mittel nach einem der Ansprüche 1 bis 10, dadurch gekennzeichnet, das es einen alkalischen pH-Wert aufweist, insbesondere einen solchen zwischen 7 und 10.

12. Verfahren zum Waschen, Spülen und Bleichen von Textilien, dadurch gekennzeichnet, dass man diese in einer wässrigen Flotte behandelt, die ein in den Ansprüchen 1 bis 11 definiertes Mittel enthält, und die vorzugsweise einen alkalischen pH-Wert, vorzugsweise einen solchen zwischen 7 und 12, insbesondere zwischen 8 und 10 aufweist, wobei die Textilien in der Flotte oder anschliessend in feuchtem Zustand mit sichtbarem und/oder infrarotem Licht bestrahlt werden.

13. Phthalocyaninverbindungen der Formel

$$(PC)\text{—}(SO_2X_1\text{-}R_1\text{-}X^\oplus)_v \qquad A^\ominus_w\ ,$$

worin PC das unsubstituierte Zink- oder Aluminiumphthalocyaninringsystem, v eine beliebige Zahl zwischen 1 und 4, $R_1$ unverzweigtes oder verzweigtes Alkylen mit 1 bis 8 C-Atomen oder 1,3- oder 1,3-Phenylen, $X_1$NH oder N-Alkyl, $X^\oplus$ eine Gruppe der Formel

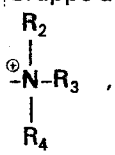 ,

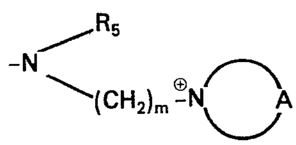 ,

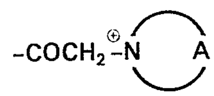 ,

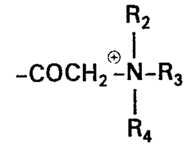 und

für den Fall, dass $R_1$ = Alkylen, auch eine Gruppe der Formel

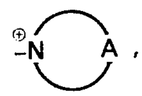 ,

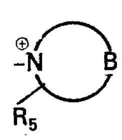 ,

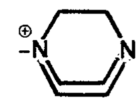 ,

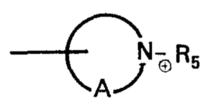 ,

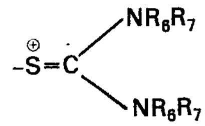

oder 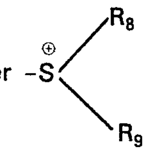 ,

wobei in obigen Formeln $R_2$ und $R_3$ unabhängig voneinander für gegebenenfalls substituiertes Alkyl mit 1 bis 6 C-Atomen, $R_4$ für gegebenenfalls substituiertes Alkyl mit 1 bis 6 C-Atomen, Cycloalkyl mit 3 bis 7 C-Atomen oder die Gruppe $NR_6R_7$, $R_5$ für Alkyl, $R_6$ und $R_7$ unabhängig voneinander für Wasserstoff oder gegebenenfalls substituiertes Alkyl, $R_8$ und $R_9$ unabhängig voneinander für einen gegebenenfalls substituierten Alkyl- oder Aralkylrest, m für eine ganze Zahl zwischen 1 und 6, A für die Ergänzung zu einem aromatischen 5- bis 7-gliedrigen Stickstoffheterocyclus, der gegebenenfalls noch ein oder zwei weitere Stickstoffatome als Ringglieder enthalten kann und der gegebenenfalls verschiedene Substituenten tragen kann, und B für die Ergänzung zu einem gesättigten 5-bis 7-gliedrigen Stickstoffheterocyclus, der gegebenenfalls noch 1 bis 2 Stickstoff-, Sauerstoff- und/oder Schwefelatome als Ringglieder enthalten kann und der gegebenenfalls verschiedene weitere Substituenten tragen kann, stehen,

und $A^\ominus$ ein anorganisches oder organisches Anion bedeuten, und w im Falle einwertiger Anionen $A^\ominus$ gleich v und im Falle mehrwertiger Anionen $\leq$ v ist, wobei $A^\ominus_w$ die positive Ladung kompensieren muss; wobei, wenn v $\neq$ l, die Reste gleich oder verschieden sein können, und wobei das Phthalocyaninringsystem auch noch weitere wasserlöslichmachende Gruppen, z.B. anionische, wie Sulfogruppen, enthalten kann und wobei alle Substituenten an die Phenylkerne des Phthalocyaninringsystems gebunden sind, insbesondere solche der Formel

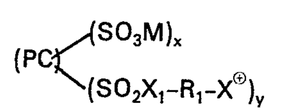 $A^\ominus_w$,

worin PC, $X_1$, $X^\oplus$, $R_1$ und $A^\ominus$ wie oben definiert sind, M für Wasserstoff, ein Alkalimetall-, Ammonium- oder Aminsalzion steht und die Summe

der Zahlen x und y zwischen 1 und 4 liegt und $A^{\ominus}_{w'}$ die positive Ladung des Restmoleküls genau kompensiert, vorzugsweise solche der Formel

$$(PC)\!\!-\!\!\!-(SO_2NHR_1'\text{-}X'^{\oplus} \quad A'^{\ominus})_v \;,$$

worin PC wie oben definiert ist, $R_1'$ Alkylen mit 2 bis 6 C-Atomen, v eine beliebige Zahl zwischen 1 und 4, $X'^{\oplus}$ eine Gruppe der Formel

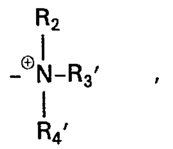

,

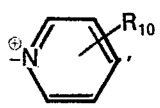

,

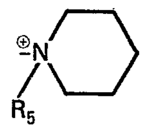

oder

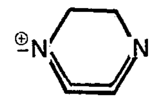

worin $R_2$ und $R'_3$ unabhängig voneinander für unsubstituiertes oder durch Hydroxy, Cyano, Halogen oder Phenyl substituiertes Alkyl mit 1 bis 4 C-Atomen stehen, $R'_4$ die Bedeutung von $R_2$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Reste $-SO_2NHR_1'\text{-}X^{\oplus}A^{\ominus}$ gleich oder verschieden sein können.

14. Phthalocyaninverbindungen der Formel

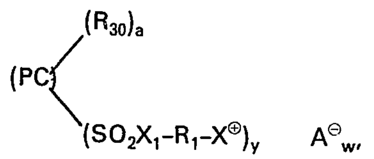

,

worin PC, $X_1$, $R_1$, $X^{\oplus}$, $A^{\ominus}$, v und w wie in Anspruch 13 definiert sind und $R_{30}$ einen nicht-ionischen Substituenten, insbesondere ein Fluor-, Chlor-, Brom- oder Jodatom oder Cyano bedeutet und a für eine beliebige Zahl zwischen 0,1 und 4 steht, wobei die im Molekül vorhandenen $R_{30}$ gleich oder verschieden sein können, insbesondere solche der Formel

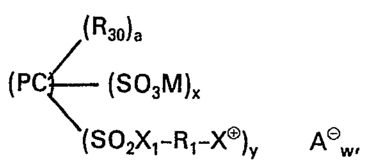

,

worin PC, $X_1$, $R_1$, $X^{\oplus}$ und $A^{\ominus}$ wie in Anspruch 13 definiert sind, M für Wasserstoff, ein Alkalimetall-, Ammonium- oder Aminsalzion steht und die Summe der Zahlen x und y zwischen 1 und 4 liegt und $A^{\ominus}_{w'}$ die positive Ladung des Restmoleküls genau kompensiert und $R_{30}$ einen nicht-ionischen Substituenten, insbesondere ein Fluor-, Chlor-, Brom- oder Jodatom oder Cyano bedeutet und a für eine beliebige Zahl zwischen 0,1 und 4 steht, wobei die im Molekül vorhandenen $R_{30}$ gleich oder verschieden sein können, vorzugsweise solche der Formel

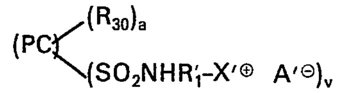

,

worin PC wie oben definiert ist, $R_1'$ Alkylen mit 2 bis 6 C-Atomen, v eine beliebige Zahl zwischen 1 und 4, $X'^{\oplus}$ eine Gruppe der Formel

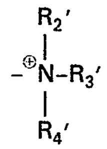

,

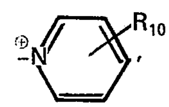

,

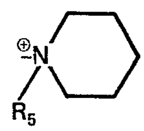

oder

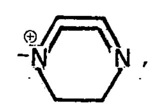

,

worin $R_2'$ und $R_3'$ unabhängig voneinander für unsubstituiertes oder durch Hydroxy, Cyano, Halogen oder Phenyl substituiertes Alkyl mit 1 bis 4 C-Atomen stehen, $R_4'$ die Bedeutung von $R_2'$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Reste $-SO_2NHR_1'\text{-}X^{\oplus}A^{\ominus}$ gleich oder verschieden sein können und worin $R_{30}$ und a wie oben definiert sind, wobei bevorzugt $R_{30}$ Chlor und a eine Zahl zwischen 0,5 und 4 bedeuten.

**Patentansprüche für den Vertragsstaat A:**

1. Textilbehandlungsmittel mit einem Gehalt an einem Photobleichmittel, dadurch gekennzeichnet, dass es mit kationischen Gruppen substituierte wasserlösliche Aluminium- oder Zinkphthalocyanine als Photobleichmittel und kationische Textilbehandlungsmittel wie z.B. kationische Tenside, Weichmacher, Antistatika, optische Aufheller und/oder Antimikrobika enthält.

2. Mittel nach Anspruch 1, dadurch gekennzeichnet, dass die darin enthaltenen Aluminium- und Zinkphthalocyanine quaternäre Ammoniumgruppen und ternäre Sulfoniumgruppen und gegebenenfalls auch noch anionische oder/und nicht-ionische Gruppen enthalten.

3. Mittel nach Anspruch 2, dadurch gekennzeichnet, dass es ein Phthalocyanin der Formel

$$(PC)\!-\!({}^{\oplus}R)_v \quad A_w^{\ominus}$$

enthält, worin PC das unsubstituierte Zink- oder Aluminium-phthalocyaninringsystem, v eine beliebige Zahl zwischen 1 und 4 und ${}^{\oplus}R$ eine Gruppe der Formel

$-SO_2X_1-R_1-X^{\oplus}$ , $-O-R_1-X^{\oplus}$

$-(CH_2)_n-Y^{\oplus}$ oder $-CH_2NHCOCH_2-Y^{\oplus}$

bedeuten, worin n für 0 oder 1 steht, $R_1$ unverzweigtes oder verzweigtes Alkylen mit 1 bis 8 C-Atomen oder 1,3- oder 1,4-Phenylen, $X_1$ NH oder N-Alkyl, $X^{\oplus}$ eine Gruppe der Formel

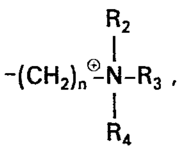 , 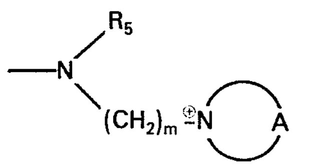 ,

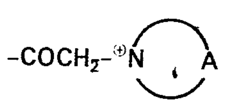 , 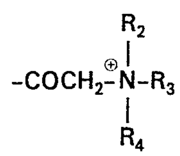

und für den Fall, dass $R_1$ = Alkylen, auch eine Gruppe der Formel

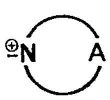 , 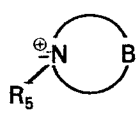 , 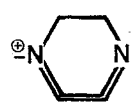 ,

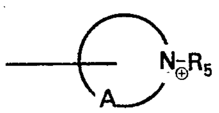 ,

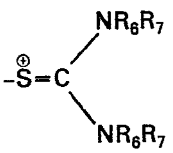 oder 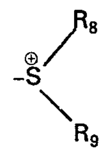 ,

$Y^{\oplus}$ eine Gruppe der Formel 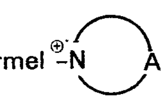 ,

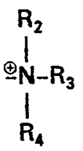 , 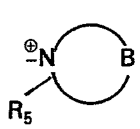 , 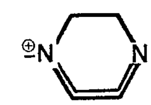 ,

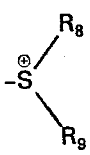 , 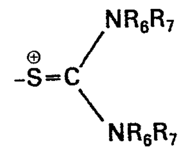 oder 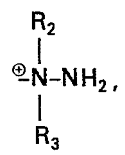

wobei in obigen Formeln n für 0 oder 1 steht, $R_2$ und $R_3$ unabhängig voneinander für gegebenenfalls substituiertes Alkyl mit 1 bis 6 C-Atomen, $R_4$ für gegebenenfalls substituiertes Alkyl mit 1 bis 6 C-Atomen, Cycloalkyl mit 3 bis 7 C-Atomen oder die Gruppe $NR_6R_7$, $R_5$ für Alkyl, $R_6$ und $R_7$ unabhängig voneinander für Wasserstoff oder gegebenenfalls substituiertes Alkyl, $R_8$ und $R_9$ unabhängig voneinander für einen gegebenenfalls substituierten Alkyl- oder Aralkylrest, m für eine ganze Zahl zwischen 1 und 6, A für die Ergänzung zu einem aromatischen 5- bis 7-gliedrigen Stickstoffheterocyclus, der gegebenenfalls noch ein oder zwei weitere Stickstoffatome als Ringglieder enthalten kann und der gegebenenfalls verschiedene Substituenten tragen kann, und B für die Ergänzung zu einem gesättigten 5- bis 7-gliedrigen Stickstoffheterocyclus, der gegebenenfalls noch 1 bis 2 Stickstoff-, Sauerstoff- und/oder Schwefelatome als Ringglieder enthalten kann und der gegebenenfalls verschiedene weitere Substituenten tragen kann, stehen,

und $A^{\ominus}$ ein anorganisches oder organisches Anion bedeuten, und w im Falle einwertiger Anionen $A^{\ominus}$ gleich v und im Falle mehrwertiger Anionen $\leq$ v ist, wobei $A^{\ominus}_w$ die positive Ladung kompensieren muss; wobei, v $\neq$ 1, die Reste $^{\oplus}R$ gleich oder verschieden sein können, und wobei das Phthalocyaninringsystem auch noch weitere wasserlöslichmachende Gruppen, z.B. anionische, wie Sulfogruppen enthalten kann und wobei alle Substituenten an die Phenylkerne des Phthalocyaninringsystems gebunden sind.

4. Mittel nach Anspruch 2, dadurch gekennzeichnet, dass es ein Phthalocyanin der Formel

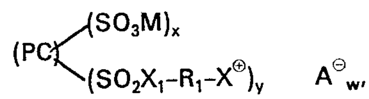

worin PC, $X_1$, $X^{\oplus}$, $R_1$ und $A^{\ominus}$ wie in Anspruch 3 definiert sind, M für Wasserstoff, ein Alkalimetall-, Ammonium- oder Aminsalzion steht und die Summe der Zahlen x und y zwischen 1 und 4 liegt und $A^{\ominus}_w$, die positive Ladung des Restmoleküls genau kompensiert, oder ein Phthalocyanin der Formel

$(PC)\!-\!\!-(SO_2NHR_1'-X'^{\oplus} \quad A'^{\ominus})_v$

enthält, worin PC wie in Anspruch 3 definiert ist, $R_1'$ Alkylen mit 2 bis 6 C-Atomen, v eine beliebige Zahl zwischen 1 und 4, $X'^{\oplus}$ eine Gruppe der Formel

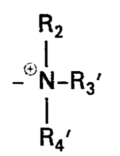 ,

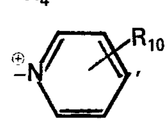 , 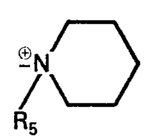 oder 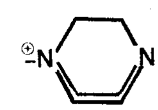 ,

worin $R_2$ und $R_3$ unabhängig voneinander für unsubstituiertes oder durch Hydroxy, Cyano, Halogen oder Phenyl substituiertes Alkyl mit 1 bis 4 C-Atomen stehen, $R_4$ die Bedeutung von $R_2$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Re-

ste $-SO_2NHR_1'-X^{\oplus}A^{\ominus}$ gleich oder verschieden sein können.

5. Mittel nach Anspruch 2, dadurch gekennzeichnet, dass es ein Phthalocyanin der Formel

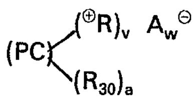

oder Mischungen dieser Phthalocyanine enthält, worin PC, $^{\oplus}R$, v, $A^{\ominus}$ und w wie in Anspruch 3 definiert sind, $R_{30}$ einen nicht-ionischen Substituenten, insbesondere ein Fluor-, Chlor-, Brom- oder Jodatom oder Cyano bedeutet und a für eine beliebige Zahl zwischen 0,1 und 4 steht, wobei die im Molekül vorhandenen $R_{30}$ gleich oder verschieden sein können, insbesondere ein solches der Formel

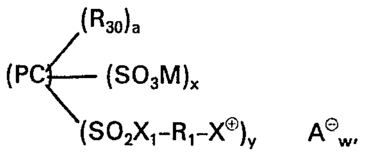

,

oder Mischungen dieser Phthalocyanine, worin PC, $X_1$, $X^{\oplus}$, $R_1$, $A^{\ominus}$, x, y und w' wie in Anspruch 4 und $R_{30}$ und a wie oben definiert sind, wobei bevorzugt $R_{30}$ Chlor und a eine Zahl zwischen 0,5 und 4 bedeuten, vorzugsweise ein solches der Formel

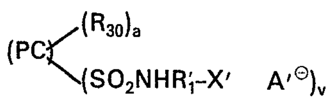

,

oder Mischungen dieser Phthalocyanine enthält, worin PC, $R_1'$, $X'^{\oplus}$, $A'^{\ominus}$ und v wie in Anspruch 4 und $R_{30}$ und a wie vorstehend definiert sind.

6. Mittel nach Anspruch 1, dadurch gekennzeichnet, das es 0,0005 bis 1,5 Gew.-%, bezogen auf das Gesamtmittel, an Photobleichmittel enthält.

7. Mittel nach Anspruch 1, dadurch gekennzeichnet, dass es als kationisches Textilbehandlungsmittel ein kationisches heterocyclisches Imid oder eine aliphatische quaternäre Ammoniumverbindung enthält.

8. Mittel nach Anspruch 7, dadurch gekennzeichnet, dass es als kationisches Textilbehandlungsmittel ein quaternäres Ammoniumsalz der Formel

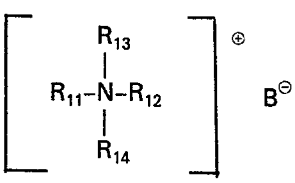

,

worin $R_{11}$ Wasserstoff oder eine aliphatische Gruppe mit 1 bis 22 C-Atomen, $R_{12}$ eine aliphatische Gruppe mit 10 bis 22 C-Atomen und $R_{13}$ und $R_{14}$ unabhängig voneinander Alkyl mit 1 bis 4 C-Atomen und $B^{\ominus}$ ein Anion bedeuten, oder/und ein quaternäres Imidazoliniumsalz der Formel

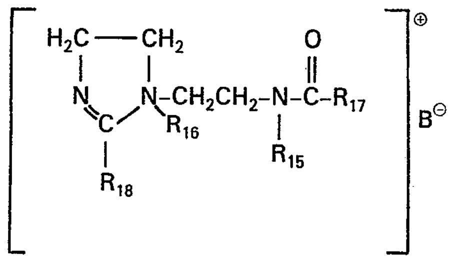

,

worin $R_{15}$ Wasserstoff oder Alkyl mit 1 bis 4 C-Atomen, $R_{16}$ Alkyl mit 1 bis 4 C-Atomen, $R_{17}$ Alkyl mit 1 bis 22 C-Atomen, $R_{18}$ Wasserstoff oder Alkyl mit 1 bis 22, vorzugsweise 15 bis 22 C-Atomen und $B^{\ominus}$ ein Anion bedeuten, und/oder ein Tensid der Formel

$R_{20}{}^{\oplus}N(R_{21})_3B^{\ominus}$,

worin $R_{20}$ verzweigtes oder unverzweigtes Alkyl oder Alkenyl mit 8 bis 22 C-Atomen, $R_{21}$, die gleich oder verschieden sein können, Alkyl oder Hydroxyalkyl mit 1 bis 4 C-Atomen oder Benzyl, wobei nur ein $R_{21}$ im Molekül für Benzyl stehen kann, und $B^{\ominus}$ ein Anion bedeuten, der Formel

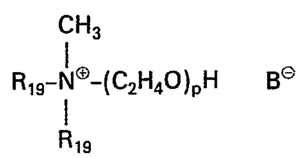

und/oder der Formel

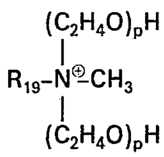

enthält, worin $R_{19}$ Alkyl mit 10 bis 20 C-Atomen, p eine Zahl zwischen 1 und 20 und $B^{\ominus}$ ein Anion bedeuten.

9. Mittel nach Ansprch 1, dadurch gekennzeichnet, dass es das kationische Textilbehandlungsmittel in einer Menge von 1 bis 50%, bezogen auf das Gesamtmittel, enthält.

10. Mittel nach Anspruch 1, dadurch gekennzeichnet, dass es zusätzlich ein oder mehrere nicht-ionische Tenside, oder/und übliche Waschmittelbestandteile wie z.B. übliche Bleichmittel wie Peroxidbleichmittel, optische Aufheller, Wasser und/oder mit Wasser mischbare organische Lösungsmittel oder/und einen Weichmacher aus der Gruppe der zwitter-ionischen quaternären Ammoniumverbindungen, nicht-ionischen tertiären Phosphinoxide, nicht-ionischen tertiären Aminoxide, nicht-ionischen äthoxylierten Alkohole, äthoxylierten Alkoholsulfate, synthetischen anionischen $C_8$–$C_{20}$-Alkylsulfattenside und ampholytischen synthetischen Tenside enthält.

11. Mittel nach einem der Ansprüche 1 bis 10,

dadurch gekennzeichnet, dass es einen alkalischen pH-Wert aufweist, insbesondere einen solchen zwischen 7 und 10.

12. Verfahren zum Waschen, Spülen und Bleichen von Textilien, dadurch gekennzeichnet, dass man diese in einer wässrigen Flotte behandelt, die ein in den Ansprüchen 1 bis 11 definiertes Mittel enthält, und die vorzugsweise einen alkalischen pH-Wert, vorzugsweise einen solchen zwischen 7 und 12, insbesondere zwischen 8 und 10 aufweist, wobei die Textilien in der Flotte oder anschliessend in feuchtem Zustand mit sichtbarem und/oder infrarotem Licht bestrahlt werden.

13. Verwendung von Phthalocyaninverbindungen der Formel

$(PC)\!-\!\!-\!(SO_2X_1\text{-}R_1\text{-}X^{\oplus})_v \quad A^{\ominus}_w$ ,

worin PC das unsubstituierte Zink- oder Aluminiumphthalocyaninringsystem, v eine beliebige Zahl zwischen 1 und 4, $R_1$ unverzweigtes oder verzweigtes Alkylen mit 1 bis 8 C-Atomen oder 1,3- oder 1,4-Phenylen, $X_1$ NH oder N-Alkyl, $X^{\oplus}$ eine Gruppe der Formel

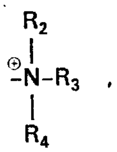 ,

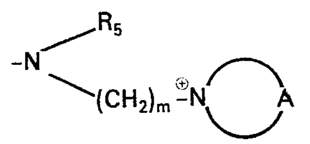 ,

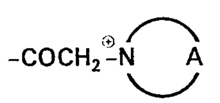 ,

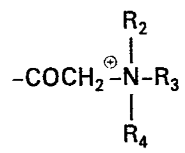 und

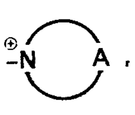

für den Fall, dass $R_1$ = Alkylen, auch eine Gruppe der Formel

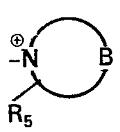 ,

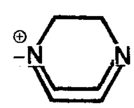 ,

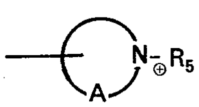 ,

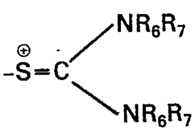

oder 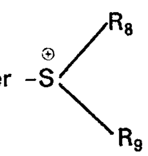 ,

wobei in obigen Formeln $R_2$ und $R_3$ unabhängig voneinander für gegebenenfalls substituiertes Alkyl mit 1 bis 6 C-Atomen, $R_4$ für gegebenenfalls substituiertes Alkyl mit 1 bis 6 C-Atomen, Cycloalkyl mit 3 bis 7 C-Atomen oder die Gruppe $NR_6R_7$, $R_5$ für Alkyl, $R_6$ und $R_7$ unabhängig voneinander für Wasserstoff oder gegebenenfalls substituiertes Alkyl, $R_8$ und $R_9$ unabhängig voneinander für einen gegebenenfalls substituierten Alkyl- oder Aralkylrest, m für eine ganze Zahl zwischen 1 und 6, A für die Ergänzung zu einem aromatischen 5- bis 7-gliedrigen Stickstoffheterocyclus, der gegebenenfalls noch ein oder zwei weitere Stickstoffatome als Ringglieder enthalten kann und der gegebenenfalls verschiedene Substituenten tragen kann, und B für die Ergänzung zu einem gesättigten 5- bis 7-gliedrigen Stickstoffheterocyclus, der gegebenenfalls noch 1 bis 2 Stickstoff-, Sauerstoff- und/oder Schwefelatome als Ringglieder enthalten kann und der gegebenenfalls verschiedene weitere Substituenten tragen kann, stehen, und $A^{\ominus}$ ein anorganisches oder organisches Anion bedeuten, und w im Falle einwertiger Anionen $A^{\ominus}$ gleich v und im Falle mehrwertiger Anionen $\leqq$ v ist, wobei $A^{\ominus}_w$ die positive Ladung kompensieren muss; wobei, wenn v $\neq$ 1, die Reste gleich oder verschieden sein können, und wobei das Phthalocyaninringsystem auch noch weitere wasserlöslichmachende Gruppen, z. B. anionische, wie Sulfogruppen, enthalten kann und wobei alle Substituenten an die Phenylkerne des Phthalocyaninringsystems gebunden sind, insbesondere von solchen der Formel

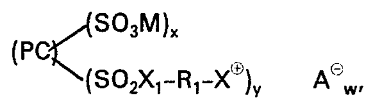

worin PC, $X_1$, $X^{\oplus}$, $R_1$ und $A^{\ominus}$ wie oben definiert sind, M für Wasserstoff, ein Alkalimetall-, Ammonium- oder Aminsalzion steht und die Summe der Zahlen x und y zwischen 1 und 4 liegt und $A^{\ominus}_w$, die positive Ladung des Restmoleküls genau kompensiert, vorzugsweise von solchen der Formel

$(PC)\!-\!\!-\!(SO_2NHR_1'\text{-}X'^{\oplus} \quad A'^{\ominus})_v$

worin PC wie oben definiert ist, $R_1'$ Alkylen mit 2 bis 6 C-Atomen, v eine beliebige Zahl zwischen 1 und 4, $X'^{\oplus}$ eine Gruppe der Formel

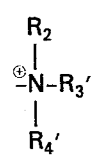 ,

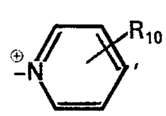 , 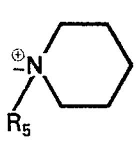 oder 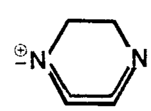 ,

worin $R_2$ und $R'_3$ unabhängig voneinander für unsubstituiertes oder durch Hydroxy, Cyano, Halogen oder Phenyl substituiertes Alkyl mit 1 bis 4 C-Atomen stehen, $R'_4$ die Bedeutung von $R_2$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Re-

ste $-SO_2NHR_1'-X^{\oplus}A^{\ominus}$ gleich oder verschieden sein können, als Photobleichnittel für Textilien.

14. Verwendung nach Anspruch 13 von Phthalocyaninverbindungen der Formel

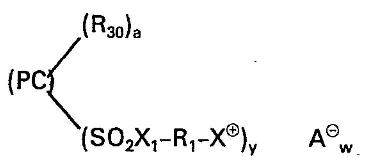

,

worin PC, $X_1$, $R_1$, $X^{\oplus}$, $A^{\ominus}$, v und w wie in Anspruch 13 definiert sind und $R_{30}$ einen nicht-ionischen Substituenten, insbesondere ein Fluor-, Chlor-, Brom- oder Jodatom oder Cyano bedeutet und a für eine beliebige Zahl zwischen 0,1 und 4 steht, wobei die im Molekül vorhandenen $R_{30}$ gleich oder verschieden sein können, insbesondere von solchen der Formel

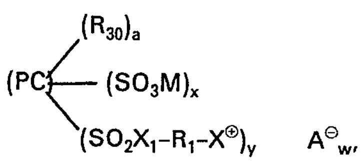

,

worin PC, $X_1$, $R_1$, $X^{\oplus}$ und $A^{\ominus}$ wie in Anspruch 13 definiert sind, M für Wasserstoff, ein Alkalimetall-, Ammonium- oder Aminsalzion steht und die Summe der Zahlen x und y zwischen 1 und 4 liegt und $A^{\ominus}_{w}$, die positive Ladung des Restmoleküls genau kompensiert und $R_{30}$ einen nicht-ionischen Substituenten, insbesondere ein Fluor-, Chlor-, Brom- oder Jodatom oder Cyano bedeutet und a für eine beliebige Zahl zwischen 0,1 und 4 steht, wobei die im Molekül vorhandenen $R_{30}$ gleich oder verschieden sein können, vorzugsweise von solchen der Formel

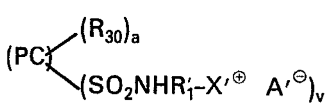

,

worin PC wie oben definiert ist, $R_1'$ Alkylen mit 2 bis 6 C-Atomen, v eine beliebige Zahl zwischen 1 und 4, $X'^{\oplus}$ eine Gruppe der Formel

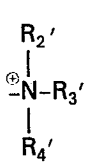

,

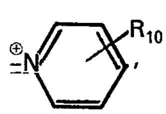

,

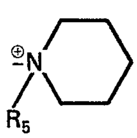

oder

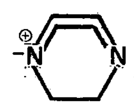

,

worin $R_2'$ und $R_3'$ unabhängig voneinander für unsubstituiertes oder durch Hydroxy, Cyano, Halogen oder Phenyl substituiertes Alkyl mit 1 bis 4 C-Atomen stehen, $R_4'$ die Bedeutung von $R_2'$ hat und zusätzlich für Cyclohexyl oder die Aminogruppe stehen kann, $R_5$ für Alkyl mit 1 bis 4 C-Atomen und $R_{10}$ für Alkyl oder Alkoxy mit 1 bis 4 C-Atomen, Halogen, Carboxy, Carbalkoxy oder Hydroxy stehen, und $A'^{\ominus}$ ein Halogenid-, Alkylsulfat- oder Arylsulfonation bedeuten, wobei die Reste $-SO_2NHR_1'-X^{\oplus}A^{\ominus}$ gleich oder verschieden sein können und worin $R_{30}$ und a wie oben definiert sind, wobei bevorzugt $R_{30}$ Chlor und a eine Zahl zwischen 0,5 und 4 bedeuten, als Photobleichmittel für Textilien.

**Claims for the contracting States: BE, CH, LI, DE, FR, GB, IT, LU, NL, SE**

1. A fabric conditioning composition containing an aluminium or zinc phthalocyanine as bleach photoactivator which is substituted by cationic water-solubilising groups, and one or more fabric conditioners such as cationic surfactants, softeners, antistatic agents, fluorescent whitening agents and/or microbicides.

2. A composition according to claim 1, wherein the aluminium or zinc phthalocyanine contains quaternary ammonium groups and ternary sulfonium groups and optionally contains anionic and/or non-ionic groups in addition to the cationic groups.

3. A composition according to claim 2 which contains a phthalocyanine of the formula

$(PC)\!-\!(^{\oplus}R)_v \quad A_w^{\ominus}$

wherein PC is the unsubstituted zinc or aluminium phthalocyanine ring system, v is any number from 1 to 4 and $^{\oplus}R$ is a group of the formula

$-SO_2X_1-R_1-X^{\oplus}$, $-O-R_1-X^{\oplus}$, $-(CH_2)_n-Y^{\oplus}$ or

$-CH_2NHCOCH_2-Y^{\oplus}$

wherein n is 0 or 1, $R_1$ is unbranched or branched alkylene of 1 to 8 carbon atoms or 1,3- or 1,4-phenylene, $X_1$ is NH or N-alkyl, $X^{\oplus}$ is a group of the formula

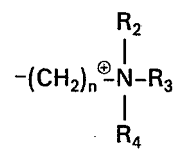

,

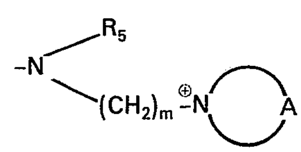

,

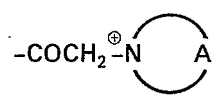

,

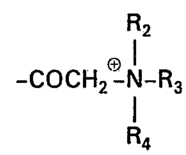

and, if $R_1$ is alkylene, is also a group of the formula

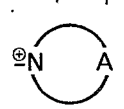

,

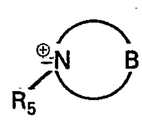

,

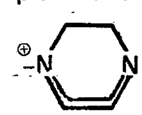

,

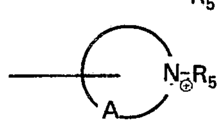

,

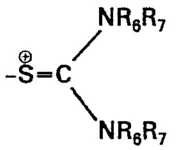

or

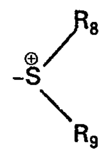

,

Y⊕ is a group of the formula 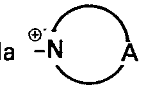 ,

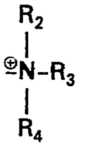 , 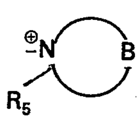 , 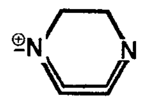 ,

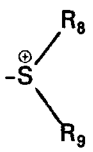 , 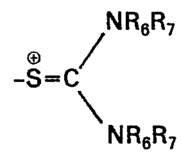 or 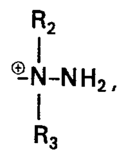

in which formulae above n is 0 or 1, each of $R_2$ and $R_3$ independently is unsubstituted or substituted $C_1$-$C_6$alkyl, $R_4$ is unsubstituted or substituted $C_1$-$C_6$alkyl, $C_3$-$C_7$)cycloalkyl or the $NR_6R_7$ group, $R_5$ is alkyl, each of $R_6$ and $R_7$ independently is hydrogen or unsubstituted or substituted alkyl, each of $R_8$ and $R_9$ independently is an unsubstituted or substituted alkyl or aralkyl radical, m is an integer from 1 to 6, A completes an aromatic 5- to 7-membered nitrogen-containing heterocyclic ring system which may contain one or two additional nitrogen atoms as ring members and which may carry different substituents, and B completes a saturated 5- to 7-membered nitrogen-containing heterocyclic ring system which may additionally contain 1 or 2 nitrogen, oxygen and/or sulfur atoms as ring members and which may carry different additional substituents, and A⊖ is an inorganic or organic anion, w has the same value as v with respect to monovalent anions A⊖ and is $\leqq$ v with respect to polyvalent anions, and $A_w^{\ominus}$ must balance the positive charge, with the proviso that, if v is ≠ 1, the radicals R can be the same or different, and that the phthalocyanine ring system can contain additional water-solubilising groups, e. g. anionic groups such as sulfo groups, and that all substituents are attached to the phenyl nuclei of the phthalocyanine ring system.

4. A composition according to claim 2 which contains a phthalocyanine of the formula

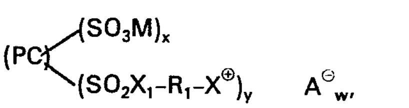

wherein PC, $X_1$, X⊕, $R_1$ and A⊖ are as defined in claim 4, M is hydrogen, an alkali metal ion, ammonium ion, or amine salt ion, and the sum of x and y is from 1 to 4 and $A_w'^{\ominus}$ exactly balances the positive charge of the remaining part of the molecule, or contains a phthalocyanine of the formula

$$(PC)-(SO_2NHR_1'-X'^{\oplus} \quad A'^{\ominus})_v$$

wherein PC is as defined in claim 3, $R_1'$ is alkylene of 2 to 6 carbon atoms, v is any number from 1 to 4, X'⊕ is a group of the formula

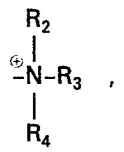 ,

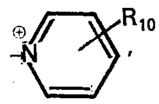 , 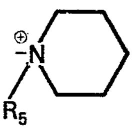 or 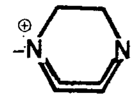

wherein each of $R_2$ and $R_3$ independently is $C_1$-$C_4$alkyl which is unsubstituted or substituted by hydroxyl, cyano, halogen or phenyl, $R_4$ has the meaning of $R_2$ and can additionally be cyclohexyl or the amino group, R5 is $C_1$-$C_4$alkyl, $R_{10}$ is $C_1$-$C_4$alkyl or $C_1$-$C_4$alkoxy, halogen, carboxyl, carbalkoxy or hydroxyl, and A'⊖ is a halide, alkylsulfate or arylsulfonate ion, whilst the radicals $-SO_2NHR'_1$-X⊕ A⊖ can be the same or different.

5. A composition according to claim 2 which contains a phthalocyanine of the formula

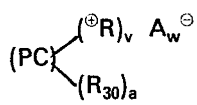

or a mixture of such phthalocyanines, wherein PC,⊕R, v, A⊖ and w are as defined in claim 3, $R_{30}$ is a non-ion substituent, preferably a fluorine, chlorine, bromine or iodine atom or cyano, and a is any number from 0.1 to 4, with the radicals $R_{30}$ present in the molecule being the same or different, in particular a phthalocyanine of the formula

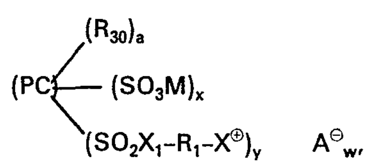

or a mixture of such phthalocyanines, wherein PC, $X_1$, X⊕, $R_1$, A⊖, x, y and w' are as defined in claim 4, and $R_{30}$ and a are as defined above, with $R_{30}$ preferably being chlorine and a being a number from 0.5 to 4, preferably a phthalocyanine of the formula

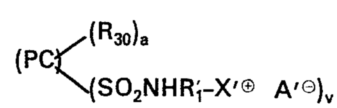

or a mixture of such phthalocyanines, wherein PC, $R'_1$, X'⊕, A'⊖ and v are as defined in claim 4, and $R_{30}$ and a are as defined above.

6. A composition according to claim 1 which contains 0.0005 to 1.5% by weight of photoactivator, based on the entire composition.

7. A composition according to claim 1, wherein the cationic fabric conditioner is a cationic heterocyclic imide or an aliphatic quaternary ammonium compound.

8. A composition according to claim 7, wherein the cationic fabric conditioner is a quaternary ammonium salt of the formula

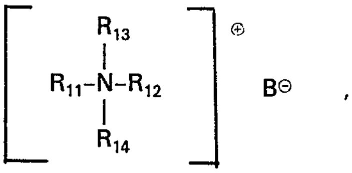

wherein $R_{11}$ is hydrogen or an aliphatic group containing 1 to 22 carbon atoms, $R_{12}$ is an aliphatic group containing 10 to 22 carbon atoms, each of $R_{13}$ and $R_{14}$ independently is $C_1$–$C_4$alkyl, and $B^{\ominus}$ is an anion, and/or a quaternary imidazolinium salt of the formula

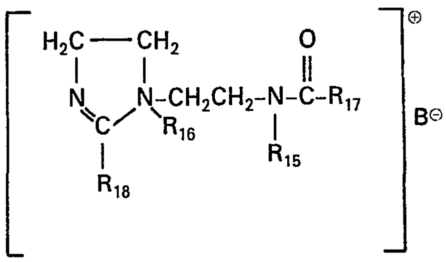

wherein $R_{15}$ is hydrogen or $C_1$–$C_4$alkyl, $R_{16}$ is$C_1$–$C_4$alkyl, $R_{17}$ is $C_1$–$C_{22}$alkyl, $R_{18}$ is hydrogen or$C_1$–$C_{22}$alkyl, preferably $C_{15}$–$C_{22}$alkyl, and $B^{\ominus}$ is an anion, and/or a surfactant of the formula

$R_{20}{}^{\oplus}N(R_{21})_3B^{\ominus}$

wherein $R_{20}$ is branched or unbranched alkenyl or alkyl of 8 to 22 carbon atoms, and each of the groups $R_{21}$, which can be the same or different, is alkyl or hydroxyalkyl of 1 to 4 carbon atoms or benzyl, with at most one group $R_{21}$ in the molecule being benzyl, and $B^{\ominus}$ is an anion, and/or of the formula

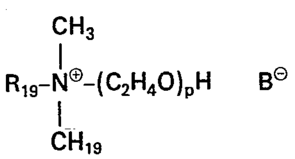

and/or of the formula

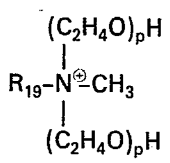

wherein $R_{19}$ is $C_{10}$–$C_{20}$alkyl, p is a number from 1 to 20 and $B^{\ominus}$ is an anion.

9. A composition according to claim 1 which contains 1 to 50% of the cationic fabric conditioner, based on the entire composition.

10. A composition according to claim 1 which additionally contains one or more non-ionic surfactants, and/or conventional ingredients of detergents, e. g. conventional bleaching agents such as peroxide bleaches, fluorescent whitening agents, water and/or water-miscible organic solvents, and/or a softener from the group of zwitterionic quaternary ammonium compounds, non-ionic tertiary phosphine oxides, non-ionic tertiary amine oxides, non-ionic oxyethylated alcohols, oxyethylated alcohol sulfates, synthetic anionic $C_8$–$C_{20}$alkylsulfate surfactants and ampholytic synthetic surfactants.

11. A composition according to any one of claims 1 to 10, which has an alkaline pH value, preferably from 7 to 10.

12. A method of washing, rinsing and bleaching fabrics, which comprises treating said fabrics in an aqueous liquor that contains a composition as defined in any one of claims 1 to 11, and which preferably has an alkaline pH value, preferably a pH value from 7 to 12, most preferably from 8 to 10, while irradiating the fabrics in the liquor, or subsequently outside the liquor in the moist state, with visible and/or infra-red light.

13. A phthalocyanine of the formula

$(PC)\!-\!(SO_2X_1\text{-}R_1\text{-}X^{\oplus})_v \qquad A^{\ominus}_w$ ,

wherein PC is the unsubstituted zinc or aluminium phthalocyanine ring system, v is any number from 1 to 4, $R_1$ is unbranched or branched alkylene of 1 to 8 carbon atoms or 1,3- or 1,4-phenylene, $X_1$ is NH or N-alkyl, $X^{\oplus}$ is a group of the formula

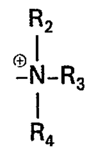 ,

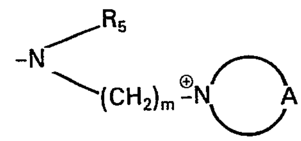 ,

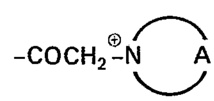 , or

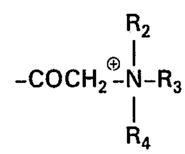

and, if $R_1$ is alkylene, is also a group of the formula

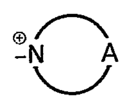 ,

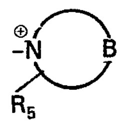 ,

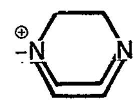 ,

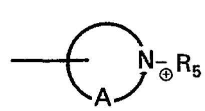 ,

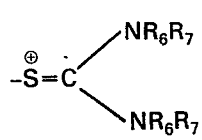

or

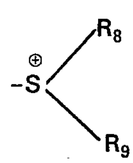 ,

in which formulae each of $R_2$ and $R_3$ independently is unsubstituted or substituted $C_1$-$C_6$alkyl, $R_4$ is unsubstituted or substituted $C_1$-$C_6$alkyl, $C_3$-$C_7$cycloalkyl or the $NR_6R_7$ group, $R_5$ is alkyl, each of $R_6$ and $R_7$ independently is hydrogen or unsubstituted or substituted alkyl, each of $R_8$ and $R_9$ independently is an unsubstituted or substituted alkyl or aralkyl radical, m is an integer from 1 to 6, A completes an aromatic 5- to 7-membered nitrogen-containing heterocyclic ring system which may contain one or two additional nitrogen atoms as ring members and which may carry different substituents, and B completes a saturated 5- to 7-membered nitrogen-containing heterocyclic ring system which may additionally contain 1 or 2 nitrogen, oxygen and/or sulfur atoms as ring members and which may carry different additional substituents, and $A^{\ominus}$ is an inorganic or organic anion, w has the same value as v with respect to monovalent anions $A^{\ominus}$ and is $\leqq$ v with respect to polyvalent anions, and $A_w{}^{\ominus}$ must balance the positive charge, with the proviso that, if v is $\neq$ 1, the radicals R can be the same or different, and that phthalocyanine ring system can contain additional water-solubilising groups, e.g. anionic groups such as sulfo groups, and that all substituents are attached to the phenyl nuclei of the phthalocyanine ring system, in particular a phthalocyanine of the formula

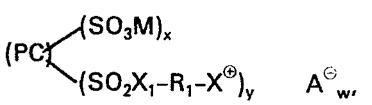

wherein PC, $X_1$, $X^{\oplus}$, $R_1$ and $A^{\ominus}$ are as defined above, M is hydrogen, an alkali metal ion, ammonium ion or amine salt ion, and the sum of x and y is from 1 to 4, and $A_w'^{\ominus}$ exactly balances the positive charge of the remaining part of the molecule, preferably a phthalocyanine of the formula

$$(PC)-(SO_2NHR_1'-X'^{\oplus} \quad A'^{\ominus})_v$$

wherein PC is as defined above, $R'_1$ is alkylene of 2 to 6 carbon atoms, v is any number from 1 to 4, $X'^{\oplus}$ is a group of the formula

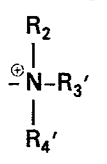 ,

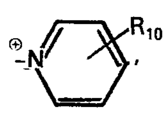 , 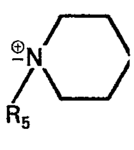 or 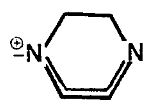

wherein each of $R_2$ and $R'_3$ independently is $C_1$-$C_4$alkyl which is unsubstituted or substituted by hydroxyl, cyano, halogen or phenyl, $R'_4$ has the meaning of $R_2$ and can additionally be cyclohexyl or the amino group, $R_5$ is $C_1$-$C_4$alkyl, $R_{10}$ is $C_1$-$C_4$alkyl or $C_1$-$C_4$alkoxy, halogen, carboxyl, carbalkoxy or hydroxyl, and $A'^{\ominus}$ is a halide, alkylsulfate or arylsulfonate ion, whilst the radicals $-SO_2NHR'_1-X^{\oplus} A^{\ominus}$ can be the same or different.

14. A phthalocyanine compound of the formula

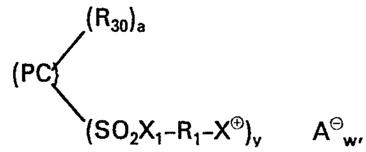 ,

wherein PC, $X_1$, $R_1$, $X^{\oplus}$, $A^{\ominus}$, v and w are as defined in claim 13, $R_{30}$ is a non-ionic substituent, preferably a fluorine, chlorine, bromine or iodine atom or cyano, and a is any number from 0.1 to 4, with the radicals $R_{30}$ present in the molecule being the same or different; especially a phthalocyanine of the formula

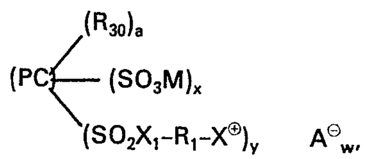 ,

wherein PC, $X_1$, $R_1$, $X^{\oplus}$ and $A^{\ominus}$ are as defined in claim 13, M is hydrogen, an alkali metal ion, ammonium ion, or amine salt ion, and the sum of x and y is from 1 to 4 and $A_w'^{\ominus}$ exactly balances the positive charge of the remaining part of the molecule, and $R_{30}$ is a non-ionic substituent, preferably a fluorine, chlorine, bromine or iodine atom or cyano, and a is any number from 0.1 to 4, with the substituents $R_{30}$ present in the molecule being the same or different; preferably a phthalocyanine compound of the formula

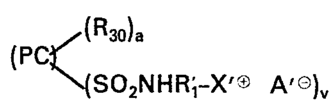 ,

wherein PC is as defined above, $R'_1$ is alkylene of 2 to 6 carbons atoms, v is any number from 1 to 4, $X'^{\oplus}$ is a group of the formula

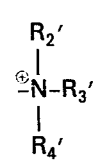 ,

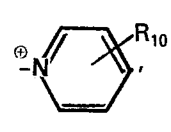 , 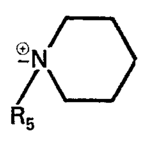 or 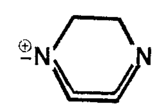

wherein each of $R'_2$ and $R'_3$ independently is alkyl of 1 to 4 carbon atoms which is unsubstituted or substituted by hydroxyl, cyano, halogen or phenyl, $R'_4$ has the same meaning as $R'_2$ and can additionally be cyclohexyl or the amino group, $R_5$ is alkyl of 1 to 4 carbon atoms, $R_{10}$ is alkyl or alkoxy, each of 1 to 4 carbon atoms, halogen, carboxyl, carbalkoxy or hydroxyl, and $A'^{\ominus}$ is a halide, alkylsulfate or arylsulfonate ion, while the radicals

$-SO_2NHR'_1-X^{\oplus} A^{\ominus}$ can be the same or different, and wherein $R_{30}$ and a are as defined above, with $R_{30}$ preferably being chlorine and a being a number from 0.5 to 4.

**Claims (for contracting State Austria)**

1. A fabric conditioning composition containing an aluminium or zinc phthalocyanine as bleach photoactivator which is substituted by cationic water-solubilising groups, and one or more fabric conditioners such as cationic surfactants, softeners, antistatic agents, fluorescent whitening agents and/or microbicides.

2. A composition according to claim 1, wherein the aluminium or zinc phthalocyanine contains quaternary ammonium groups and ternary sulfonium groups and optionally contains anionic and/or non-ionic groups in addition to the cationic groups.

3. A composition according to claim 2 which contains a phthalocyanine of the formula

$(PC)-(^{\oplus}R)_v \quad A_w^{\ominus}$

wherein PC is the unsubstituted zinc or aluminium phthalocyanine ring system, v is any number from 1 to 4 and $^{\oplus}R$ is a group of the formula

$-SO_2X_1-R_1-X^{\oplus}$ , $-O-R_1-X^{\oplus}$

$-(CH_2)_n-Y^{\oplus}$ or $-CH_2NHCOCH_2-Y^{\oplus}$

wherein n is 0 or 1, $R_1$ is unbranched or branched alkylene of 1 to 8 carbon atoms or 1,3- or 1,4-phenylene, $X_1$ is NH or N-alkyl, $X^{\oplus}$ is a group of the formula

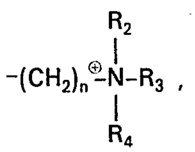 , 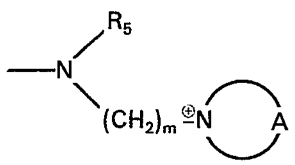 ,

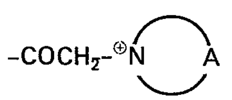 , 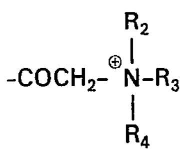

and, if $R_1$ is alkylene, is also a group of the formula

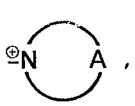 , 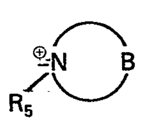 , 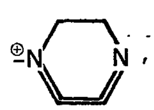 ,

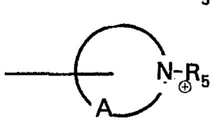 ,

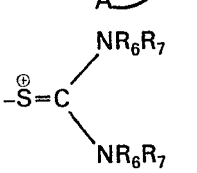 or 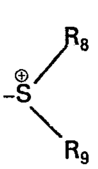 ,

$Y^{\oplus}$ is a group of the formula 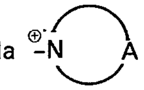 ,

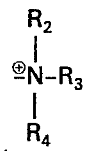 , 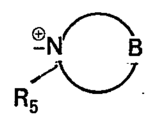 , 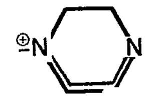 ,

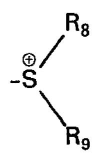 , 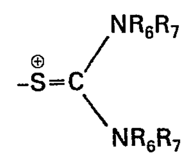 or 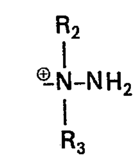 ,

in which formulae above n is 0 or 1, each of $R_2$ and $R_3$ independently is unsubstituted or substituted $C_1$-$C_6$alkyl, $R_4$ is unsubstituted or substituted $C_1$-$C_6$alkyl, $C_3$-$C_7$cycloalkyl or the $NR_6R_7$ group, $R_5$ is alkyl, each of $R_6$ and $R_7$ independently is hydrogen or unsubstituted or substituted alkyl, each of $R_8$ and $R_9$ independently is an unsubstituted or substituted alkyl or aralkyl radical, m is an integer from 1 to 6, A completes an aromatic 5- to 7-membered nitrogen-containing heterocyclic ring system which may contain one or two additional nitrogen atoms as ring members and which may carry different substituents, and B completes a saturated 5- to 7-membered nitrogen-containing heterocyclic ring system which may additionally contain 1 or 2 nitrogen, oxygen and/or sulfur atoms as ring members and which may carry different additional substituents, and $A^{\ominus}$ is an inorganic or organic anion, w has the same value as v with respect to monovalent anions $A^{\ominus}$ and is $\leqq$ v with respect to polyvalent anions, and $A_w^{\ominus}$ must balance the positive charge, with the proviso that, if v is $\neq$ 1, the radicals R can be the same or different, and that the phthalocyanine ring system can contain additional water-solubilising groups, e. g. anionic groups such as sulfo groups, and that all substituents are attached to the phenyl nuclei of the phthalocyanine ring system.

4. A composition according to claim 2 which contains a phthalocyanine of the formula

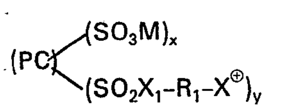 $A^{\ominus}_{w}$,

wherein PC, $X_1$, $X^{\oplus}$, $R_1$ and $A^{\ominus}$ are as defined in claim 4, M is hydrogen, an alkali metal ion, ammonium ion, or amine salt ion, and the sum of x is from 1 to 4 and $A_w'^{\ominus}$ exactly balances the positive charge of the remaining part of the molecule, or contains a phthalocyanine of the formula

$(PC)-(SO_2NHR_1'-X'^{\oplus} \quad A'^{\ominus})_v$

wherein PC is as defined in claim 3, $R'_1$ is alkylene of 2 to 6 carbon atoms, v is any number from 1 to 4, $X'^{\oplus}$ is a group of the formula

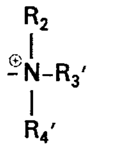

,

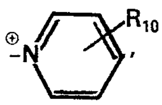, 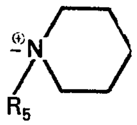 or 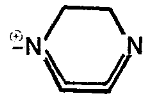

wherein each of $R_2$ and $R_3$ independently is $C_1$-$C_4$alkyl which is unsubstituted or substituted by hydroxyl, cyano, halogen or phenyl, $R_4$ has the meaning of $R_2$ and can additionally be cyclohexyl or the amino group, $R_5$ is $C_1$-$C_4$alkyl, $R_{10}$ is$C_1$-$C_4$alkyl or $C_1$-$C_4$alkoxy, halogen, carboxyl, carbalkoxy or hydroxyl, and $A'^{\ominus}$ is a halide, alkylsulfate or arylsulfonate ion, whilst the radicals $-SO_2NHR'_1-X^{\oplus} A^{\ominus}$ can be the same or different.

5. A composition according to claim 2 which contains a phthalocyanine of the formula

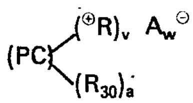

or a mixture of such phthalocyanines, wherein PC, $^{\oplus}R$, v, $A^{\ominus}$ and w are as defined in claim 3, $R_{30}$ is a non-ionic substituent, preferably a fluorine, chlorine, bromine or iodine atom or cyano, and a is any number from 0.1 to 4, with the radicals $R_{30}$ present in the molecule being the same or different, in particular a phthalocyanine of the formula

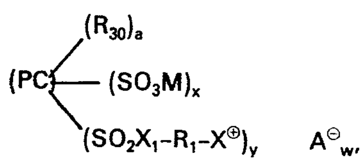

or a mixture of such phthalocyanines, wherein PC, $X_1$, $X^{\oplus}$, $R_1$, $A^{\ominus}$, x, y and w' are as defined in claim 4, and $R_{30}$ and a are as defined above, with $R_{30}$ preferably being chlorine and a being a number from 0.5 to 4, preferably a phthalocyanine of the formula

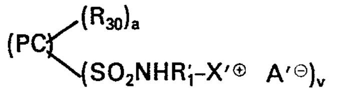

or a mixture of such phthalocyanines, wherein PC, $R'_1$, $X'^{\oplus}$, $A'^{\ominus}$ and v are as defined in claim 4, and $R_{30}$o and a are as defined above.

6. A composition according to claim 1 which contains 0.0005 to 1.5% by weight of photoactivator, based on the entire composition.

7. A composition according to claim 1, wherein the cationic fabric conditioner is a cationic heterocyclic imide or an aliphatic quaternary ammonium compound.

8. A composition according to claim 7, wherein the cationic fabric conditioner is a quaternary ammonium salt of the formula

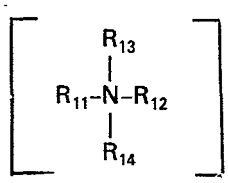

$B^{\ominus}$ ,

wherein $R_{11}$ is hydrogen or an aliphatic group containing 1 to 22 carbon atoms, $R_{12}$ is an aliphatic group containing 10 to 22 carbon atoms, each of $R_{13}$ and $R_{14}$ independently is $C_1$-$C_4$alkyl, and $B^{\ominus}$ is an anion, and/or a quaternay imidazolinium salt of the formula

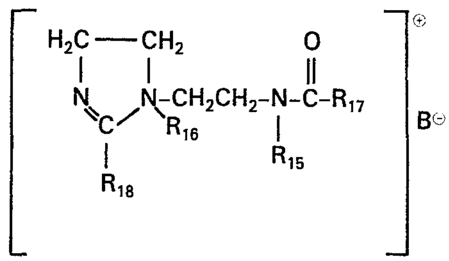

$B^{\ominus}$ ,

wherein $R_{15}$ is hydrogen or $C_1$-$C_4$alkyl, $R_{16}$ is$C_1$-$C_4$alkyl, $R_{17}$ is $C_1$-$C_{22}$alkyl, $R_{18}$ is hydrogen or $C_1$-$C_{22}$alkyl, preferably $C_{15}$-$C_{22}$alkyl, and $B^{\ominus}$ is an anion, and/or a surfactant of the formula

$R_{20}{}^{\oplus}N(R_{21})_3B^{\ominus}$,

wherein $R_{20}$ is branched or unbranched alkenyl or alkyl of 8 to 22 carbon atoms, and each of the groups $R_{21}$, which can be the same or different, is alkyl or hydroxylalkyl of 1 to 4 carbon atoms or benzyl, with at most one group $R_{21}$ in the molecule being benzyl, and $B^{\ominus}$ is an anion, and/or of the formula

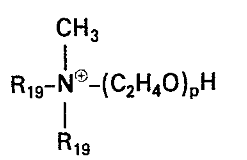

$B^{\ominus}$

and/or of the formula

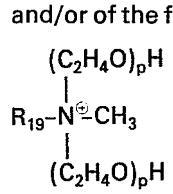

wherein $R_{19}$ is $C_{10}$-$C_{20}$alkyl, p is a number from 1 to 20 and $B^{\ominus}$ is an anion.

9. A composition according to claim 1 which contains 1 to 50% of the cationic fabric conditioner, based on the entire composition.

10. A composition according to claim 1 which additionally contains one or more non-ionic surfactants, and/or conventional ingredients of detergents, e. g. conventional bleaching agents such as peroxide bleaches, fluorescent whitening agents, water and/or water-miscible organic solvents, and/or a softener from the group of zwitterionic quaternary ammonium compounds, non-

ionic tertiary phosphine oxides, non-ionic tertiary amine oxides, nonionic oxyethylated alcohols, oxyethylated alcohol sulfates, synthetic anionic $C_8$-$C_{20}$alkylsulfate surfactants and ampholytic synthetic surfactants.

11. A composition according to any one of claims 1 to 10, which has an alkaline pH value, preferably from 7 to 10.

12. A method of washing, rinsing and bleaching fabrics, which comprises treating said fabrics in an aqueous liquor that contains a composition as defined in any one of claims 1 to 11, and which preferably has an alkaline pH value, preferably a pH value from 7 to 12, most preferably from 8 to 10, while irradiating the fabrics in the liquor, or subsequently outside the liquor in the moist state, with visible and/or infra-red light.

13. The use of a phthalocyanine of the formula

$$(PC)\!\!-\!\!(SO_2X_1\text{-}R_1\text{-}X^{\oplus})_v \qquad A^{\ominus}_w \;,$$

as bleach photoactivator for textiles, wherein PC is the unsubstituted zinc or aluminium phthalocyanine ring system, v is any number from 1 to 4, $R_1$ is unbranched or branched alkylene of 1 to 8 carbon atoms or 1,3- or 1,4-phenylene, $X_1$ is NH or N-alkyl, $X^{\oplus}$ is a group of the formula

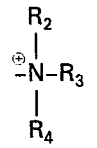 , 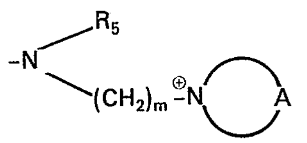 ,

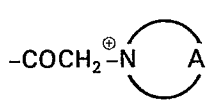 , or 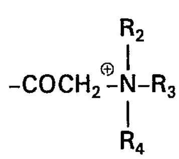

and if $R_1$ is alkylene, is also a group of the formula

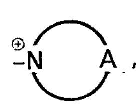 , 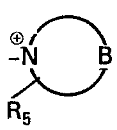 , 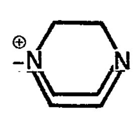 ,

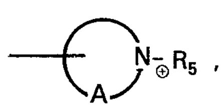 , 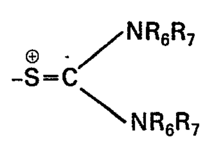

or 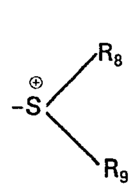 ,

in which formulae each of $R_2$ and $R_3$ independently is unsubstituted or substituted $C_1$-$C_6$alkyl, $R_4$ is unsubstituted or substituted $C_1$-$C_6$alkyl, $R_4$ is unsubstituted or substituted $C_1$-$C_6$alkyl, $C_3$-$C_7$cycloalkyl or the $NR_6R_7$ group, $R_5$ is alkyl, each of $R_6$ and $R_7$ independently is hydrogen or unsubstituted or substituted alkyl, each of $R_8$ and $R_9$ independently is an unsubstituted or substituted alkyl or aralkyl radical, m is an integer from 1 to 6, A completes an aromatic 5- to 7-membered nitrogen-containing heterocyclic ring system which may contain one or two additional nitrogen atoms as ring members and which may carry different substituents, and B completes a saturated 5- to 7-membered nitrogen-containing heterocyclic system which may additionally contain 1 or 2 nitrogen, oxygen and/or sulfur atoms as ring members and which may carry different additional substituents, and $A^{\ominus}$ is an inorganic or organic anion, w has the same value as v with respect to monovalent anions $A^{\ominus}$ and is $\leqq$ v with respect to polyvalent anions, and $A_w^{\ominus}$ must balance the positive charge, with the proviso that, if v is $\neq$1, the radicals R can be the same or different, and that the phthalocyanine ring system can contain additional water-solubilising groups, e. g. anionic groups such as sulfo groups, and that all substituents are attached to the phenyl nuclei of the phthalocyanine ring system; in particular of a phthalocyanine of the formula

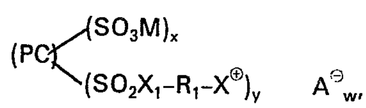

wherein PC, $X_1$, $X^{\oplus}$, $R_1$ und $A^{\ominus}$ are as defined above, M is hydrogen, an alkali metal ion, ammonium ion or amine salt ion, and the sum of x and y is from 1 to 4, and $A_{w'}^{\ominus}$ exactly balances the positive charge of the remaining part of the molecule; preferably of a phthalocyanine of the formula

$$(PC)\!\!-\!\!(SO_2NHR_1'\text{-}X'^{\oplus} \qquad A'^{\ominus})_v$$

wherein PC is as defined above, $R'_1$ is alkylene of 2 to 6 carbon atoms, v is any number from 1 to 4, $X'^{\oplus}$ is a group of the formula

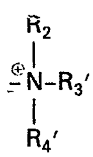 ,

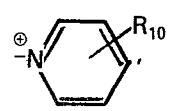 , 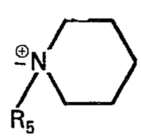 or 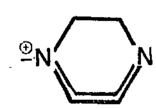

wherein each of $R_2$ and $R'_3$ independently is $C_1$-$C_4$alkyl which is unsubstituted or substituted by hydroxyl, cyano, halogen or phenyl, $R'_4$ has the meaning of $R_2$ and can additionally be cyclohexyl or the amino group, $R_5$ is $C_1$-$C_4$alkyl, $R_{10}$ is$C_1$-$C_4$alkyl or $C_1$-$C_4$alkoxy, halogen, carboxyl, carbalkoxy or hydroxyl, and $A'^{\ominus}$ is a halide, alkylsulfate or arylsulfonate ion, whilst the radicals -$SO_2NHR'_1$-$X^{\oplus}A^{\ominus}$ can be the same or different.

14. The use according to claim 13 of a phthalocyanine compound of the formula

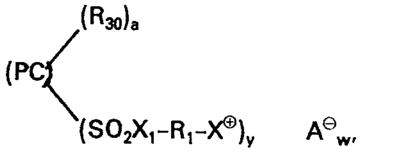

as bleach photoactivator for textiles, wherein PC, $X_1$, $R_1$, $X^{\oplus}$, $A^{\ominus}$, v and w are as defined in claim 13, $R_{30}$ is non-ionic substituent, preferably a fluorine, chlorine, bromine or iodine atom or cyano, and a is any number from 0.1 to 4, with the radicals $R_{30}$ present in the molecule being the same or different; especially of a phthalocyanine of the formula

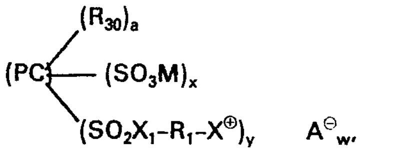

wherein PC, $X_1$, $R_1$, $X^{\oplus}$ and $A^{\ominus}$ are as defined in claim 13, M is hydrogen, an alkali metal ion, ammonium ion, or amine salt ion, and the sum of x and y is from 1 to 4 and $A_{w'}^{\ominus}$ exactly balances the positive charge of the remaining part of the molecule, and $R_{30}$ is a non-ionic substituent, preferably a fluorine, chlorine, bromine or iodine atom or cyano, and a is any number from 0.1 to 4, with the substituents $R_{30}$ present in the molecule being the same or different; preferably of a phthalocyanine compound of the formula

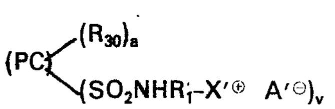

wherein PC is as defined above, $R'_1$ is alkylene of 2 to 6 carbon atoms, v is any number from 1 to 4, $X'^{\oplus}$ is a group of the formula

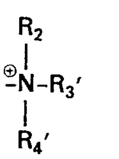 ,

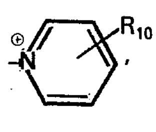 , 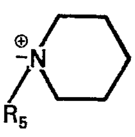 or 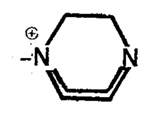

wherein each of $R'_2$ and $R'_3$ independently is alkyl of 1 to 4 carbon atoms which is unsubstituted or substituted by hydroxyl, cyano, halogen or phenyl, $R'_4$ has the same meaning as $R'_2$ and can additionally be cyclohexyl or the amino group, $R_5$ is alkyl of 1 to 4 carbon atoms, $R_{10}$ is alkyl or alkoxy, each of 1 to 4 carbon atoms, halogen, carboxyl, carbalkoxy or hydroxyl, and $A'^{\ominus}$ is a halide, alkylsulfate or arylsulfonate ion, while the radicals $-SO_2NHR'_1-X^{\oplus}A^{\ominus}$ can be the same or different, and wherein $R_{20}$ and a are as defined above, with $R_{30}$ preferably being chlorine and a being a number from 0.5 to 4.

**Revendications pour les Etats contractants BE, CH, LI, DE, FR, GB, IT, LU, NL, SE**

1. Agent de traitement pour textiles ayant une teneur en un agent de blanchiment photographique, caractérisé par le fait qu'il renferme comme agent de blanchiment photographique des phtalocyanines d'aluminium ou de zinc solubles dans l'eau substituées avec des groupes cationiques et des agents cationiques de traitement pour textiles, tels que par exemple les tensioactifs cationiques, les adoucissants, les produits antistatiques, les agents de blanchiment optiques et/ou les agents antimicrobiens.

2. Agent selon la revendication 1, caractérisé par le fait que les phtalocyanines d'aluminium ou de zinc qu'il contient renferment des groupes ammonium quaternaire et des groupes sulfonium ternaire et éventuellement également des groupes anioniques ou/et non-ioniques.

3. Agent selon la revendication 2, caractérisé par le fait qu'il renferme une phtalocyanine de formule

$$(PC)-(^{\oplus}R)_v \quad A_w^{\ominus}$$

où PC signifie le système de noyau de phtalocyanine de zinc ou d'aluminium non substitué, v désigne un nombre quelconque entre 1 et 4 et $^{\oplus}R$ désigne un groupe de formule

$-SO_2X_1-R_1-X^{\oplus}$ , $-O-R_1-X^{\oplus}$

$-(CH_2)_n-Y^{\oplus}$ ou $-CH_2NHCOCH_2-Y^{\oplus}$

où n désigne 0 ou 1, $R_1$ désigne un alkylène ayant de 1 à 8 atomes de carbone, non ramifié ou ramifié ou 1,3- ou 1,4-phénylène, $X_1$NH ou N-alkyle, $X^{\oplus}$ désigne un groupe de formule

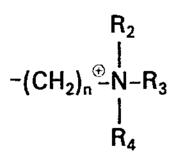 , 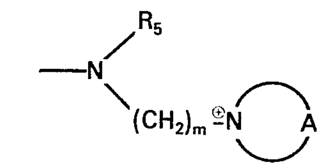

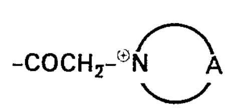 , 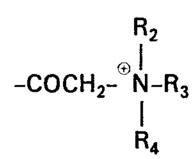

et, pour le cas où $R_1$ = alkylène, également un groupe de formule

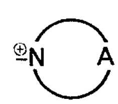 , 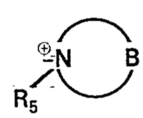 , 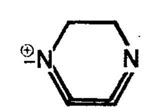 ,

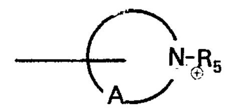 ,

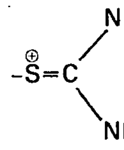

ou

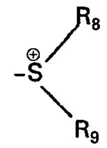

,

Y⊕ désigne un groupe de formule 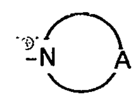 ,

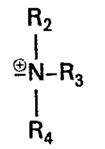 , 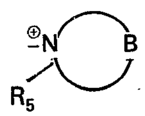 , 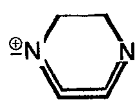 ,

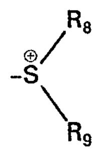 , 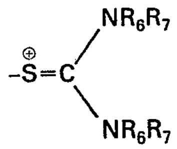 ou 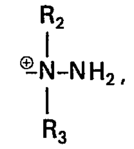

Dans les formules ci-dessus, n désigne 0 ou 1, $R_2$ et $R_3$, indépendamment l'un de l'autre, désignent un alkyle ayant de 1 à 6 atomes de carbone, éventuellement substitué, $R_4$ désigne un alkyle ayant de 1 à 6 atomes de carbone éventuellement substitué, cycloalkyle ayant de 3 à 7 atomes de carbone ou le groupe $N_6R_7$, $R_5$ désigne alkyle, $R_6$ et $R_7$, indépendamment l'un de l'autre, désignent hydrogène ou un alkyle éventuellement substitué, $R_8$ et $R_9$, indépendamment l'un de l'autre, désignent un alkyle ou aralkyle éventuellement substitué, m désigne un nombre entier entre 1 et 6, A représente le complément pour un hétérocycle azoté aromatique ayant 5 à 7 chaînons, pouvant encore comporter éventuellement comme chaînons un ou deux atomes d'azote et pouvant éventuellement porter différents substituants, et B désigne le complément pour un hétérocycle azoté saturé ayant 5 à 7 chaînons pouvant comporter éventuellement comme chaînons un ou deux atomes d'azote, d'oxygène, et/ou de soufre et pouvant porter éventuellement différents autres substituants, et A⊖ désigne un anion anorganique ou organique, w est dans le cas d'anions A⊖ monovalents égal à v et dans le cas d'anions polyvalents $\leqq$v, $A^{\ominus}_w$ devant compenser la charge positive; v $\neq$1, les restes ⊕R peuvent être identiques ou différents, et le système de noyau de phtalocyanine peut renfermer encore d'autres groupes solubilisant dans l'eau, par exemple anioniques, comme les groupes sulfo, et tous les substituants étant liés au noyau phénylique du système de noyau de phtalocyanine.

4. Agent selon la revendication 2, caractérisé par le fait qu'il renferme une phtalocyanine de formule

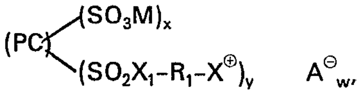

où PC, $X_1$, X⊕, $R_1$ et A⊖ sont comme définis dans la revendication 3, M désigne hydrogène, un ion métallique alcalin, un ion ammonium ou un ion de sel d'amine et la somme des nombres x et y est comprise entre 1 et 4, et $A_w^{\ominus}$, compense exactement la charge positive du reste de la molécule, ou renferme une phtalocyanine de formule

$$(PC)\!-\!\!-(SO_2NHR_1'\text{-}X'^{\oplus} \quad A'^{\ominus})_v$$

où PC est comme défini dans la revendication 3, $R_1'$ désigne alkylène ayant de 2 à 6 atomes de carbone, v désigne un nombre quelconque entre 1 et 4, X'⊕ désigne un groupe de formules

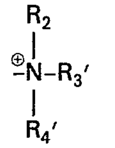 ,

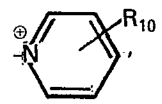 , 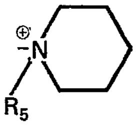 or 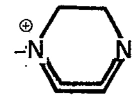

où $R_2$ et $R_3$, indépendamment l'un de l'autre, désignent un alkyle ayant de 1 à 4 atomes de carbone, non substitué ou substitué par hydroxy, cyano, halogène ou phényle, $R_4$ a la signification de de $R_2$ et en outre peut désigner cyclohexyle ou le groupe amino, $R_5$ désigne un alkyle ayant de 1 à 4 atomes de carbone, et $R_{10}$ désigne alkyle ou alcoxy ayant de 1 à 4 atomes de carbone, halogène, carboxy, carbalcoxy ou hydroxy, et A'⊖ désigne un ion halogénure, alkylsulfate ou arylsulfonate, les restes $-SO_2NHR_1'$-X⊕A⊖ peuvent être égaux ou différents.

5. Agent selon la revendication 2, caractérisé par le fait qu'il renferme une phtalocyanine de formule

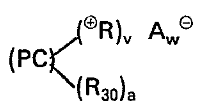

ou des mélanges de ces phtalocyanines, où PC, ⊕R, v, A⊖ et w sont définis comme dans la revendication 3, $R_{30}$ désigne un substituant nonionique, en particulier un atome de fluor, de chlore, de brome ou de iode, ou cyano et a désigne un nombre quelconque entre 0,1 et 4, les sommes de $R_{30}$ présentes dans la molécule pouvant être égales ou differentes, en particulier une phtalocyanine de formule

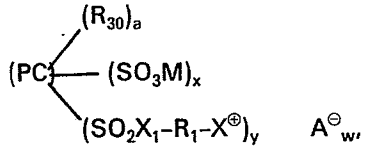

,

ou des mélanges de ces phtalocyanines où PC, $X_1$, X⊕, $R_1$, A⊖ x, y et w' sont comme dans la revendications 4 et $R_{30}$ et a sont comme définis ci-dessus, $R_{30}$ désigne de préférence chlore et a désigne de préférence un nombre compris entre 0,5 et 4, de préférence une phtalocyanine de formule

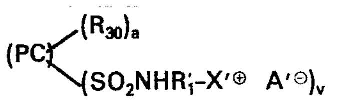

,

ou des mélanges de ces phtalocyanines, où PC, $R_1'$, $X'^{\oplus}$, $A'^{\ominus}$ et v sont comme définis dans la revendication 4 et $R_{30}$ a la définition ci-dessus indiquée.

6. Agent selon la revendication 1, caractérisé par le fait qu'il renferme de 0,0005 à 1,5% en poids d'agent de blanchiment photographique du poids total de l'agent.

7. Agent selon la revendication 1, caractérisé pr le fait qu'il renferme comme agent cationique de traitement pour textiles, un imide hétérocyclique cationique ou un composé ammonium quaternaire aliphatique.

8. Agent selon la revendication 7, caractérisé par le fait qu'il renferme comme agent cationique de traitement pour textiles, un sel d'ammonium quaternaire de formule

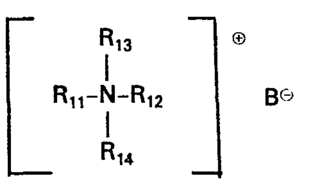

,

où $R_{11}$ désigne hydrogène ou un groupe aliphatique ayant de 1 à 22 atomes de carbone, $R_{12}$ désigne un groupe aliphatique ayant de 10 à 22 atomes de carbone, $R_{13}$ et $R_{14}$, indépendamment l'un de l'autre, désignent un alkyle ayant de 1 à 4 atomes de carbone et B désigne un anion, ou/et un sel d'imidazolinium quaternaire de formule

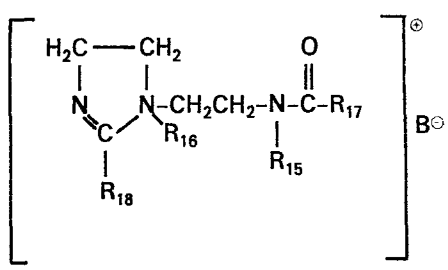

,

où $R_{15}$ désigne hydrogène ou un alkyle ayant de 1 à 4 atomes de carbone, $R_{16}$ désigne un alkyle ayant de 1 à 4 atomes de carbone, $R_{17}$ désigne un alkyle ayant de 1 à 22 atomes de carbone, $R_{18}$ désigne hydrogène ou un alkyle ayant de 1 à 22, de préférence de 15 à 22 atomes de carbone et $B^{\ominus}$ désigne un anion, et/ou un tensio-actif de formule

$R_{20}{}^{\oplus}N(R_{21})_3B^{\ominus}$,

où $R_{20}$ désigne un alkyle ou alcényle à chaîne droite ou ramifiée avant de 8 à 22 atomes de carbone, les symboles $R_{21}$ peuvent être identiques ou différents et désignent un alkyle ou hydroxyalkyle ayant de 1 à 4 atomes de carbone ou benzyle, cependant un seul $R_{21}$ dans la molécule peut désigner benzyle, et $B^{\ominus}$ désigne un anion, de formule

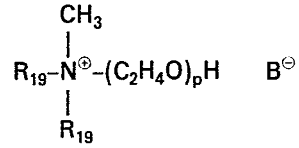

et/ou de formule

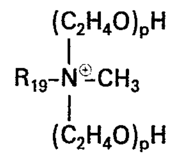

où $R_{19}$ désigne un alkyle ayant de 10 à 20 atomes de carbone, p désigne un nombre entre 1 et 20 et $B^{\ominus}$ désigne un anion.

9. Agent selon la revendication 1, caractérisé par le fait qu'il renferme les agents cationiques de traitement pour textiles en une quantité de 1 à 50% du poids total de l'agent.

10. Agent selon la revendication 1, caractérisé par le fait qu'il renferme en outre un ou plusieurs tensio-actifs non-ioniques, ou/et des constituants usuels pour détersifs comme par exemple des agents de blanchiment au peroxyde, des agents de blanchiment optique, eau et/ou des solvants organiques miscibles avant l'eau ou/et un adoucissant du groupe de composés ammonium quaternaires zwitter-ioniques, des phosphinoxydes tertiaires non-ioniques, des aminoxydes tertiaires non-ioniques, des alcools éthoxylés non-ioniques, des tensio-actifs alkylsulfates anioniques, synthétiques en $C_8$-$C_{20}$ et des tensio-actifs synthétiques amphotères.

11. Agent selon l'une des revendications 1 à 10, caractérisé par le fait qu'elle a un pH alcalin et en particulier un pH compris entre 7 et 10.

12. Procédé de lavage, rinçage et blanchiment de textiles, caractérisé par le fait qu'on traite ces derniers dans un bain aqueux renfermant un agent défini dans les revendications 1 à 11 et ayant de préférence un pH alcalin, avantageusement compris entre 7 et 12, plus particulièrement entre 8 et 10, les textiles étant irradiés dans le bain ou ensuite à l'état humide avec de la lumière visible et/ou infrarouge.

13. Composés de phtalocyanine de formule

$(PC)\!-\!\!-(SO_2X_1\text{-}R_1\text{-}X^{\oplus})_v \quad A^{\ominus}_w$ ,

où PC désigne le système de noyau de phtalocyanine de zinc ou d'aluminium non substitué, v désigne un nombre quelconque entre 1 et 4, $R_1$ désigne un alkylène non ramifié ou ramifié ayant de 1 à 8 atomes de carbone ou un 1,3- ou 1,4-phénylène, $X_1$ NH ou N-alkyle, $X^{\oplus}$ désigne un groupe de formule

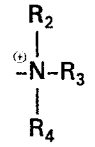

,

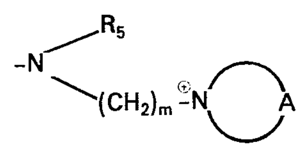

,

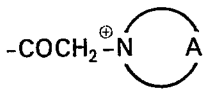 , 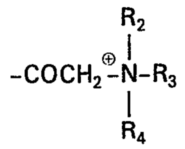

et, lorsque $R_1$ = alkylene, également un groupe de formule

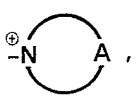 , 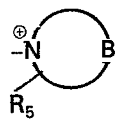 , 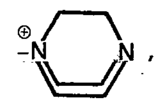 ,

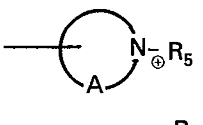 , 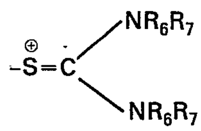

ou 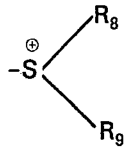 ,

où dans les formules ci-dessus, $R_2$ et $R_3$, indépendamment l'un de l'autre, désignent un alkyle ayant de 1 à 6 atomes de carbone, éventuellement substitué, $R_4$ désigne un alkyle ayant de 1 à 6 atomes de carbone éventuellement substitué, cycloalkyle ayant de 3 à 7 atomes de carbone ou le groupe $NR_6R_7$, $R_5$ désigne alkyle, $R_6$ et $R_7$, indépendamment l'un de l'autre désignent hydrogène ou un alkyle éventuellement substitué, $R_8$ et $R_9$, indépendamment l'un de l'autre, désignent un reste alkyle ou aralkyle éventuellement substitué, m désigne un nombre entier compris entre 1 et 6, A représente le complément pour un hétérocycle aromatique azoté ayant de 5 à 7 chaînons, pouvont éventuellement renfermer comme chaînons un ou deux atomes d'azote supplémentaires et qui peut éventuellement porter différents substituants, et B représente le complément pour un hétérocycle azoté saturé ayant de 5 à 7 chaînons pouvant éventuellement renfermer comme chaînons, 1 à 2 atomes d'azote, d'oxygène et/ou de soufre et pouvant porter éventuellement diverses autres substituants,

$A^{\ominus}$ désigne un anion organique ou anorganique, w est dans le cas d'anions $A^{\ominus}$ monovalents égal à v et dans le cas d'anions polyvalents $\leqq v$, $A^{\ominus}_w$ doit compenser la charge positive; lorsque v $\neq 1$, les restes R peuvent être identiques ou différents, le système de noyau de phtalocyanine peut renfermer également d'autres groupes solubilisant dans l'eau, par exemple des groupes anioniques comme les groupes sulfo, et tous les substituants sont liés aux noyaux phényliques du système de noyau de phtalocyanine, et plus particulièrement celle de formule

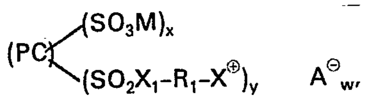

où PC, $X_1$, $X^{\oplus}$, $R_1$ et $A^{\ominus}$, ont la définition ci-dessus indiquée, M désigne hydrogène, un ion métallique alcalin, ammonium ou sel d'amine et la somme des nombres x et y est comprise entre 1 et 4 et $A^{\ominus}_{w}$, compense exactement la charge positive du reste de la molécule; de préférence celle de formule

$(PC){-}(SO_2NHR_1'-X'^{\oplus} \quad A'^{\ominus})_v$ ,

où PC a la signification ci-dessus indiquée, $R_1'$ désigne un alkylène ayant de 2 à 6 atomes de carbone, v désigne un nombre quelconque entre 1 et 4, $X'^{\oplus}$ désigne un groupe de formule

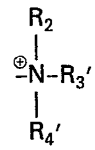 ,

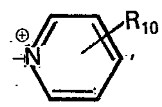 , 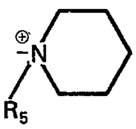 ou 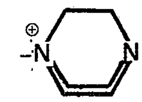

où $R_2$ et $R_3'$, indépendamment l'un de l'autre, désignent alkyle ayant de 1 à 4 atomes de carbone non substitué ou substitué par hydroxy, cyano, halogène ou phényle, $R_4'$ a la signification de $R_2$ et peut de plus désigner le groupe cyclohexyle ou amino, $R_5$ désigne alkyle ayant de 1 à 4 atomes de carbone et $R_{10}$ désigne alkyle ou alcoxy ayant de 1 à 4 atomes de carbone, halogène, carboxy, carbalcoxy ou hydroxy et $A'^{\ominus}$ désigne un ion halogénure, alkylsulfate ou arylsulfonate, les restes $-SO_2NHR_1'-X^{\oplus}A^{\ominus}$ peuvent être identiques ou différents.

14. Composés phtalocyanine de formule

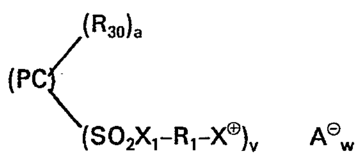

où PC, $X_1$, $R_1$, $X^{\oplus}$, $A^{\ominus}$, v et w sont comme dans la revendication 13 et $R_{30}$ désigne un substituant non-ionique, et plus particulièrement un atome de fluor, de chlore, de brome ou d'iode ou cyano et a désigne un nombre quelconque compris entre 0,1 et 4, les symboles $R_{30}$ présents dans la molécule peuvent être identiques ou différents; et plus particulièrement composés phtalocyanine de formule

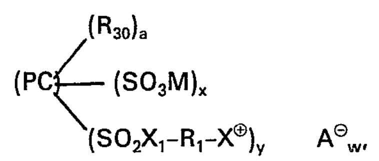

où PC, $X_1$, $R_1$, $X^{\oplus}$ et $A^{\ominus}$ sont comme définis dans la revendication 13, M désigne hydrogène, un ion métallique alcalin, ammonium ou sel d'amine et la somme des nombres x et y est comprise entre 1

et 4 et $A^{\ominus}_{w'}$ compense exactement la charge positive du reste de la molécule et $R_{30}$ désigne un substituant non-ionique et plus particulièrement un atome de fluor, de chlore, de brome ou d'iode ou cyano et a désigne un nombre quelconque entre 0,1 et 4, les symboles $R_{30}$ présents dans la molécule pouvant être identiques ou différents, de préférence une phtalocyanine de formule

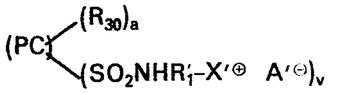

,

où PC a la signification ci-dessus indiquée, $R_1'$ désigne un alkylène ayant de 2 à 6 atomes de carbone, v désigne un nombre quelconque compris entre 1 et 4, $X'^{\oplus}$ désigne un groupe de formule

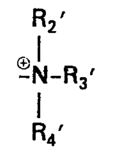

,

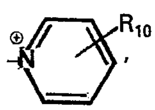

,

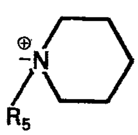

ou

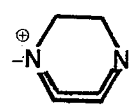

où $R'_2$ et $R'_3$, indépendamment l'un de l'autre, désignent un alkyle ayant de 1 à 4 atomes de carbone, non substitué ou substitué par hydroxy, cyano, halogène ou phényle, $R'_4$ a la signification de $R'_2$ et peut en outre désigner le groupe cyclohexyle ou amino, $R_5$ désigne alkyle ayant de 1 à 4 atomes de carbone et $R_{10}$ désigne alkyle ou alcoxy ayant de 1 à 4 atomes de carbone, halogène, carboxy, carbalcoxy ou hydroxy, et $A'^{\ominus}$ désigne un ion halogénure, alkylsulfate ou arylsulfonate, les restes $-SO_2'-X^{\oplus}A^{\ominus}$ peuvent être identiques ou différents et $R_{30}$ et a ont la signification ci-dessus indiquée, $R_{30}$ désigne de préférence chlore et a désigne de préférence un nombre compris entre 0,5 et 4.

**Revendications (l'Etat: AT)**

1. Agent de traitement pour textiles ayant une teneur en un agent de blanchiment photographique, caractérisé par le fait qu'il renferme comme agent de blanchiment photographique des phtalocyanines d'aluminium ou de zinc solubles dans l'eau substituées avec des groupes cationiques et des agents cationiques de traitement pour textiles; tels que par exemple les tensioactifs cationiques, les adoucissants, les produits antistatiques, les agents de blanchiment optiques et/ou les agents antimicrobiens.

2. Agent selon la revendication 1, caractérisé par le fait que les phtalocyanines d'aluminium ou de zinc qu'il contient renferment des groupes ammonium quaternaire et des groupes sulfonium ternaire et éventuellement également des groupes anioniques ou/et non-ioniques.

3. Agent selon la revendication 2, caractérisé par le fait qu'il renferme une phtalocyanine de formule

$$(PC)-(^{\oplus}R)_v \quad A_w^{\ominus}$$

où PC signifie le système de noyau de phtalocyanine de zinc ou d'aluminium non substitué, v désigne un nombre quelconque entre 1 et 4 et $^{\oplus}R$ désigne un groupe de formule

$-SO_2X_1-R_1-X^{\oplus}$ , $-O-R_1-X^{\oplus}$

$-(CH_2)_n-Y^{\oplus}$ ou $-CH_2NHCOCH_2-Y^{\oplus}$

où n désigne 0 ou 1, $R_1$ désigne un alkylène ayant de 1 à 8 atomes de carbone, non ramifié ou ramifié ou 1,3- ou 1,4-phénylène, $X_1$NH ou N-alkyle, $X^{\oplus}$ désigne un groupe de formule

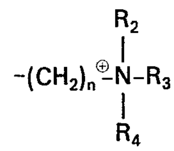

,

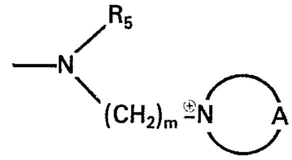

,

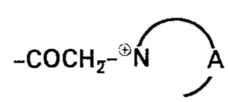

,

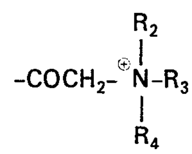

et, pour le cas où $R_1$ = alkylène, également un groupe de formule

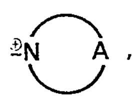

,

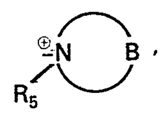

,

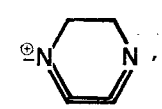

,

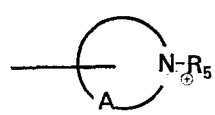

,

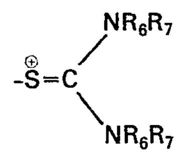

ou

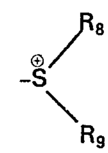

$Y^{\oplus}$ désigne un groupe de formule 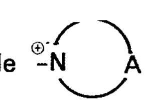 ,

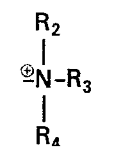

,

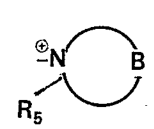

,

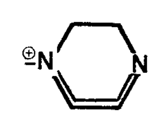

,

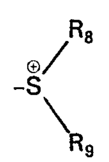

,

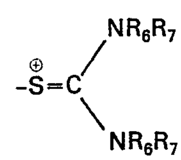

ou

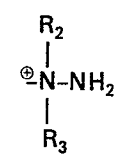

Dans les formules ci-dessus, n désigne 0 ou 1, $R_2$ et $R_3$, indépendamment l'un de l'autre, désignent un alkyle ayant de 1 à 6 atomes de carbone, éventuellement substitué, $R_4$ désigne un alkyle ayant de 1 à 6 atomes de carbone éventuellement substitué, cycloalkyle ayant de 3 à 7 atomes de carbone ou le groupe $N_6R_7$, $R_5$ désigne alkyle, $R_6$ et $R_7$, indépendamment l'un de l'autre, désignent hydrogène ou un alkyle éventuellement substitué, m désigne un nombre entier entre 1 et 6, A représente le complément pour un hétérocycle azoté aromatique ayant 5 à 7 chaînons, pouvant encore comporter éventuellement comme chaînons un ou deux atomes d'azote et pouvant éventuellement porter différents substituants, et B désigne le complément pour un hétérocycle azoté saturé ayant 5 à 7 chaînons pouvant comporter éventuellement comme chaînons un ou deux atomes d'azote, d'oxygène, et/ou de soufre et pouvant porter éventuellement différents autres substituants, et $A^\ominus$ désigne un anion anorganique ou organique, w est dans le cas d'anions $A^\ominus$ monovalents égal à v et dans le cas d'anions polyvalents $\leqq v$, $A^\ominus_w$ devant compenser la charge positive; $v \neq 1$, les restes $^\oplus R$ peuvent être identiques ou différents, et le système de noyau de phtalocyanine peut renfermer encore d'autres groupes solubilisant dans l'eau, par exemple anioniques, comme les groupes sulfo, et tous les substituants étant liés au noyau phénylique du système de noyau de phtalocyanine.

4. Agent selon la revendication 2, caractérisé par le fait qu'il renferme une phtalocyanine de formule

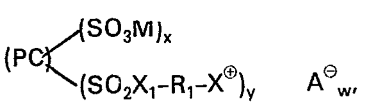

où PC, $X_1$, $X^\oplus$, $R_1$ et $A^\ominus$ sont comme définis dans la revendication 3, M désigne hydrogène, un ion métallique alcalin, un ion ammonium ou un ion de sel d'amine et la somme des nombres x et y est comprise entre 1 et 4, et $A^\ominus_{w'}$ compense exactement la charge positive du reste de la molécule, ou renferme une phtalocyanine de formule

$$(PC)\!\!-\!\!-(SO_2NHR_1'-X'^\oplus \quad A'^\ominus)_v$$

où PC est comme défini dans la revendication 3, $R_1'$ désigne alkylène ayant de 2 à 6 atomes de carbone, v désigne un nombre quelconque entre 1 et 4, $X'^\oplus$ désigne un groupe de formules

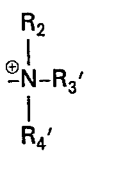 ,

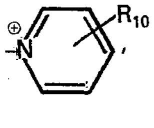 , 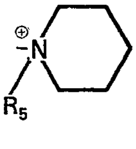 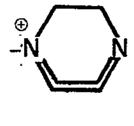

où $R_2$ et $R_3$, indépendamment l'un de l'autre, désignent un alkyle ayant de 1 à 4 atomes de carbone, non substitué ou substitué par hydroxy, cyano, halogène ou phényle, $R_4$ a la signification de $R_2$ et en outre peut désigner cyclohexyle ou le groupe amino, $R_5$ désigne un alkyle ayant de 1 à 4 atomes de carbone, et $R_{10}$ désigne alkyle ou alcoxy ayant de 1 à 4 atomes de carbone, halogène, carboxy, carbalcoxy ou hydroxy, et $A'^\ominus$ désigne un ion halogénure, alkylsulfate ou arylsulfonate, les restes $-SO_2NHR_1'-X^\oplus A^\ominus$ peuvent être égaux ou différents.

5. Agent selon la revendication 2, caractérisé par le fait qu'il renferme une phtalocyanine de formule

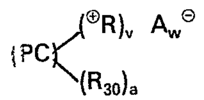

ou des mélanges de ces phtalocyanines, où PC, $^\oplus R$, v, $A^\ominus$ et w sont définis comme dans la revendication 3, $R_{30}$ désigne un substituant non-ionique, en particulier un atome de fluor, de chlore, de brome ou de iode, ou cyano et a désigne un nombre quelconque entre 0,1 et 4, les sommes de $R_{30}$ présentes dans la molécule pouvant être égales ou différentes, en particulier une phtalocyanine de formule

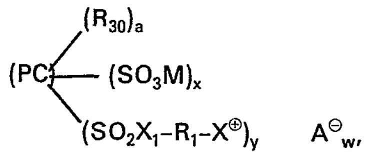

ou des mélanges de ces phtalocyanines où PC, $X_1$, $X^\oplus$, $R_1$, $A^\ominus$ x, y et w' sont comme dans la revendications 4 et $R_{30}$ et a sont comme définis ci-dessus, $R_{30}$ désigne de préférence chlore et a désigne de préférence un nombre compris entre 0,5 et 4, de préférence une phtalocyanine de formule

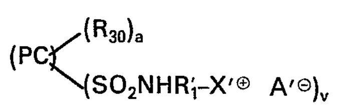

ou des mélanges de ces phtalocyanines, où PC, $R_1'$, $X'^\oplus$, $A'^\ominus$ et v sont comme définis dans la revendication 4 et $R_{30}$ a la définition ci-desus indiquée.

6. Agent selon la revendication 1, caractérisé par le fait qu'il renferme de 0,0005 à 1,5% en poids d'agent de blanchiment photographique du poids total de l'agent.

7. Agent selon la revendication 1, caractérisé par le fait qu'il renferme comme agent catonique de traitement pour textiles, un imide hétérocyclique catonique ou un composé ammonium quaternaire aliphatique.

8. Agent selon la revendication 7, caractérisé par le fait qu'il renferme comme agent catonique de traitement pour textiles, un sel d'ammonium quaternaire de formule

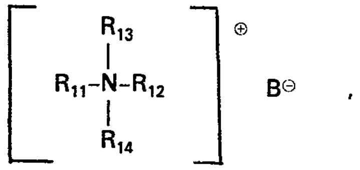

où $R_{11}$ désigne hydrogène ou un groupe aliphatique ayant de 1 à 22 atomes de carbone, $R_{12}$ désigne un groupe aliphatique ayant de 10 à 22 atomes de carbone, $R_{12}$ et $R_{14}$, indépendamment l'un de l'autre, désignent un alkyle ayant de 1 à 4 atomes de carbone et B désigne un anion, ou/et un sel d'imidazolinium quaternaire de formule

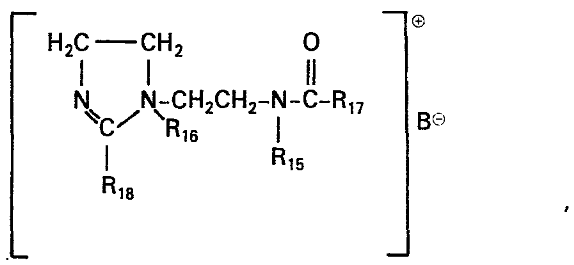

où $R_{15}$ désigne hydrogène ou un alkyle ayant de 1 à 4 atomes de carbone, $R_{16}$ désigne un alkyle ayant de 1 à 4 atomes de carbone, $R_{17}$ désigne un alkyle ayant de 1 à 22 atomes de carbone, $R_{18}$ désigne hydrogène ou un alkyle ayant de 1 à 22, de préférence de 15 à 22 atomes de carbone et $B^{\ominus}$ désigne un anion, et/ou un tensio-actif de formule

$R_{20}{}^{\oplus}N(R_{21})_3B^{\ominus}$ ,

où $R_{20}$ désigne un alkyle ou alcényle à chaîne droite ou ramifiée ayant de 8 à 22 atomes de carbone, les symboles $R_{21}$ peuvent être identiques ou différents et désignent un alkyle ou hydroxyalkyle ayant de 1 à 4 atomes de carbone ou benzyle, cependant un seul $R_{21}$ dans la molécule peut désigner benzyle, et $B^{\ominus}$ désigne un anion, de formule

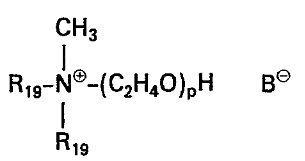

et/ou de formule

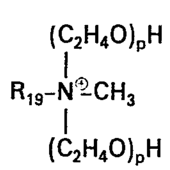

où $R_{19}$ désigne un alkyle ayant de 10 à 20 atomes de carbone, p désigne un nombre entre 1 et 20 et $B^{\ominus}$ désigne un anion.

9. Agent selon la revendication 1, caractérisé par le fait qu'il renferme les agents cationiques de traitement pour textiles en une quantité de 1 à 50% du poids total de l'agent.

10. Agent selon la revendication 1, caractérisé par le fait qu'il renferme en outre un ou plusieurs tensio actifs non-ioniques, ou/et des constituants usuels pour détersifs comme par exemple des agents de blanchiment au peroxyde, des agents de blanchiment optique, eau et/ou des solvants organiques miscibles avec l'eau ou/et un adoucissant de groupe de composés ammonium quaternaires zwitter-ioniques, des phosphinoxydes tertiaires non-ionique, des aminoxydes tertiaires non-ioniques, des alcools éthoxyles non-ioniques, des tensio-actifs alkylsulfates anioniques, synthétiques en $C_8$-$C_{20}$ et des tensio-actifs synthétiques amphotères.

11. Agent selon l'une des revendications 1 à 10, caractérisé par le fait qu'elle a un pH alcalin et en particulier un pH compris entre 7 et 10.

12. Procédé de lavage, rinçage et blanchiment de textiles, caractérisé par le fait qu'on traite ces derniers dans un bain aqueux renfermant un agent défini dans les revendication 1 à 11 et ayant de préférence un pH alcalin, avantageusement compris entre 7 et 12, plus particulièrement entre 8 et 10, les textiles étant irradiés dans le bain ou ensuite à l'état humide avec de la lumière visible et/ou infrarouge.

13. Utilisation des composés phtalocyanine de formule:

$(PC)\!\!-\!\!\!-(SO_2X_1\text{-}R_1\text{-}X^{\oplus})_v \quad A^{\ominus}{}_w$ ,

où PC désigne le système de noyau de phtalocyanine de zinc ou d'aluminium non substitué, v désigne un nombre quelconque entre 1 et 4, $R_1$ désigne un alkylène non ramifié ou ramifié ayant de 1 à 8 atomes de carbone ou un 1,3- ou 1,4-phénylène, $X_1$ NH ou N-alkyle, $X^{\oplus}$ désigne un groupe de formule

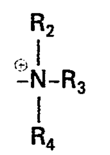 , 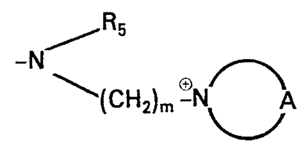 ,

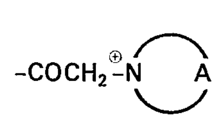 , 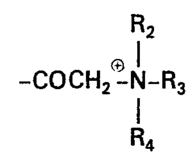

et, lorsque $R_1$ = alkylène, également un groupe de formule

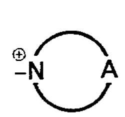 , 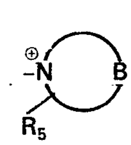 , 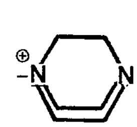 ,

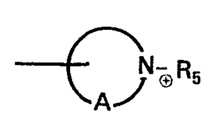 , 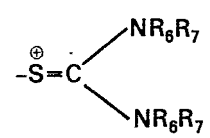

ou 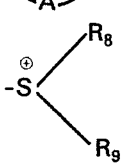 ,

où dans les formules ci-dessus, $R_2$ et $R_3$, indépendamment l'un de l'autre, désignent un alkyle de 1 à 6 atomes de carbone, éventuellement substitué, $R_4$ désigne un alkyle ayant de 1 à 6 atomes de carbone éventuellement substitué, cycloalkyle ayant de 3 à 7 atomes de carbone ou le groupe $NR_6R_7$, $R_5$ désigne alkyle, $R_6$ et $R_7$, indépendamment l'un de l'autre désignent hydrogène ou un alkyle éventuellement substitué, $R_8$ et $R_9$, indépendamment l'un de l'autre, désignent un reste alkyle ou aralkyle éventuellement substitué, m désigne un nombre entier compris entre 1 et 6, A représente le complément pour un hétérocycle aromatique azoté ayant de 5 à 7 chaînons, pouvant éventuellement renfermer comme chaînons un ou deux atomes d'azote supplémentaires et qui peut éventuellement porter différents substituants, et B représente le complément pour un hétérocycle azoté saturé de 5 à 7 chaînons pouvant éventuellement renfermer comme chaînons, 1 à 2 atomes d'azote, d'oxygène et/ou de soufre et pouvant porter éventuellement diverses autres substituants, $A^{\ominus}$ désigne un anion organique ou anorganique, w est dans le cas d'anions $A^{\ominus}$ monovalents égal à v et dans le cas d'anions polyvalents $\leq$ v, $A^{\ominus}_{w}$ doit compenser la charge positive; lorsque v$\neq$ 1, les restes R peuvent être identiques ou différents, le système de noyau de phtalocyanine peut renfermer également d'autres groupes solubilisant dans l'eau, par exemple des groupes anioniques comme les groupes sulfo, et tous les substituants sont liés aux noyaux phényliques du système de noyau de phtalocyanine, et plus particulièrement celle de formule

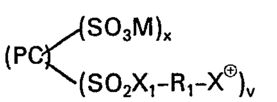 $A^{\ominus}_{w}$,

où PC, $X_1$, $X^{\oplus}$, $R_1$ et $A^{\ominus}$, ont la définition ci-dessus indiquée, M désigne hydrogène, un ion métallique alcalin, ammonium ou sel d'amine et la somme des nombres x et y est comprise entre 1 et 4 et $A^{\ominus}_{w}$, compense exactement la charge positive du reste de la molécule; de préférence celle de formule

$(PC)\!-\!\!-(SO_2NHR_1'\text{-}X'^{\oplus} \quad A'^{\ominus})_v$

o*u PC a la signification ci-dessus indiquée, $R_1'$ désigne un alkylène ayant de 2 à 6 atomes de carbone, v désigne un nombre quelconque entre 1 et 4, $X'^{\oplus}$ désigne un groupe de formule

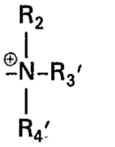 ,

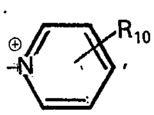 , 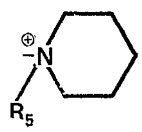 ou 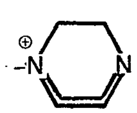

où $R_2$ et $R_3'$, indépendamment l'un de l'autre, désignent alkyle ayant de 1 à 4 atomes de carbone non substitué ou substitué par hydroxy, cyano, halogène ou phényle, $R_4'$ a la signification de $R_2$ et peut de plus désigner le groupe cyclohexyle ou amino, $R_5$ désigne alkyle ayant de 1 à 4 atomes de carbone et $R_{10}$ désigne alkyle ou alcoxy ayant de 1 à 4 atomes de carbone, halogène, carboxy, carbalcoxy ou hydroxy et $A'^{\ominus}$ désigne un ion halogénure, alkylsulfate ou arylsulfonate, les restes $-SO_2NHR_1'\text{-}X^{\oplus}A^{\ominus}$ peuvent être identiques ou différents; comme agents de blanchiment photographique pour textiles.

14. Utilisation des composés phtalocyanine de formule

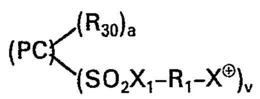 $A^{\ominus}_{w}$

où PC, $X_1$, $R_1$, $X^{\oplus}$, $A^{\ominus}$, v et w sont comme dans la revendication 13 et $R_{30}$ désigne un substituant non-ionique, et plus particulièrement un atome du fluor, de chlore, de brome ou d'iode ou cyano et a désigne un nombre quelconque compris entre 0,1 et 4, les symboles $R_{30}$ présents dans la molécule peuvent être identiques ou différents; et plus particulièrement composés phtalocyanine de formule

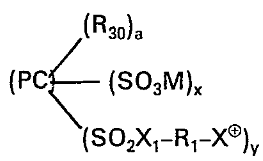 $A^{\ominus}_{w}$,

où PC, $X_1$, $R_1$, $X^{\oplus}$ et $A^{\ominus}$ sont comme définis dans la revendication 13, M désigne hydrogène, un ion métallique alcalin, ammonium ou sel d'amine et la somme des nombres x et y est comprise entre 1 et 4 et $A^{\ominus}_{w}$, compense exactement la charge positive du reste de la molécule et $R_{30}$ désigne un substituant non-ionique et plus particulièrement un atome de fluor, de chlore, de brome ou d'iode ou cyano et a désigne un nombre quelconque entre 0,1 et 4, les symboles $R_{30}$ présents dans la molécule pouvant être identiques ou différents, de préférence une phtalocyanine de formule

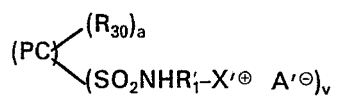

où PC a la signification ci-dessus indiquée, $R_1'$ désigne un alkylène ayant de 2 à 6 atomes de carbone, v désigne un nombre quelconque compris entre 1 et 4, $X'^{\oplus}$ désigne un groupe de formule

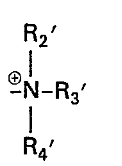 ,

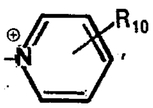 , 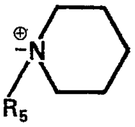 ou 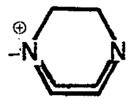

où $R'_2$ et $R'_3$, indépendamment l'un de l'autre désignent un alkyle ayant de 1 à 4 atomes de carbone, non substitué ou substitué par hydroxy, cyano, halogène ou phényle, $R'_4$ a la signification de $R'_2$ et peut en outre désigner le groupe cyclohexyle ou amino, $R_5$ désigne alkyle ayant de 1 à 4 atomes de carbone et $R_{10}$ désigne alkyle ou alcoxy ayant de 1 à 4 atomes de carbone, halogène, carboxy, carbalcoxy ou hydroxy, et $A'^{\ominus}$ désigne un ion halogénure, alkylsulfate ou arylsulfonate, les rates $-SO_2NHR_1'-X^{\oplus}A^{\ominus}$ peuvent être identiques ou différents et $R_{30}$ et a ont la signification ci-dessus indiquée, $R_{30}$ désigne de préférence chlore et a désigne de préférence un nombre compris entre 0,5 et 4; comme agents de blanchiment photographique pour textiles.